Europäisches Patentamt

European Patent Office

Office européen des brevets

(19)

(11) EP 1 398 950 A2

(12) EUROPEAN PATENT APPLICATION

(43) Date of publication:
17.03.2004  Bulletin 2004/12

(51) Int Cl.7: H04N 1/40

(21) Application number: 03255320.8

(22) Date of filing: 27.08.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 30.08.2002 JP 2002256081

(71) Applicant: KONICA CORPORATION
Tokyo (JP)

(72) Inventors:
• Mizukami, Hiromichi
  Hino-shi Tokyo 191-8511 (JP)

• Takano, Hiroaki
  Hino-shi Tokyo 191-8511 (JP)
• Ito, Tsukasa
  Hino-shi Tokyo 191-8511 (JP)
• Ikeda, Chizuko
  Hino-shi Tokyo 191-8511 (JP)
• Nakatsuru, Yumiko
  Hino-shi Tokyo 191-8511 (JP)

(74) Representative: Nicholls, Michael John
J.A. KEMP & CO.
14, South Square
Gray's Inn
London WC1R 5JJ (GB)

(54) Image forming method, image processing apparatus, and image recording apparatus for forming an optimum viewing image from a captured image

(57)    An image forming method having a step of: applying an image processing for forming an optimum viewing image on an output medium to captured-image data outputted from an image-capturing device; wherein the step of the image processing includes: a scene-referred image data generation process for generating scene-referred image data on the basis of the captured-image data; and a viewing image referred image data generation process for generating viewing image referred image data on the basis of the generated scene-referred image data; wherein, the image processing includes a smoothing processing and a sharpening processing.

FIG. 16

EP 1 398 950 A2

## Description

## BACKGROUND OF THE INVENTION

This invention relates to an image forming method for applying optimization processing for making the quality of a viewing image formed on an output medium to digital image data which have been obtained by an image-capturing device such as a digital camera, an image processing apparatus, and an image recording apparatus.

## CONVENTIONAL TECHNOLOGY

Nowadays, digital image data obtained by photographing by means of an image-capturing device are distributed through a storage device such as a CD-R (Compact Disk Recordable), a floppy (registered trade mark) disk, or a memory card, or the Internet, and the way of displaying/printing are diversified; for example, they are displayed on a display monitor such as a CRT (Cathode Ray Tube), a liquid crystal display, and a plasma display and a display device of a small-sized liquid crystal monitor of a cellular phone, or they are printed as a hard copy by an output device such as a digital printer, an ink jet printer, and a thermal printer.

Further, it has generally been put into practice that, when digital image data are displayed and/or printed for the purpose of appreciation, various kinds of image processing represented by gradation adjustment, luminance adjustment, color balance adjustment, and sharpness enhancement are applied in order that a desired image quality may be obtained on a display monitor or a hard copy to be used for appreciation.

To cope with the above-mentioned diversified displaying/printing methods, it has been made an effort to enhance the versatility of digital image data obtained through photographing by means of an image pickup device. For an example of it, there is an attempt to standardize a color space expressed by digital RGB (Red, Green, and Blue) signals into a color space independent of image-capturing device characteristic, and at present, most digital image data adopt "sRGB" as a standardized color space (refer to "Multimedia Systems and Equipment, Color Measurement and Management, Part 2-1: Color Management, Default RGB Color Space-sRGB" IEC 61966-2-1). The color space of this sRGB is defined in correspondence to the color reproduction domain of a standard CRT display monitor.

Generally speaking, digital cameras are equipped with an image sensor (a CCD-type image sensor, hereinafter referred to as a CCD simply) having a charge transferring function by a CCD (Charge Coupled Device) and a photoelectric conversion function provided with a color sensitivity by the use of a combination of color filters having a pane pattern. Digital image data to be outputted by a digital camera are image data such that original electrical signals obtained through photoelectric conversion by means of this CCD are subjected to correction processings for the photoelectric conversion function of the image sensor, file transformation/compression processing into a data format of a specified type which is standardized so as to be able to be read and displayed by the use of an image edition software, etc.

As regards the correction for the photoelectric conversion function of an image sensor, for example, gradation correction, cross talk correction of spectral sensitivity, dark current noise suppression, sharpening, white balance adjustment, chroma adjustment, etc. can be cited. Further, as regards the standardized data format of a specified type, for example, "Baseline Tiff Rev. 6. ORGB Full Color Image" adopted as a non-compressed file of an Exif (Exchangeable image file format) file and a compressed data file format based on a JPEG (Joint Photographic Experts Group) format are known.

An Exif file is one based on sRGB. The correction for the photoelectric conversion function of an image sensor is designed in a way to make the image quality become optimum on a display monitor based on sRGB.

For example, a digital camera of any type, so long as it has a function to write tag information indicating that colors are displayed in a standard color space of a display monitor based on sRGB signals (hereinafter referred to as a monitor profile) as an Exif format, and supplementary information indicating model-dependent data such as the number of pixels, the pixel arrangement, and the number of bits per pixel as meta-data in the file header of digital image data and adopts such a data format, can analyze tag information by an image edition software for displaying digital image data on a display monitor (for example, Photoshop made by Adobe Corp.) to urge an operator to change the monitor profile into sRGB or automatically apply a changing processing; therefore, it has become possible that the difference in the device characteristics between different display devices is reduced, and digital image data obtained by a digital camera photographing are appreciated in a desirable state on a display monitor.

Further, for the supplementary information, in addition to the model-dependent information, it is used a tag (code) indicating, for example, information directly relating to the kind of a camera (model) such as the name of a camera, or the code number, information determining the photographing conditions such as the exposure time, shutter speed, aperture value (f-number), ISO sensitivity, luminance value, object distance range, light source, strobe light emitted or not, object area, white balance, zoom magnification, object structure, photographed scene type, reflection light quantity of the strobe light, and photographing chroma, information relating to the kind of the photographic object, etc. An image edition software and an output device are equipped with a function to read the above-mentioned supplementary information to make the image quality of a hard copy more desirable.

PROBLEM TO BE SOLVED BY THE INVENTION

Incidentally, an image displayed on a display device such as a CRT display monitor, or a hard copy image printed by an arbitrary one of various kinds of print device has different color reproduction domain depending on the composition of the fluorescent substance or the coloring material used. For example, the color reproduction domain of a CRT display monitor corresponding to the sRGB standard color space has a broad light green and blue domain, and there is a portion not to be reproduced by a hard copy of a silver halide print or an ink jet print in said color reproduction domain. On the contrary, in the cyan domain of an ink jet print or in the yellow domain of a silver halide print, there is a portion not to be reproduced by a CRT display monitor corresponding to the sRGB standard color space (refer to, for example, "Fine Imaging and Digital photography (in Japanese)" p. 444, edited by the publishing committee of The Society of Photographic Science and Technology of Japan, published by Corona Co., Ltd.). On the other hand, there is a possibility that there exists, among photographic object scenes to become an object of photographing, one that exhibits a color belonging to a domain not to be reproduced in any one of these color reproduction domains.

As described in the above, because the color gamut to be able to be recorded has a limit with respect to a color space (including sRGB) which is optimized on the premise that an image is printed or displayed by means of a specified device, in recording information obtained by an image-capturing device, an adjustment by mapping to compress the color gamut to a color gamut which is able to be recorded becomes necessary. As regards the method of mapping, clipping is the simplest method, in which a point of chromaticity outside the color gamut any point belonging to which is able to be recorded is mapped to the nearest point on the border of the color gamut; however, this method makes the gradation outside the color gamut flat, and produces an image giving an impression of disorder to an observer appreciating the image. For this reason, it is generally adopted at present a non-linear compression method in which points of chromaticity of a domain having a chroma higher than a suitable threshold value are smoothly compressed in accordance with the magnitude of the chroma. As the result of this, points of chromaticity also inside the color gamut any point belonging to which is able to be recorded come to be recorded with their chroma compressed. (The details of the mapping method of a color gamut are described in, for example, "Fine Imaging and Digital Photography (in Japanese)" p. 447, edited by the publishing committee of The Society of Photographic Science and Technology of Japan, published by Corona Co., Ltd.)

However, in the case where a compression operation of color gamut and luminance range as described in the above is carried out, owing to the principle of digital images which are recorded by the use of discrete numerical values, gradation information before compression and information before clipping are lost at that point of time, and the original state cannot be restored. This makes a great restriction for the versatility of high-quality digital image data.

For example, in the case where an image recorded in the standard color space sRGB is printed by a print device, it becomes necessary to make mapping again on the basis of the difference between the standard color space of sRGB and the color reproduction domain of the print device. However, because an image recorded in the standard color space sRGB has lost the gradation information of the domain which was once compressed at the time of recording, its smoothness of gradation becomes worse compared to the case where the information obtained by the image-capturing device is directly mapped to the color reproduction domain of the print device. Further, in the case where, due to an inappropriate gradation compression condition at the time of recording, there are problems such that the picture is whitish, the face is dark, and the fill-in of shadows and the whitening of the highlight areas are remarkable, even though the improvement of the image quality is attempted through the change of the setting of gradation, because the gradation information before compression and the information concerning the flattened portion and the whitened portion have already been lost, only a remarkably insufficient improvement can be made as compared to the case where an image is newly formed from the information obtained by the image-capturing device.

The problems which have been described up to now are resulted from it that the information of a broad color gamut and luminance range obtained by an image-capturing device is recorded with the data compressed to the viewing image referred image data in the state of being optimized with the viewing image supposed. In contrast with this, if an image is recorded from the scene-referred image data whose information on the broad color gamut and luminance range obtained by the image-capturing device is not compressed, the improvident loss of information can be prevented. For the standard color space suitable for recording such scene-referred image data, for example, "RIMM RGB" (Reference Input Medium Metric RGB) and "ERIMM RGB" (Extended Reference Input Medium Metric RGB) are proposed (refer to Journal of Imaging Science and Technology, Vol. 45, pp. 418 to 426, 2001).

However, data that are expressed in such a standard color space are not suitable for displaying directly on a display monitor for appreciation. Digital cameras are generally equipped built-in or connected with a display monitor for the purpose of confirming the angle of view before photographing or the photographed content after photographing. In the case where the photographed image data are recorded as viewing image referred image data like sRGB, there is a merit that the image data can be directly displayed on a display monitor without transformation, but in the case where the photographed image data are recorded as scene-referred image data, a processing to transform the data again into the viewing image referred image data for displaying the data becomes essential. Further, it is well known that a silver halide photographic photosensitive material, a solid state image sensor such as a CCD (Charge Coupled Device), or an image pickup tube such as a photomultiplier is used for photographing; any image photographed by these means includes a certain amount of noises, which become a cause to lower the image quality. For that reason, when data are transformed again from scene-referred image data to viewing image referred image data, it is necessary to practice image quality improving processings such as a smoothing processing and a sharpening processing at the same time. Such double processings as transformation processing and image quality improving processing described in the above increase the load of processing and electrical power consumption, which makes a cause of the lowering of continuous photographing ability and the limitation of the number of photographing frames in the case of battery photographing.

Any one of the image quality improving processings such as a smoothing processing and a sharpening processing has also a bad effect.

In the following, the bad effect accompanied by a smoothing processing and that accompanied by a sharpening processing will be explained.

Concerning the smoothing processing, a median filter, a compression processing through removing data in the frequency band having larger amount of noises, etc. are known; however, they have the undesirable defect that, if noises are excessively suppressed, an artifact, which visually gives an observer an unnatural impression of disorder, is produced, or the fine structures of the image representing the photographic object information which are essentially not to be suppressed are suppressed together with the noises.

Further, in the case where the information volume of the digital image data to become the object of processing (for example, the number of gray scales, the number of pixels, etc.) is small, the cause of noise generation has not been specified, or the means for the smoothing processing is not suitable, the suppression of artifact becomes more difficult.

On the other hand, for the sharpening processing, an unsharp mask, an amplification processing by enhancing data in frequency bands having a large amount of edge components, etc. are known; however, if sharpness is enhanced, conversely, a problem that the noise component contained in the image is also enhanced to deteriorate the image quality is produced.

As explained in the above, because each of a smoothing processing and a sharpening processing has a bad effect based on each processing, an optimum combination of them should be determined on the basis of the size of hard copies produced by the output device, the distance of observation, etc. with the amount of application of the smoothing processing and sharpening processing (the degree of application) taken into consideration. However, the preparation of a processing condition table and the time required for the reference to the processing condition table are necessary, and estimation of the production amount of artifacts is difficult; therefore, there has been a problem that it is difficult to take a suitable countermeasure for suppressing these.

It is an object of this invention to provide an image forming method wherein, when an optimization processing for transforming the data into the color reproduction space of a display monitor or an output device is applied to image data obtained by an image-capturing device, the amount of production of artifacts is small and an efficient image quality improving processing can be carried out, and an image processing apparatus and an image recording apparatus using the method.

## SUMMARY OF THE INVENTION

The above-mentioned object of this invention can be solved by any one of the following structures to be described below.

(1) An image forming method in which image processing for forming an optimum viewing image on an output medium is applied to captured-image data outputted from an image-capturing device,

said image processing comprising a scene-referred image data generation process for generating scene-referred image data on the basis of said captured-image data and a viewing image referred image data generation process for generating viewing image referred image data on the basis of said generated scene-referred image data,

said image forming method being characterized by it that a smoothing processing is practiced in said scene-referred image data generation process and a sharpening processing is practiced in said viewing image referred image data generation process.

(2) An image forming method in which image processing for forming an optimum viewing image on an output medium is applied to captured-image data outputted from an image-capturing device,

said image processing comprising a scene-referred image data generation process for generating scene-referred image data on the basis of said captured-image data and a viewing image referred image data generation process for generating viewing image referred image data on the basis of said generated scene-referred image data,

said image forming method being characterized by it that a smoothing processing is practiced in said scene-referred image data generation process and a sharpening processing is practiced after viewing image referred image data have been generated in said viewing image referred image data generation process.

(3) An image forming method in which image processing for forming an optimum viewing image on an output medium is applied to captured-image data outputted from an image-capturing device,

said image processing comprising a scene-referred image data generation process for generating scene-referred image data on the basis of said captured-image data and a viewing image referred image data generation process for generating viewing image referred image data on the basis of said generated scene-referred image data,

said image forming method being characterized by it that a smoothing processing is practiced at first and a sharpening processing is practiced next in said scene-referred image data generation process.

(4) An image forming method in which image processing for forming an optimum viewing image on an output medium is applied to captured-image data outputted from an image-capturing device,

said image processing comprising a scene-referred image data generation process for generating scene-referred image data on the basis of said captured-image data and a viewing image referred image data generation process for generating viewing image referred image data on the basis of said generated scene-referred image data,

said image forming method being characterized by it that a smoothing processing is applied to scene-referred image data generated in said scene-referred image data generation process and a sharpening processing is practiced in said viewing image referred image data generation process.

(5) An image forming method in which image processing for forming an optimum viewing image on an output medium is applied to captured-image data outputted from an image-capturing device,

said image processing comprising a scene-referred image data generation process for generating scene-referred image data on the basis of said captured-image data and a viewing image referred image data generation process for generating viewing image referred image data on the basis of said generated scene-referred image data,

said image forming method being characterized by it that a smoothing processing is applied to scene-referred image data generated in said scene-referred image data generation process and a sharpening processing is applied to viewing image referred image data generated in said viewing image referred image data generation process.

(6) An image processing apparatus which applies image processing for forming an optimum viewing image on an output medium to captured-image data outputted from an image-capturing device comprising

a scene-referred image data generation means for generating scene-referred image data on the basis of said captured-image data, and

a viewing image referred image data generation means for applying an image processing for optimizing said scene-referred image data to generate viewing image referred image data, characterized by

said scene-referred image data generation means comprising a smoothing processing means for applying a smoothing processing to said captured-image data, and

said viewing image referred image data generation means comprising a sharpening processing means for applying a sharpening processing to said scene-referred image data.

(7) An image processing apparatus which applies image processing for forming an optimum viewing image on an output medium to captured-image data outputted from an image-capturing device comprising

a scene-referred image data generation means for generating scene-referred image data on the basis of said captured-image data, and

a viewing image referred image data generation means for applying an image processing for optimizing said scene-referred image data to generate viewing image referred image data, characterized by

said scene-referred image data generation means comprising a smoothing processing means for applying a smoothing processing to said captured-image data, and

said viewing image referred image data generation means comprising a sharpening processing means for applying a sharpening processing to said generated viewing image referred image data.

(8) An image processing apparatus which applies image processing for forming an optimum viewing image on an output medium to captured-image data outputted from an image-capturing device comprising

a scene-referred image data generation means for generating scene-referred image data on the basis of said captured-image data, and

a viewing image referred image data generation means for applying an image processing for optimizing said scene-referred image data to generate viewing image referred image data, characterized by

said viewing image referred image data generation means comprising a smoothing processing means for practicing a smoothing processing and a sharpening processing means for practicing a sharpening processing in the generation process of viewing image referred image data by said viewing image referred image data generation means.

(9) An image processing apparatus which applies image processing for forming an optimum viewing image on an output medium to captured-image data outputted from an image-capturing device comprising

a scene-referred image data generation means for generating scene-referred image data on the basis of said captured-image data, and

a viewing image referred image data generation means for applying an image processing for optimizing said scene-referred image data to generate viewing image referred image data, characterized by

said scene-referred image data generation means comprising a smoothing processing means for applying a smoothing processing to said generated scene-referred image data, and

said viewing image referred image data generation means comprising a sharpening processing means for applying a sharpening processing to said scene-referred image data having been subjected to said smoothing processing.

(10) An image processing apparatus which applies image processing for forming an optimum viewing image on an output medium to captured-image data outputted from an image-capturing device comprising

a scene-referred image data generation means for generating scene-referred image data on the basis of said captured-image data, and

a viewing image referred image data generation means for applying an image processing for optimizing said scene-referred image data to generate viewing image referred image data, characterized by

said scene-referred image data generation means comprising a smoothing processing means for applying a smoothing processing to said generated scene-referred image data, and

said viewing image referred image data generation means comprising a sharpening processing means for applying a sharpening processing to said generated viewing image referred image data.

(11) An image recording apparatus which applies image processing for forming an optimum viewing image on an output medium to captured-image data outputted from an image-capturing device and outputs them comprising

a scene-referred image data generation means for generating scene-referred image data on the basis of said captured-image data, and

a viewing image referred image data generation means for applying an image processing for optimizing said scene-referred image data to generate viewing image referred image data, characterized by

said scene-referred image data generation means comprising a smoothing processing means for applying a smoothing processing to said captured-image data, and

said viewing image referred image data generation means comprising a sharpening processing means for applying a sharpening processing to said scene-referred image data.

(12) An image recording apparatus which applies image processing for forming an optimum viewing image on an output medium to captured-image data outputted from an image-capturing device and outputs them comprising

a scene-referred image data generation means for generating scene-referred image data on the basis of said captured-image data, and

a viewing image referred image data generation means for applying an image processing for optimizing said scene-referred image data to generate viewing image referred image data, characterized by

said scene-referred image data generation means comprising a smoothing processing means for applying a smoothing processing to said captured-image data, and

said viewing image referred image data generation means comprising a sharpening processing means for applying a sharpening processing to said generated viewing image referred image data.

(13) An image recording apparatus which applies image processing for forming an optimum viewing image on an output medium to captured-image data outputted from an image-capturing device and outputs them comprising

a scene-referred image data generation means for generating scene-referred image data on the basis of said captured-image data, and

a viewing image referred image data generation means for applying an image processing for optimizing said scene-referred image data to generate viewing image referred image data, characterized by

said viewing image referred image data generation means comprising a smoothing processing means for practicing a smoothing processing and a sharpening processing means for practicing a sharpening processing in the generation process of viewing image referred image data by said viewing image referred image data generation means.

(14) An image recording apparatus which applies image processing for forming an optimum viewing image on an output medium to captured-image data outputted from an image-capturing device and outputs them comprising

a scene-referred image data generation means for generating scene-referred image data on the basis of said captured-image data, and

a viewing image referred image data generation means for applying an image processing for optimizing said scene-referred image data to generate viewing image referred image data, characterized by

said scene-referred image data generation means comprising a smoothing processing means for applying a smoothing processing to said generated scene-referred image data, and

said viewing image referred image data generation means comprising a sharpening processing means for applying a sharpening processing to said scene-referred image data having been subjected to said smoothing processing.

(15) An image recording apparatus which applies image processing for forming an optimum viewing image on an output medium to captured-image data outputted from an image-capturing device and outputs them comprising

a scene-referred image data generation means for generating scene-referred image data on the basis of said captured-image data, and

a viewing image referred image data generation means for applying an image processing for optimizing said scene-referred image data to generate viewing image referred image data, characterized by

said scene-referred image data generation means comprising a smoothing processing means for applying a smoothing processing to said generated scene-referred image data, and

said viewing image referred image data generation means comprising a sharpening processing means for applying a sharpening processing to said generated viewing image referred image data.

(16) An image forming method as set forth in any one of the structures (1) to (5), characterized by

said smoothing processing being carried out by means of a filter to change mask sizes, mask shapes, and threshold values, on the basis of the noise characteristic of image data.

(17) An image processing apparatus as set forth in any one of the structures (6) to (10), characterized by

said smoothing processing being carried out by means of a filter to change mask sizes, mask shapes, and threshold values, on the basis of the noise characteristic of image data.

(18) An image recording apparatus as set forth in any one of the structures (11) to (15), characterized by

said smoothing processing being carried out by means of a filter to change mask sizes, mask shapes, and threshold values, on the basis of the noise characteristic of image data.

(19) An image forming method as set forth in any one of the structures (1) to (5), and (16) characterized by

the amount of application of said sharpening processing being adjusted in accordance with the kind of said output medium.

(20) An image processing apparatus as set forth in any one of the structures (6) to (10), and (17) characterized by

the amount of application of said sharpening processing being adjusted in accordance with the kind of said output medium.

(21) An image recording apparatus as set forth in any one of the structures (11) to (15), and (18) characterized by

the amount of application of said sharpening processing being adjusted in accordance with the kind of said output medium.

(22) An image forming method as set forth in any one of the structures (1) to (5), (16), and (19) characterized by

the amount of application of said sharpening processing being adjusted in accordance with the size of said output medium.

(23) An image processing apparatus as set forth in any one of the structures (6) to (10), (17), and (20) characterized by

the amount of application of said sharpening processing being adjusted in accordance with the size of said output medium.

(24) An image recording apparatus as set forth in any one of the structures (11) to (15), (18), and (21) characterized by

the amount of application of said sharpening processing being adjusted in accordance with the size of said output medium.

(25) An image forming method as set forth in any one of the structures (1) to (5), (16), (19), and (22) characterized by

the amount of application of said sharpening processing being adjusted in accordance with the size of the main photographic object.

(26) An image processing apparatus as set forth in any one of the structures (6) to (10), (17), (20), and (23) characterized by

the amount of application of said sharpening processing being adjusted in accordance with the size of the main photographic object.

(27) An image recording apparatus as set forth in any one of the structures (11) to (15), (18), (21), and (24) characterized by

the amount of application of said sharpening processing being adjusted in accordance with the size of the main photographic object.

(28) An image forming method as set forth in any one of the structures (1) to (5), (16), (19), (22), and (25) characterized by

the amount of application of said sharpening processing being adjusted in accordance with the photographed scene.

(29) An image processing apparatus as set forth in any one of the structures (6) to (10), (17), (20), (23), and (26) characterized by

the amount of application of said sharpening processing being adjusted in accordance with the photographed scene.

(30) An image recording apparatus as set forth in any one of the structures (11) to (15), (18), (21), (24), and (27) characterized by

the amount of application of said sharpening processing being adjusted in accordance with the photographed scene.

(31) An image forming method as set forth in any one of the structures (1) to (5), (16), (19), (22), (25), and (28) characterized by

the captured-image data outputted from said image-capturing device being scene-referred image data.

(32) An image processing apparatus as set forth in any one of the structures (6) to (10), (17), (20), (23), (26), and (29) characterized by

the captured-image data outputted from said image-capturing device being scene-referred image data.

(33) An image recording apparatus as set forth in any one of the structures (11) to (15), (18), (21), (24), (27), and (30) characterized by

the captured-image data outputted from said image-capturing device being scene-referred image data.

(34) An image forming method as set forth in any one of the structures (1) to (5), (16), (19), (22), (25), and (28) characterized by

the captured-image data outputted from said image-capturing device being scene-referred raw data.

(35) An image processing apparatus as set forth in any one of the structures (6) to (10), (17), (20), (23), (26), and (29) characterized by

the captured-image data outputted from said image-capturing device being scene-referred raw data.

(36) An image recording apparatus as set forth in any one of the structures (11) to (15), (18), (21), (24), (27), and (30) characterized by

the captured-image data outputted from said image-capturing device being scene-referred raw data.

(37) An image forming method as set forth in any one of the structures (1) to (5), (16), (19), (22), (25), and (28) characterized by

the captured-image data outputted from said image-capturing device being viewing image referred image data.

(38) An image processing apparatus as set forth in any one of the structures (6) to (10), (17), (20), (23), (26), and (29) characterized by

the captured-image data outputted from said image-capturing device being viewing image referred image data.

(39) An image recording apparatus as set forth in any one of the structures (11) to (15), (18), (21), (24), (27), and (30) characterized by

the captured-image data outputted from said image-capturing device being viewing image referred image data.

## BRIEF DESCRIPTION OF THE DRAWINGS

Fig. 1 is a graph showing the correlation between the observation distance and the length of the longer side of an image;

Fig. 2 is a graph showing the correlation between the contrast ratio and the angle of visual field of the main photographic object;

Fig. 3 is a graph showing the correlation between the degree of sharpness enhancement and the angle of visual field of the main photographic object;

Fig. 4 is a graph showing the correlation between the degree of granularity suppression and the angle of visual field of the main photographic object;

Fig. 5 is a graph showing the correlation between the degree of chroma enhancement and the angle of visual field of the main photographic object;

Fig. 6 is a graph showing the correlation between the gain of the middle frequency component and the angle of visual field of the main photographic object;

Fig. 7 is a graph showing the correlation between the gain of the high frequency component and the angle of visual field of the main photographic object;

Fig. 8 is a drawing showing the file structure of digital image data used in this invention;

Fig. 9 is a drawing showing the file structure of digital image data used in this invention;

Fig. 10 is a drawing showing the file structure of digital image data used in this invention;

Fig. 11 is a drawing showing the file structure of digital image data used in this invention;

Fig. 12 is a drawing showing the file structure of digital image data used in this invention;

Fig. 13 is a drawing showing the file structure of digital image data used in this invention;

Fig. 14 is a block diagram showing the functional structure of an image-capturing device 21 relating to this invention;

Fig. 15 is a flow chart showing a saving processing of scene-referred raw data to be practiced by the control of a controller 11 in Fig. 14;

Fig. 16 is a block diagram showing the functional structure of an image processing apparatus 117 of the embodiment 1 of this invention;

Fig. 17 is a flow chart showing an image data generation processing A to be practiced by the cooperation of the pertinent portions of the image processing apparatus 117 shown in Fig. 16;

Fig. 18 is a perspective view showing the outside structure of an image recording apparatus 201 of this invention;

Fig. 19 is a block diagram showing the internal structure of the image recording apparatus 201 of this invention;

Fig. 20 is a block diagram showing the functional structure of the image processor 270 shown in Fig. 19;

Fig. 21 is a flow chart showing an image data generation processing A to be practiced by the cooperation of the pertinent portions of the image processing apparatus 117 shown in Fig. 20;

Fig. 22 is a block diagram showing the functional structure of an image processing apparatus 117 of the embodiment 2 of this invention;

Fig. 23 is a flow chart showing an image data generation processing B to be practiced by the cooperation of the pertinent portions of the image processing apparatus 117 shown in Fig. 22;

Fig. 24 is a flow chart showing an image data generation processing B to be practiced by the cooperation of the pertinent portions of the image recording apparatus 201 shown in Fig. 20;

Fig. 25 is a block diagram showing the functional structure of an image processing apparatus 117 of the embodiment 3 of this invention;

Fig. 26 is a flow chart showing an image data generation processing C to be practiced by the cooperation of the pertinent portions of the image processing apparatus 117 shown in Fig. 25;

Fig. 27 is a flow chart showing an image data generation processing C to be practiced by the cooperation of the pertinent portions of the image recording apparatus 201 shown in Fig. 20;

Fig. 28 is a block diagram showing the functional structure of an image processing apparatus 117 of the embodiment 4 of this invention;

Fig. 29 is a flow chart showing an image data generation processing D to be practiced by the cooperation of the pertinent portions of the image processing apparatus 117 shown in Fig. 28;

Fig. 30 is a flow chart showing an image data generation processing D to be practiced by the cooperation of the pertinent portions of the image recording apparatus 201 shown in Fig. 20;

Fig. 31 is a block diagram showing the functional structure of an image processing apparatus 117 of the embodiment 5 of this invention;

Fig. 32 is a flow chart showing an image data generation processing E to be practiced by the cooperation of the pertinent portions of the image processing apparatus 117 shown in Fig. 31; and

Fig. 33 is a flow chart showing an image data generation processing E to be practiced by the cooperation of the pertinent portions of the image recording apparatus 201 shown in Fig. 20.

## DETAILED DESCRIPTION OF THE PREFERRED EMBODIMENT

The term "generation" used in the description of this application means that a program or a processing circuit operating in an image-capturing device, an image processing apparatus, or an image recording apparatus of this invention newly generates image signals or data. The term "production" is sometimes used as the synonym.

Further, an "output medium" is a display device such as a CRT, a liquid crystal display, a plasma display, or the like, or a paper material for the production of a hard copy image such as a silver halide photographic paper, an ink jet paper, a thermal printer paper, or the like.

Further, the term "viewing image referred image data" means digital image data to be used for a display device such as a CRT, a liquid crystal display, a plasma display, or the like, or to be used by an output device generating a hard copy image on a paper material for the production of a hard copy image such as a silver halide photographic paper, an ink jet paper, a thermal printer paper, or the like, and means image data having been subjected to an "optimization processing" for obtaining an optimum image on an output medium.

Further, an "image processing for optimization" is a processing for obtaining an optimum image on an output medium such as a CRT, a liquid crystal display, a plasma display, or the like, or a paper material for the production of a hard copy image such as a silver halide photographic paper, an ink jet paper, a thermal printer paper, or the like, and on the premise that an image is displayed, for example, on a CRT display monitor based on the sRGB standard, the image data are processed in such a way as to make an optimum color reproduction be obtained in the color gamut of the sRGB standard. On the premise that an image is outputted on a silver halide photographic paper, the image is processed in a way such that an optimum color reproduction can be obtained in the color gamut of the silver halide photographic paper. Further, in addition to the above-mentioned compression of color gamut, a gradation compression from 16 bits to 8 bits, reduction of the number of pixels outputted, a processing to cope with the output characteristic (LUT) of the output device, etc. are also included. Besides, needless to say, image processing such as noise suppression, sharpening, color balance adjustment, chroma adjustment, or dodging processing is carried out.

Further, the term "an image-capturing device" used in the description of this application means an apparatus equipped with an image sensor having a photoelectric conversion function, and includes what is called a digital camera or a scanner. For an example of the above-mentioned image sensor, an image sensor of a CCD type composed of a CCD (Charge Coupled Device) and a photoelectric conversion part given a color sensitivity with a color filter of pane pattern, and an image sensor of a CMOS type can be cited. The output electric current of these image sensors is digitized by an A/D converter. The content of each color channel is signal strength based on the spectral sensitivity specific to the image sensor.

As regards the kind of the "image-capturing device" to be used in practicing this invention, there are three types to be described below, and different "captured-image data" are outputted from them respectively. The first one, as described in the structures (31) to (33), is of a type to generate "scene-referred image data" through image pickup, the second one, as described in the structures (34) to (36), is of a type to output "scene-referred raw data" depending on the characteristics of the image-capturing device to be used in the generation of "scene-referred image data" and "reproduction assisting data in practicing a correction processing for image-capturing device characteristics", and the third one, as described in the structures (37) to (39), is of a type to generate "viewing image referred image data".

The term "scene-referred image data" means image data in the state in which at least the signal strengths of the respective color channels based on the spectral sensitivity of the image sensor itself have already been mapped to a standard color space such as RIMM RGB or ERIMM RGB described in the explanation of the conventional technology, while image processings to alter the data content for improving the effect in the image appreciation such as a gradation transformation, a sharpness enhancement, and a chroma enhancement are omitted. Further, it is desirable that scene-referred image data are data having been subjected to a correction for the photoelectric conversion characteristic of the image-capturing device (the opto-electronic conversion function defined by IS01452, refer to, for example, "Fine Imaging and Digital Photography (in Japanese) p. 449, edited by the publishing committee of The Society of Photographic Science and Technology of Japan, published by Corona Co., Ltd. ) .

"Scene-referred raw data depending on the characteristics of the image-capturing device" are crude output data directly outputted from the image-capturing device, are information true to the photographic object, and mean the data as they are digitized by the above-mentioned A/D converter, or data obtained by the application of a correction for a fixed pattern noise and/or a dark current noise etc. to said data; RAW data are included in these. For the above-mentioned scene-referred raw data, image processings for improving the effect at the time of appreciating an image such as a gradation transformation, a sharpness enhancement, and a chroma enhancement, and a processing to map signal strength data of each color channel based on the spectral sensitivity specific to the image sensor into the above-mentioned standardized color space such as RIMM RGB, sRGB, or the like are omitted.

The term "reproduction assisting data in practicing a correction processing for image-capturing device characteristics" means data to make it possible to practice a correction processing for the characteristics of the image-capturing device defined in the preceding paragraph by the utilization of information only noted in the data. It is necessary that, at least, the information to make it possible to map the signal strength data of each color channel based on the spectral sensitivity of the image sensor itself into the above-mentioned standard color space such as RIMM RGB, sRGB, or the like, that is, the matrix coefficients to be used in transforming the signal strength data of each color channel based on the spectral sensitivity of the image sensor into data in the specified standard color space such as RIMM RGB are noted.

Further, for the "scene-referred image data", in addition to the image data obtained by a digital camera, which is an image-capturing device, image data produced by the use of a film scanner for inputting frame image information recorded on a photographic photosensitive material such as a color negative film, a color reversal film, a black-and-white negative film, and a black-and-white reversal film by means of an analog camera, or image data produced by the use of a flat bed scanner for inputting image information reproduced on a color photographic paper, which is a silver halide photographic paper can be used.

As the input data to be used for an image forming method, an image processing apparatus, and an image recording apparatus, "scene-referred image data" obtained by the use of an "image-capturing device" for generating the above-mentioned "scene-referred image data" are desirable. However, from the viewpoint of reducing the load of processing and the power consumption in the image-capturing device, "scene-referred raw data" depending on the characteristics of the image-capturing device to be used for the generation of the above-mentioned "scene-referred image data", and "scene-referred raw data" to be obtained by the use of "an image-capturing device" of a type to output "reproduction assisting data in practicing a correction processing for image-capturing device characteristics" are more desirable. Further, in the case where an "image-capturing device of a type to generate the above-mentioned "viewing image referred image data" is used, it is required a processing to transform "viewing image referred image data" into "scene-referred image data" in the image processing apparatus or in the image recording apparatus. To state it concretely, it is a processing to reproduce a state where no difference for every image-capturing device is present through the correction of at least one of "gradation characteristic", "color reproduction characteristic", and "frequency characteristic" based on the characteristics of each image-capturing device.

In an image processing apparatus and an image recording apparatus, digital image data to be obtained by an image-capturing device can be obtained by a reading means reading them as stored in any one of portable "media" known to the public such as a compact flash (registered trade mark), a memory stick, a smart medium, a multi-media card, a floppy (registered trade mark) disk, an opto-magnetic recording medium (MO), and a CD-R. In another way, digital image data can be also obtained from a remote site through a communication means such as a network.

Further, as regards a "smoothing processing", for example, image data are divided into plural frequency ranges by an orthogonal transformation such as a DCT (Discrete Cosine Transformation), a Fourier transformation, or a multi-resolution transformation such as an orthogonal wavelet transformation, and the smoothing of an image is carried out by the use of a low pass filter of the frequency ranges. To state it concretely, the smoothing of an image is carried out by it that, in the basic image by an orthogonal transformation, the component within the radius R with respect to the origin is completely preserved and other components are removed, or by the application of a coring processing to make the component lower than a specified threshold value, for example, zero to image data of a specified resolution obtained by a multi-resolution transformation.

The term "a filter to change mask sizes, mask shapes, and threshold values on the basis of the noise characteristic of image data" described in the structures (16), (17), and (18) means a smoothing filter characterized by comprising a step to specify the surrounding pixels of a pixel of remark to be used for the processing on the basis of the noise of the image input medium, and a step to determine the pixel value of said pixel of remark on the basis of the pixel values of the specified surrounding pixels. For example, by the changing of the mask sizes in accordance with the noise characteristic, or by the changing of the threshold values for the comparison with the difference of the pixel value between a pixel of remark and its surrounding pixels, the range of surrounding pixels to be used in the processing is altered; owing to that, it becomes possible to prevent the lowering of the image quality and make the speed of processing higher.

Further, as regards a smoothing processing of this invention, it is possible to use a method in which digital image data are separated into luminance information and color information, a smoothing processing is applied to the color information only. By this method, without being accompanied by the lowering of sharpness, color unevenness of an image can be reduced.

A "sharpening processing" is a processing for restoring an image deteriorated owing to blur, or enhancing the edges in an image to make it easy to observe in accordance with the purpose. As regards the concrete method of the sharpening processing, enhancement by first order differential operation, enhancement by second order differential operation (Laplacian), etc. can be cited; among them, an enhancement processing by Laplacian and a processing by means of an unsharp mask are widely used, because a comparatively natural enhancement processing can be carried out.

In a processing by Laplacian, enhancement of edges can be made by subtracting the Laplacian at each pixel of the image data of an original image from each pixel value of the image data of the image. With each pixel value in the image data of an original image, that is, an original signal denoted by f(i, j) (i and j represent the coordinates), and each pixel value after being subjected to a processing by Laplacian, that is, a processed signal denoted by F(i, j), the above-mentioned processing is expressed by the following equation:

$$F(i, j) = f(i, j) - \triangledown^2 f(i, j) \qquad (1).$$

The expression "the amount of application of said sharpening processing being adjusted in accordance with the kind of said output medium" described in the structures (19), (20), and (21) means that the amount of the above-mentioned edge enhancement, for example, by means of an unsharp mask is adjusted for each kind of the output medium, that is, a display device such as a CRT, a liquid crystal display, or a plasma display, or a paper material for the production of a hard copy image such as a silver halide photographic paper, an ink jet paper, or a thermal printer paper.

Depending on the characteristics of the output system including the output device, not to mention the output medium, sharpness characteristic becomes different even for the output of the same image data; therefore, it can be said that this invention makes it possible to obtain a subjectively desirable image quality.

The expression "the amount of application of said sharpening processing being adjusted in accordance with the size of said output medium" described in the structures (22), (23), and (24) means that the amount of the above-mentioned edge enhancement, for example, by means of an unsharp mask is adjusted for the size of the output medium, more desirably for the size of each kind of the output medium, that is, a display device such as a CRT, a liquid crystal display, or a plasma display, or a paper material for the production of a hard copy image such as a silver halide photographic paper, an ink jet paper, or a thermal printer paper. Depending on the characteristic of the output system including the output device, not to mention the output medium, sharpness characteristic becomes different even for the output of the same image data in accordance with the output size (the same relation can be established for the observation distance between the output medium and the observer); therefore, it can be said that this invention makes it possible to obtain a subjectively more desirable image quality.

The expression "the amount of application of said sharpening processing being adjusted in accordance with the size of the main photographic object" means that the amount of edge enhancement, for example, by means of an unsharp mask is adjusted in accordance with the size of the main photographic object, for example, the face of the person.

The above-mentioned "being adjusted in accordance with the size of the main photographic object" means that the content of the image processing, in particular, the amount of application of sharpening processing to be applied to the image data representing the photographed image is determined so as to give a better impression to a person observing the image on the output medium, on the basis of the "size of the output medium" and the "size of the main photographic object in the viewing image" together with the "size of the viewing image".

The above-mentioned "main photographic object" means a photographic object which is remarked from its major role in the expression considered, and in most cases, it is a person, in particular, the region including the face. Also in the case of a landscape photograph, it rarely occurs that the composition is set vaguely; in one case, a flower, an animal, or a still-standing object at a short distance is the main photographic object, and in another case, a mountain, the sky, or clouds in the background is the main photographic object.

The above-mentioned "size of the viewing image" means the actual size of the total area of the photographed image when it is printed or displayed on an output medium; for example, in the case it is printed on a paper sheet of A4 size, an area of about 190 mm x 280 mm except for the fringing blank portion is the size of the viewing image. Accordingly, in this invention, in addition to the "size of the viewing image" and the "size of the main photographic object in the viewing image", the "size of the output medium" described in the structures (22) to (24) is also an adjustment factor.

The above-mentioned "size of the main photographic object in the viewing image" means the actual size of the area defining the main photographic object when it is printed or displayed on an output medium; for example, even in cases where images are printed on a paper of the same A4 size, in a close-up photograph of a person, the size becomes of the order 50 mm to 100 mm square in many cases, and in a photograph of assembling persons or in a memorial photograph of a person with a background of a building, the size becomes of the order 10 mm to 30 mm in many cases. In this way, even if the size of the viewing image is supposed to be constant, the size of the main photographic object in the viewing image becomes different for each image, depending on the composition of the photograph intended by the photographing person.

As regards the method of obtaining the above-mentioned "size of the viewing image", in the case where the mode of practice of this invention is an image recording apparatus or an image processing apparatus connected to a printer, the size of the viewing image can be easily obtained from the content of print instruction, and also in the case where the mode of practice of this invention is an image processing method, or an image processing apparatus in which a printer is not directly connected and image data are outputted to a file or a communication means, by a user designating the size of the supposed viewing image, it becomes possible for the above-mentioned mode of practice of this invention to obtain the size of the viewing image.

Further, even in a situation where the size of the viewing image cannot be obtained, by "estimating the size of the viewing image", it becomes possible to practice this invention. For example, the number of pixels of a viewing image strongly correlates with the size of the image on an output medium intended by the user. It is inferred that an image of the order 10,000 pixels is used for a thumbnail index, and the size of the viewing image is intended to be of an order of several cm square, and an image of the order of 2,000,000 pixels is intended to be a print of L - 2L size. The simplest way of estimating the size of a viewing image is a method such that the number of pixels of the viewing image is converted into the size of the viewing image by assuming a general print condition of a color image (300 DPI for example).

As regards the method of obtaining the above-mentioned "size of the main photographic object in the viewing image", the acquisition of the size is accomplished by receiving a designation when a user gives an instruction to a mode of this invention, or by referring to the supplementary information (what is called tag information, etc.) attached to the image signal representing the photographed image. As regards the method of attaching such supplementary information, it is appropriate to give it as an independent information format, or an independent information file/signal; however, for a more desirable mode of practice, to utilize already existing tag information defined in various kinds of versatile image format represented by JPEG, TIFF, Exif, etc., or to utilize the area which is freely available such as a maker-note or a user-note can be cited.

It is unnecessary that the size of the main photographic object is specified as an actual size on the viewing image, and it is also appropriate to give information to make it possible to calculate the "proportion occupied by the main photographic object in the image" by a similar means as described above. For example, in the case where the size of the main photographic object is given as the number of pixels on one side or on the radius, by comparing it with the total number of pixels of the image as a whole, the proportion occupied by the main photographic object in the image is easily calculated, and by multiplying the size of the viewing image which has been obtained or estimated by the above-mentioned method in this invention, the size of the main photographic object in the viewing image can be easily calculated.

Further, in a situation where the size of the main photographic object is not directly specified, one can practice this invention by estimating the "size of the main photographic object in the viewing image". To state it concretely, a method to extract the portion of skin color from the image signal, or a method to extract the range in the central part of an image where hue and lightness do not exceed a specified range can be cited; however, for a more desirable method, a method in which information on the photographing conditions is obtained and from this information, the proportion occupied by the main photographic object is estimated can be cited. For a concrete example of the information on the photographing conditions, the area of photographic object, the type of photographing scene, object distance, detection of strobe light reflection, etc. can be cited, and these kinds of information may be given as an independent information format or an independent information file/signal; however, for a more desirable mode of practice, to utilize already existing tag information defined in various kinds of versatile image format represented by JPEG, TIFF, Exif, etc., or to utilize the area which is freely available such as a maker-note or a user-note can be cited.

The method to estimate the proportion occupied by the main photographic object from the information on the photographing conditions will be explained with reference to examples.

For example, in the case where information of photographic object area is given, if this information is provided in a form to make it possible to calculate the number of pixels in the area, that is, in a form of the central coordinates of the circular area and the number of pixels on the radius, or in a form of the central coordinates of the rectangular area and the number of pixels of the longitudinal and lateral sides, by comparing the number of pixels within the area with the total number of pixels of the image as a whole, one can easily calculate the proportion occupied by the main photographic object in the image, and by multiplying the size of the viewing image which has been obtained or estimated by the above-mentioned method of this invention, one can easily calculate the size of the main photographic object in the viewing image. Further, in the case where the information of the photographic object area is given only as a point at the central coordinates of the area, by calculating the average hue and average lightness of several pixels around the specified central coordinates, and searching a pixel area around the specified central coordinates where the hue and the lightness do not exceed a specified range from the above-mentioned average values (for example, the difference in hue angle is within 10 degree, and the difference in lightness is within 10% of the dynamic range), one can determine the number of pixels of the main photographic object area.

Further, in the case where information of the type of the photographed scene is given, if it is a photograph of a person or a portrait for example, it is inferred that the main photographic object is the face of the person, and the diameter is of the order 1/4 to 1/2 of the shorter side of the image. The proportion occupied by the main photographic object can be estimated as an approximate value by using the number of pixels equivalent to the area of a circle of a diameter having the number of pixels of the order 1/3 of that of the shorter side of the image, and the accuracy of the estimation can be also improved by searching a skin-colored area of the order 1/4 to 1/2 of the shorter side of the image from the inside area of the image. Further, in the case where the type of the photographed scene is landscape, there exists in most cases a main photographic object occupying the area of about 10% of the image area. Further, in the case where the type of photographed scene is a night scene, it can be inferred that an area having higher lightness values compared to the image as a whole is the main photographic object. Further, in the case where information of the object distance is given, supposing that the main photographic object is a human face, by calculating the size of a human face corresponding to the object distance from the lens characteristic of general compact cameras, one can estimate the proportion occupied by the main photographic object in the image. Further, in the case where information of the strobe reflection light is given, an approximate object distance can be estimated by the presence or absence and the strength of the reflection light, and the proportion occupied by the main photographic object in the image can be estimated by the same way as described in the above. It is a matter of course that, in the case where a plurality of kinds of such photographing information are given, the accuracy of estimation can be improved by the judgment based on the combination of them.

This invention is characterized by the content of an image processing to be applied to image data representing a photographed image being determined in order that a good impression may be given to a person observing the image on an output medium on the basis of the "size of the viewing image", and the "size of the main photographic object in the viewing image" obtained or estimated by the above-mentioned method. The concrete mode of practice of this image processing will be explained.

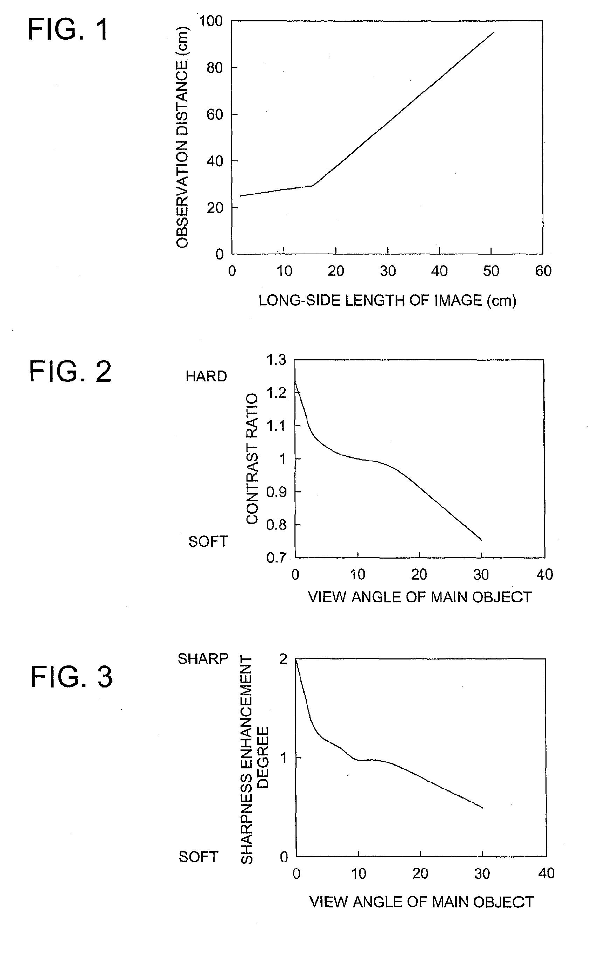

When a person observes a photographed image printed or displayed on an output medium of a specified size, its general observation distance changes with the "size of the output medium" and the "size of the viewing image". The observation distance in the case of size of the image being L-size (86 mm x 128 mm) to 2L-size (128 mm x 172 mm) is of the order 30 cm, and in the case where the image is larger than this, the observation distance becomes longer in order to make the whole image come within the field of sight. This distance mostly becomes a distance such that the longer side of the image comes within the angle of visual field about 30°. On the contrary, even in the case where the image is small, it never happens that the observation distance comes greatly nearer than 30 cm. This relation is shown in Fig. 1. Besides, a photographed image referred to herein means what is called a photographic image photographed by a means such as a film camera or a digital camera. For example, in the case where an illustration of a frame is drawn on an output medium, and with this illustration used as a template, a photographed image is inserted inside it, the observation distance is generally dominated not by the size of the illustration of the frame but by the size of the photographed image inside the frame. Accordingly, the "size of the viewing image" in this invention means the size of the photographed image which is the object of observation inside the template. Further, in the case where a plurality of images having different sizes respectively are inserted inside one template, the size of the viewing image is defined independently for each photographed image.

On the other hand, the impression given to an observer from an image depends on how the main photographic object appears at the above-mentioned observation distance. It is generally said that resolution in the human visual sensation is high within the range of the angle of visual field 10°, and for example, in the case where the observation distance is 30 cm, the range defined by a circle of a diameter of 5 cm is equivalent to the range of the angle of visual field 10°. The angle of visual field is defined by the following expression.

{M1}

$$\theta = 2\tan^{-1}(d/r)$$

(θ: angle of visual field, d: radius of main photographic object, r: observation distance).

In the case where the size of the main photographic object in an image is smaller than the range of the angle of visual field 10°, a sharp picture with a rather strong contrast and a clear-cut contour is generally preferred. For example, if a human face is the main photographic object and the diameter is small as not greater than 5 cm, a photograph of clearly marked features is preferred. Especially, as in the case of a photograph of assembling persons, if the diameter of the face is of the order 1 cm to 2 cm, a high-contrast picture such that persons are easy to recognize is preferred. On the contrary, in the case where the main photographic object is larger than the range of the angle of visual field 10°, a picture with a low contrast giving a soft impression is generally preferred. For example, in the case where a human face is the main photographic object and the diameter is 10 cm, the skin of a part of the face come to be within the range of the angle of visual field 10°. If the contrast is too strong or the sharpness is too strong in this situation, the picture gives an impression that the skin is rough, gives an impression that the shade around the eyes and noses is too strong, or makes an observer have a feeling of disorder in the variation of chroma at detailed portions. In this case, if the contrast is made softer, and the sharpness and the variation of chroma are made rather suppressed, it gives an impression that the skin is smooth and fresh.

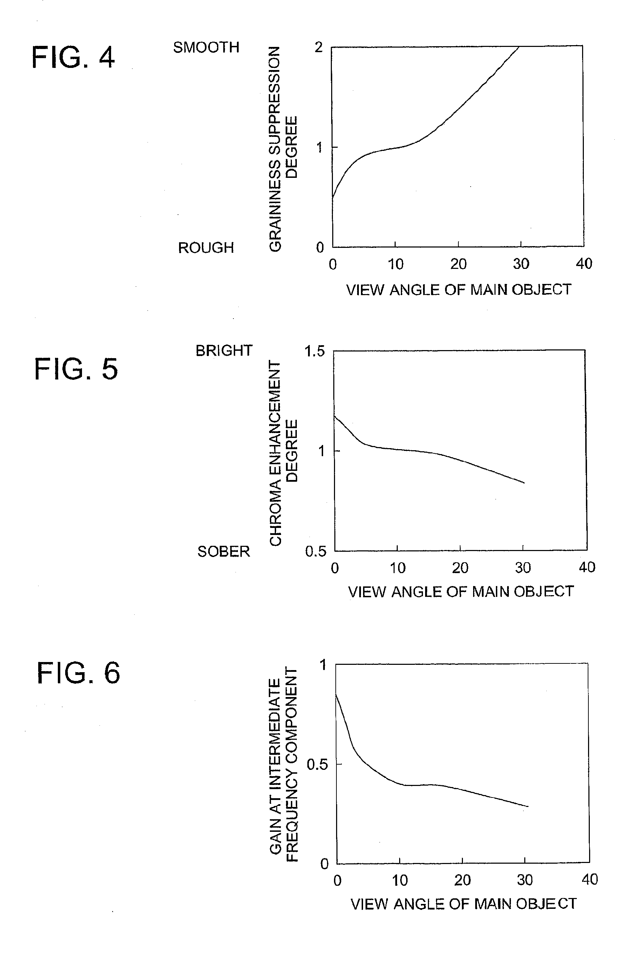

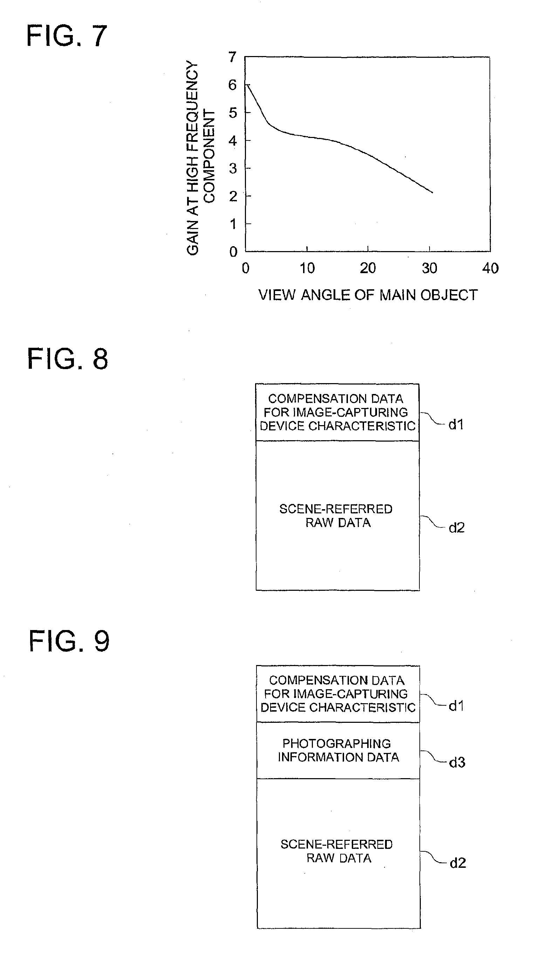

It is a desirable mode of a method for determining the content of the image processing to be applied to image data representing a photographed image that, on the basis of the above-mentioned empirical rule, the observation distance is estimated from the "size of the output medium", and the "size of the viewing image", the angle of visual field of the main photographic object as a whole is estimated from this observation distance and the "size of the main photographic object in the viewing image", and in accordance with this angle of visual field of the main photographic object as a whole, the setting of the contrast/degree of sharpness enhancement/degree of granular noise suppression/degree of chroma enhancement of an image are controlled. As the result, it becomes possible that an image being observed on an output medium gives a more desirable impression. Besides, with a granular noise taken for instance as the object of smoothing processing, the processing is referred to as granular noise suppression, and the degree is referred to as the degree of granular noise suppression. Further, the degree of sharpening processing is referred to as the degree of sharpening enhancement. Examples of these are shown in Fig. 2 to Fig. 5. Further, in the case where a technology using the suppression of middle frequency component and the enhancement of high frequency component together is used for the method of sharpness enhancement and granular noise suppression, it is desirable to control the settings of the suppression of middle frequency component and the enhancement of high frequency component in accordance with the above-mentioned angle of visual field of the main photographic object as a whole. Examples of these are shown in Fig. 6 and Fig. 7. The middle frequency component is the component of a spatial frequency band containing granularity in a color image, and the high frequency component is the component of a spatial frequency band containing edges or textures in a color image.

In addition, for the sake of explanation, from the "size of the output medium", the "size of the viewing image", and the "size of the main photographic object in the viewing image", the observation distance and the angle of visual field of the main photographic object as a whole are calculated, and the image processing conditions are determined; however, in the actual mode of practice, it is unnecessary to carry out the above-mentioned calculation every time image data representing a photographed image are received. It is desirable to determine image processing conditions with reference to a look-up table in which image processing conditions in accordance with the "size of the output medium", the "size of the viewing image", and the "size of the main photographic object in the viewing image" are noted beforehand.

Further, in this invention, it is desirable that the determination of image processing conditions through the calculation of the above-mentioned angle of visual field, and the determination of image processing conditions with reference to a look-up table having image processing conditions noted beforehand or an expression of simple approximate calculation are carried out for every kind of output medium as described in the structures (19) to (21).

Further, in this invention, it is desirable that the tendency of the image processings which have been practiced when the image data representing a photographed image were generated is grasped, and on the basis of the information, the degree of the above-mentioned image processings is modified. To state it concretely, for example, it is desirable that the tendency of image processings such as a contrast processing, a sharpness enhancement, and a chroma enhancement which have been applied to image data when they were generated is grasped, and on the basis of the information, the degree of the above-mentioned image processings are modified. As regards the method of obtaining the information concerning such tendency of image processings, it is appropriate to obtain the information as an independent information format or an independent information file/signals; however, for a more desirable mode of practice, referring to existent tag information defined in various kinds of versatile image formats represented by JPEG, TIFF, Exif, etc., and utilizing a freely available area such as a maker-note, or a user-note. On the basis of such information, supposing that contrast has been already set at a hard tone at the time of photographing, the image characteristics of the viewing image can be made to fall within a proper range through modifying the degree of image processings in this invention in a way such that the duplication/reciprocity with the image processings at the time of photographing is taken into consideration; that is, the contrast enhancement in the case of the size of the main photographic object on the image being smaller than the range of the angle of visual field 10° is suppressed or canceled, and the degree of contrast softening in the case of the main photographic object on the image being larger than the range of the angle of visual field 10° is made large.

The expression "the amount of application of said sharpening processing being adjusted in accordance with the photographed scene" described in the structures (28), (29), and (30) means that, as the result of the discrimination of the photographed scene, the amount of edge enhancement by means of an unsharp mask, for example, is adjusted in accordance with the kind of the main photographic object or the composition of the photographed scene, for example. For an artificial photographic object such as a building which is composed of many straight lines and easy to make a border with the sky, a more feeling of sharpness is desired, but on the contrary, for a living thing such as a person or a flower, a rather weak setting of sharpness is preferred.

In accordance with the photographed scene, or more desirably, by a partial adjustment of the amount of the application of sharpening processing, it is possible to obtain a more subjectively desirable image quality.

It is more desirable in practicing this invention to use a combination of the processings set forth respectively in the structures (19) to (21), (22) to (24), (25) to (27), and (28) to (30) in a composite way.

Further, as regards the sharpening processing of this invention, it is possible to use a method such that digital image data are divided into luminance information and color information, and sharpness processing is applied to the luminance information only. By the application of sharpening processing to the luminance information only using this method, image sharpness can be raised without being accompanied by the deterioration of the color information.

An "image processing apparatus" of this invention is equipped with means for transforming scene-referred raw data outputted by an image-capturing device depending on the characteristics of the image-capturing device into standardized scene-referred image data and standardized viewing image referred image data.

An "image recording apparatus" of this invention is an apparatus such that means for forming a viewing image on an output medium is attached to an image processing apparatus.

An image processing apparatus and an image recording apparatus of this invention may be equipped with, in addition to a mechanism for applying image processings of this invention to image data obtained by an image-capturing device relating to this invention, a film scanner for inputting frame image information recorded by an analog camera on a photographic photosensitive material such as a color negative film, a color reversal film, a black-and-white negative film, or a black-and-white reversal film, or a flat-bed scanner for inputting image information reproduced on a color photographic paper, which is a silver halide photographic paper. Further, they may be equipped with means for reading digital image data which are obtained by a digital camera other than an image-capturing device relating to this invention and stored in any one of portable "media" known to the public such as a compact flash (registered trade mark), a memory stick, a smart medium, a multi-media card, a floppy (registered trade mark) disk, an opto-magnetic storage medium, or a CD-R, or a processing means for obtaining digital image data from a remote site through a communication means such as a network and forming a viewing image on any one of "recording media" known to the public such as a display device such as a CRT, a liquid crystal display, or a plasma display, or a paper material for the production of a hard copy image such as a silver halide photographic paper, an ink jet paper, or a thermal printer paper.

The file structures of digital image data to be used in this invention are shown respectively in Fig. 8 to Fig. 13.

As shown in Fig. 8, Fig. 10, and Fig. 12, correction data for image-capturing device characteristics are attached to scene-referred raw data, scene-referred image data, and viewing image referred image data.

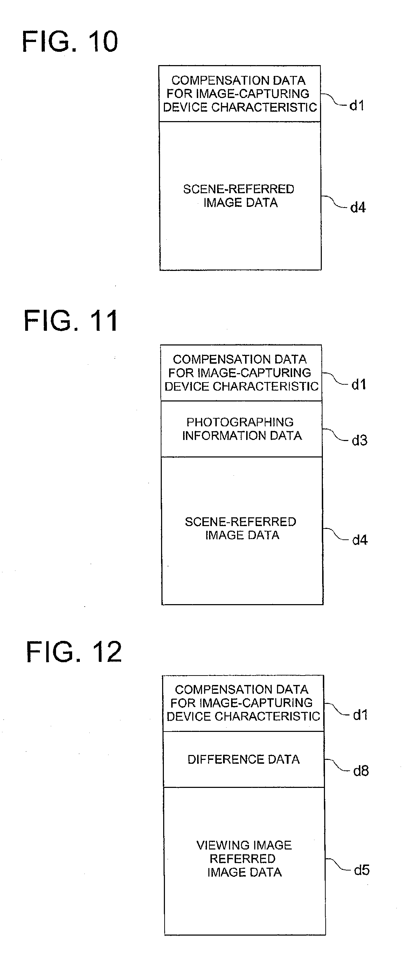

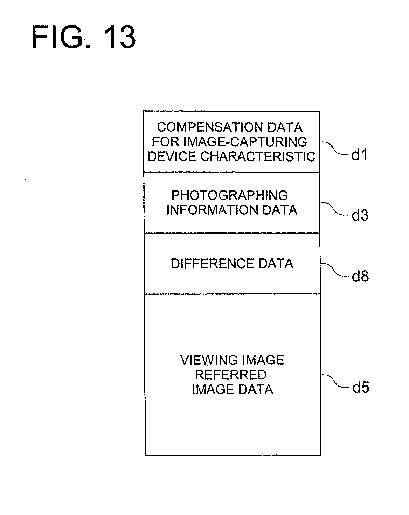

Further, as shown in Fig. 12 and Fig. 13, the difference data of scene-referred image data and viewing image referred image data are attached to viewing image referred image data.

Moreover, as shown in Fig. 9, Fig. 11, and Fig. 13, it is desirable that photographing information data are further attached to scene-referred raw data, scene-referred image data, and viewing image referred image data.

The term "photographing information data" means a record of the setting of photographing conditions at the time of photographing, and it may include the same one as tag information to be written at the header part of an Exif file. To state it concretely, it is, for example, a tag (code) indicating information concerning an exposure time, a shutter speed, an aperture value (f-number), an ISO sensitivity, a luminance value, an object distance range, a light source, strobe light emitted or not, an object region, white balance, a zoom magnification, an object structure, a photographed scene type, a reflection light quantity of strobe light, photographed chroma, and a kind of a photographic object, or the like.

The above-mentioned "photographing information data" are classified into values obtained by a sensor provided in a camera at the time of photographing for the purpose of automating the exposure setting and focusing function in the camera, data obtained by processing the above-mentioned values outputted by the sensor, and photographing conditions of the camera set on the basis of said sensor; however, in addition to these, information manually set by a photographing person concerning the photographing mode dial (for example, portrait mode, sports mode, macro-photographing mode, etc.) and the setting switch for enforced strobe light emission is included.

Examples of the optimization of viewing image referred image data using the above-mentioned "photographing information data" will be shown below.

By the "object structure" information, it becomes possible to partially apply a chroma enhancement processing for example, or to apply a dodging processing for a scene having a broad dynamic range. By the "photographed scene type" information, for example in a night scene photograph, it becomes possible that the degree of white balance adjustment is lowered, and color balance is specially adjusted. By the "reflection light quantity of strobe light" information, the distance between the photographing person and the object can be estimated, and it becomes possible to reflect the information to the condition setting for the image processing to suppress the whitening of skin part for example. By the "kind of a photographic object" information, for the photographing of a person for example, it becomes possible to make the creases of skin unnoticeable by lowering the degree of sharpening processing and strengthening the smoothing processing.

Further, for the purpose of supplementing the "photographing information data" such as the "object structure", the "photographed scene type", the " reflection light quantity of strobe light", or the "kind of photographic object", the information such as the "exposure time", "shutter speed", "aperture value (f-number)", "ISO sensitivity", "luminance value", "object distance range", "light source", "strobe light emitted or not", "object region", "white balance", and "zoom magnification" can be used in a supplementary way. Further, it is possible that the amount of application of noise suppression processing is adjusted from the "ISO sensitivity" information, or the "light source" information is used for re-adjustment of white balance.

In the mode of practice where the above-mentioned "photographing information data" are stored in a medium independently of the "scene-referred raw data", the "scene-referred image data", or the "viewing image referred image data", it is necessary that, to either the "photographing information data" or any one of the "scene-referred raw data", the "scene-referred image data", and the "viewing image referred image data" or to both of them, information for correlating both is attached or a status information file having relating information noted is attached separately.

In the case where it is required a processing to transform "viewing image referred image data" into "scene-referred image data" using an "image-capturing device" of a type to generate the above-mentioned viewing image referred image data" in an image forming method, an image processing apparatus, and an image recording apparatus, it is desirable that image processing of this invention is composed of at least a first step for practicing a correction for the transformation characteristics specific to the image-capturing device through correcting at least one of "gradation characteristic", "color reproduction characteristic", and "frequency characteristic" to reproduce a state where no difference is present for each image-capturing device, a second step for practicing an exposure control processing and a gray balance processing, and a third step for practicing a gradation transformation processing.

In addition, in the case where an image-capturing device of a type to generate "scene-referred image data" is used, the above-mentioned first step is omitted. In the case where an image-capturing device of a type to output "scene-referred raw data" depending on the image-capturing device characteristic to be used in generating "scene-referred image data" and "reproduction assisting data in practicing correction processing for image-capturing device characteristics", the generation process of the "scene-referred image data" corresponds to the above-mentioned first step.

The above-mentioned "step" defines the processing flow of an image forming method of this invention, and the processing proceeds successively from the first step to the second step. By separating the processing into the steps in this way, further improvement of accuracy and higher efficiency can be achieved.

Further, it is desirable that the gradation alteration processing in the above-mentioned third step includes a non-linear correction processing, and further, it is desirable that the above-mentioned third step is composed of two steps, namely, a step for correcting γ and a step for practicing a non-linear correction, and it has a structure such that γ correction is done first.

The above-mentioned first step is a transformation process for transforming "scene-referred raw data" into "scene-referred image data", or transforming "viewing image referred image data" into "scene-referred image data", and the second step has both the aspect of a transformation process into "scene-referred image data" through removing the difference in the characteristic specific to the image-capturing device to achieve the equalization of image data and the aspect of a transformation process into "viewing image referred image data" for making image quality more subjectively desirable on an output medium, and carries out the bridging between the first step and the third step. The third step is a transformation process into viewing image referred image data for making image quality more subjectively desirable on an output medium.

The term "exposure control processing" means a processing to correct the brightness of captured-image data as a whole. Although image data are corrected for the representation of object information specific to the image-capturing device and equalized, brightness is different between image-capturing device owing to the performance of automatic exposure control (hereinafter referred to also as "AE") of image-capturing device dispersing from one to another and the difference in the manual setting by the photographing persons.

The term "gray balance adjustment processing" means a processing to correct color bias of image data as a whole. Although image data are corrected for the representation of object information specific to the image-capturing device and equalized, color bias is different between image-capturing device owing to the performance of automatic gray balance control (hereinafter referred to also as "AWB") of image-capturing device dispersing from one to another and the difference in the manual setting by the photographing persons.

It is desirable to make the mode of practice such one that exposure control (AE) processing and gray balance adjustment (AWB) processing in the above-mentioned second step are carried out parallel by means of an input-to-output conversion table (lookup table (hereinafter referred to also as an "LUT")) set for each of the colors B, G, and R. To state it concretely, gray balance is adjusted by the parallel moving of the respective LUT's of the colors B, G, and R done individually, and brightness is adjusted by the parallel moving of the LUT's done altogether.

The term "gradation alteration processing" is a processing to adjust gradation so as to become more subjectively desirable on an output medium, that is, on a display device such as a CRT, a liquid crystal display, and a plasma display, or on a paper material for hard copy image production such as a silver halide photographic paper, an ink jet paper, and a thermal printer paper. To state it concretely, "non-linear processing" and "γ correction processing" described below is included.

The term "non-linear correction processing" means a processing to suppress whitening at highlight portions and fill-in at shadow portions of an image resulting from the density reproduction range of the output medium being narrow by non-linearly correcting highlight portions and shadow portions of an image. The amount of correction is obtained in the following way and is reflected to the corrected curve: That is, in such a case that print density is raised by the above-mentioned second step (AE/AWB processing), gradation in the highlight side is made harder, while the gradation in the shadow side is made softer, and in such a case that conversely print density is lowered, gradation in the highlight side is made softer, while the gradation in the shadow side is made harder.

The term "to correct γ" means to correct a gradation curve to become a reference gradation curve set for each output medium. In this specification, for example, in the case where the output medium is a silver halide photographic paper, the reference gradation curve is an S-shaped curve, and its middle part is set to have γ = 1.6. A processing having a purpose to make better the visual appearance of a printer output by making the gradation harder is called a "γ correction processing".

In the following, a process to practice a smoothing processing of this invention will be described in detail.

The term "a scene-referred image data generation process" in the description of the structures (1) and (2) means the above-mentioned first step. Further, the expression "said scene-referred image data generation means comprising a smoothing processing means for applying a smoothing processing to said captured-image data" in the description of the structures (6), (7), (11), and (12) means that a smoothing processing is practiced in the above-mentioned "first step". This invention is characterized by it that a smoothing processing is practiced in the "first step", that is, in the transformation process to transform "scene-referred raw data" into "scene-referred image data" or to transform "viewing image referred image data" into "scene-referred image data". That is, a "noise" to become the object of the smoothing processing here results from the image-capturing device. Because the noise is different for each image-capturing device and specific to it, the information volume of digital image data (for example, the number of gray levels, the number of pixels, etc.) to become the object of processing is large, and the cause of noise generation is clearer in the scene-referred image data generation process, it becomes possible to prepare a more appropriate smoothing processing means; as the result, it is possible to practice a smoothing processing with an artifact suppressed.

In the description of the structures (4), (5), (9), (10), (14), and (15), a smoothing processing is applied to "generated scene-referred image data". That is, after the above-mentioned "first step", a smoothing process is practiced in the pre-processing of "the second, and third steps". In the case where an image-capturing device of a type to generate "scene-referred image data" by image pickup is used, the above-mentioned "first step" is omitted, but a smoothing processing is carried out after that; therefore, even in the case where an image-capturing device of a type to generate "scene-referred image data according to this invention, this invention has the merit that it can lighten the processing load of the image-capturing device, because there is no need of practicing a smoothing processing in the image-capturing device.

In the following, a process to practice a sharpening processing of this invention will be described in detail.

The term "viewing image referred image data generation process" in the description of the structures (1) and (4) means the above-mentioned "third step". Further, the expression "said viewing image referred image data generation means comprising a sharpening processing means for applying a sharpening processing to said scene-referred image data" in the description of the structures (6) and (11) and the expression "said viewing image referred image data generation means comprising a sharpening processing means for applying a sharpening processing to said scene-referred image data having been subjected to said smoothing processing" in the description of the structures (9) and (14), mean that a sharpening processing is practiced in the above-mentioned "second or third step". This invention is characterized by it that a sharpening processing is practiced in the transformation process into viewing image referred image data to make the image quality subjectively more desirable on an output medium, for example. That is, in this description, a sharpening processing is optimized, for example, in accordance with the kind of the output device, output medium, in particular, with the size of the output medium; as the result, it is obvious that a more subjectively desirable image quality can be obtained.

According to the description in the structures (2), (5), (7), (10), (12), and (15), a sharpening processing is applied to the "generated viewing image referred image data". That is, a sharpening processing is practiced in a process in a further later process of the above-mentioned "second or third step". In this invention, in a case such that, in a situation where the same output device or an output medium of the same kind is used for example, only the size of the output medium is changed, the modification in the above-mentioned "second or third step" is not required, and in such a case, the "second or third step" can be omitted; therefore, this invention has the merit that the load of processing can be lightened.

The expression "a smoothing processing is practiced at first and a sharpening processing is practiced next in said scene-referred image data generation process" means that a smoothing processing is practiced at first and a sharpening processing is practiced next in the above-mentioned "second or third step". Further, a viewing image referred image data generation means described in the structures (8) and (13) practices a smoothing processing at first and practices a sharpening processing next in the "viewing image referred image data generation process", that is, in the above-mentioned "second or third step". In the case where an image-capturing device of a type to generate "scene-referred image data" by image pickup is used, the "first step" is omitted, but a smoothing processing and a sharpening processing is practiced in the "second or third step"; therefore, this invention has the merit that even if an image-capturing device of a type to generate "scene-referred image data" is used, it is made unnecessary by this invention to practice a smoothing processing in the image-capturing device, which makes it possible to lighten the load of processing in the image-capturing device. Further, because it is put into practice to practice a smoothing processing and a sharpening processing in the "second or third step", the speed of processing is made higher.

EMBODIMENT OF THE INVENTION

EMBODIMENT 1

In the following, the embodiment 1 of this invention will be explained on the basis of the drawings.

In addition, in the embodiment 1, it is shown an example in which an "image-capturing device" of a type to generate "scene-referred raw data" depending on the characteristic of the image-capturing device for use in the generation of the above-mentioned "scene-referred image data", "reproduction assisting data in practicing a correction processing for the image-capturing device characteristics" (hereinafter referred to as "correction data for the image-capturing device characteristics"), and "photographing information data". In the following, an image-capturing device 21, which is an "image-capturing device" of a type to output "scene-referred raw data", "correction data for image-capturing device characteristics", and "photographing information data" will be explained.

(STRUCTURE OF IMAGE-CAPUTURING DEVICE 21)

First, the structure will be explained.

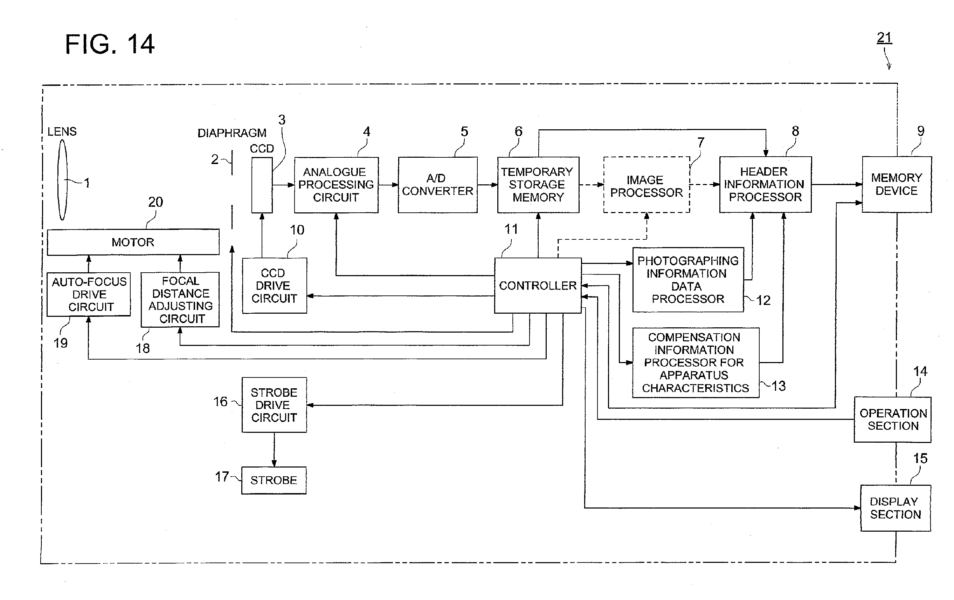

Fig. 14 is a block diagram showing the functional structure of an image-capturing device 21 relating to this invention. As shown in Fig. 14, the image-capturing device 21 has a structure equipped with a lens 1, a diaphragm 2, a CCD 3, an analog processing circuit 4, an A/D converter 5, a temporary storage 6, an image processor 7, a header information processor 8, a storage device 9, a CCD drive circuit 10, a controller 11, a photographing information data processor 12, a correction information processor for apparatus characteristics 13, an operation section 14, a display section 15, a strobe drive circuit 16, a strobe light 17, a focal distance adjusting circuit 18, an auto-focus drive circuit 19, a motor 20, etc.

The optical system of the image-capturing device 21 has a structure equipped with the lens 1, the diaphragm 2, and the CCD (solid state image sensor) 3.

The lens 1 has a function of focusing, to form an optical image of a photographic object. The diaphragm 2 adjusts the light quantity of a bundle of light having passed the lens 1. The CCD 3 photoelectrically converts the light image formed on the light receiving surface by the lens 1 into electrical signals (pickup image signals) corresponding to the incident light quantity for each pixel in the CCD 3. Further, the CCD 3, being controlled by timing pulses outputted from the CCD drive circuit 10, outputs these pickup image signals to the analog processing circuit 4 successively.

The analog processing circuit 4 applies an amplification processing of R, G, and B signals, noise reduction processing, etc. to the pickup image signals inputted from the CCD 3. As regards these processings in the analog processing circuit 4, ON/OFF switching can be made through the controller 11 in response to an operation signal from the operation section 14.

The A/D converter 5 converts the image pickup signals inputted from the analog processing circuit 4 into digital image data and outputs them.

The temporary storage 6 is a buffer storage or the like, and temporarily stores the digital image data outputted from the A/D converter 5.

The image processor 7 applies processings such as gradation correction, cross-talk correction for the spectral sensitivity, dark current noise suppression, sharpening, white balance adjustment, chroma adjustment, and in addition to these, change of image sizes, trimming, aspect transformation, etc. to the digital image data for use in the display in the display section 15. As regards these processings in the image processor 7, ON/OFF switching can be made through the controller 11 in response to an operation signal from the operation section 14.

The header information processor 8 applies a processing to write correction data for the image-capturing device characteristics d1 generated by the correction information processor for apparatus characteristics 13 as header information to the digital image data stored in the temporary storage 6.

The storage device 9 is made up of a non-volatile semiconductor storage device, etc., and is composed of a recording medium such as a memory card for recording photographed digital image data and a storage capable of being read having a control program for the image-capturing device 21 stored.

The CCD drive circuit 10 outputs timing pulses on the basis of a control signal outputted from the controller 11, to carry out the drive control of the CCD 3.

The controller 11 is made up of a CPU (Central Processing Unit), etc.; it reads out a control program for the image-capturing device 21 stored in the storage device 9, and carries out the control of the whole image-capturing device 21 in accordance with the program read out. To state it concretely, the controller 11, in response to an operation signal from the operation section 14, executes a control of the auto-focus drive circuit 19 practicing a control of the motor 20 for adjusting the focal distance and the focusing of the lens 1, the focal distance adjusting circuit 18, the CCD drive circuit 10, the analog processing circuit 4, the temporary storage 6, the image processor 7, the operation section 14, the display section 15, the strobe drive circuit 16, and the correction information processor for apparatus characteristics 13, to carry out photographing.

When the output of scene-referred raw data is instructed by the operation section 14, the controller 11 carries out a scene-referred raw data saving processing to be described later, omitting the signal amplification and noise reduction processing in the analog processing circuit 4 and the processings in the image processor 7, writes correction data for the image-capturing device characteristics d1 and photographing information data d3 in a recording medium of the storage device 9 as header information, while it records photographed image data as scene-referred raw data d2.

The photographing information data processor 12 generates photographing information data d3. The photographing information data d3 is, for example, information directly relating to the kind of a camera (model) such as a camera name or a code number, information concerning the setting of photographing conditions such as an exposure time, a shutter speed, an aperture value (f-number), an ISO sensitivity, a luminance value, an object distance range, a light source, strobe light emitted or not, an object region, white balance, a zoom magnification, an object structure, a photographed scene type, a reflection light quantity of strobe light, photographing chroma, information concerning the kind of a photographic object, or the like.

The correction information processor for apparatus characteristics 13, in the case where scene-referred raw data which are not subjected to processings in the analog processing circuit 4 and image processor 7 under the control of the controller 11 are recorded in a recording medium of the storage device 9, generates correction data for image-capturing device characteristics d1 as information necessary for transforming the scene-referred raw data d2 into scene-referred image data d4 in a standardized color space such as RIMM RGB, or ERIMM RGB, and outputs them to the header information processor 8. The correction data for image-capturing device characteristics d1 are equivalent to the "reproduction assisting data in practicing a correction processing for image-capturing device characteristics to generate standardized scene-referred image data" described in the claims of this invention.

The operation section 14 is provided with various kinds of functional button (not shown in the drawing) such as a release button, an ON/OFF switching button for the power source, and a zoom button, a cursor key, etc., and outputs operation signals respectively corresponding to the buttons and the keys as control signals to the controller 11. In this embodiment of the invention, the operation section 14 is equipped with a functional button for instructing the output of scene-referred raw data.

The display section 15 displays digital image data by a control signal from the controller 11, while it displays information for a user of the image-capturing device 21 confirming the settings and conditions concerning photographing.

The strobe drive circuit 16 controls the strobe 17 to drive it when the brightness of a photographic object is low by a control signal from the controller 11 and makes the strobe emit light.

The strobe 17 has its battery voltage raised to a specified high voltage and accumulates electric charge in a condenser. Then, driven by the strobe drive circuit 16, it emits light from the X-tube by the high voltage due to the electric charge stored in the condenser, to irradiate the photographic object by assistant light.

The focal distance adjusting circuit 18 moves the lens 1 by a control signal from the controller 11 to practice a control of the motor 20 for adjusting the focal distance.

The auto-focus drive circuit 19 moves the lens 1 by a control signal from the controller 11 to practice a control of the motor 20 for adjusting the focus.

(OPERATION OF IMAGE-CAPTURING DEVICE 21)

In the following, the operation will be explained.

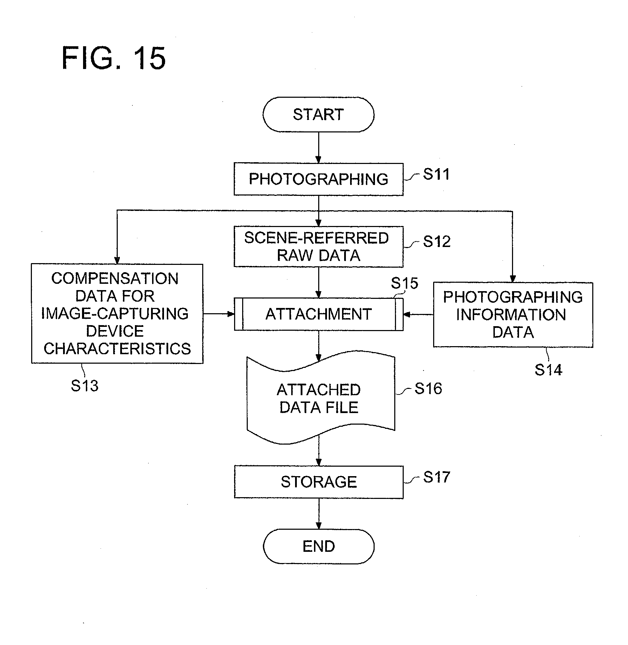

Fig. 15 is a flow chart showing a scene-referred raw data saving processing to be practiced by a control of the controller 11 when the output of photographed digital image data as scene-referred raw data is set by the operation section 14, and the release switch is depressed. In the following, scene-referred raw data saving processing will be explained with reference to Fig. 15.

When the release button of the operation section 14 is depressed, the controller 11 controls the pertinent sections to practice photographing (step S11). The pickup image signals obtained from the CCD 3 are converted into digital image data by the A/D converter 5, to generate scene-referred raw data (step S12). Further, correction data for image-capturing device characteristics d1 are generated by the correction information processor for apparatus characteristics 13 (step 13), and photographing information data d3 are generated by the photographing information data processor 12 (step S14).

After the generation of scene-referred raw data d2, correction data for image-capturing device characteristics d1, and photographing information data d3, the correction data for image-capturing device characteristics d1 and the photographing information data d3 are recorded and attached at the file header of the scene-referred raw data d2 (step S15), a data file having both the data already attached is prepared (step S16), and this data file having both the data attached is recorded and saved in a recording medium of the storage device 9 which has such a structure as to be capable of being mounted to and dismounted from the image-capturing device 21 (step S17).

Fig. 9 is a drawing showing the data structure of digital image data to be recorded in a recording medium of the storage device 9 at the step S17. As shown in Fig. 9, digital image data obtained by photographing are recorded as scene-referred raw data d2, and at the header area of it, correction data for image-capturing device characteristics d1 and photographing information data d3 are recorded. By taking out this recording medium from the image-capturing device 21, and loading it in an external apparatus such as an image processing apparatus, or an image recording apparatus, it is possible to output scene-referred raw data d2, correction data for image-capturing device characteristics d1, and photographing information data d3 to the above-mentioned external apparatus.

(STRUCTURE OF IMAGE PROCESSING APPARATUS 117)

Next, the embodiment of an image processing apparatus of this invention will be explained.

First, the structure will be explained.

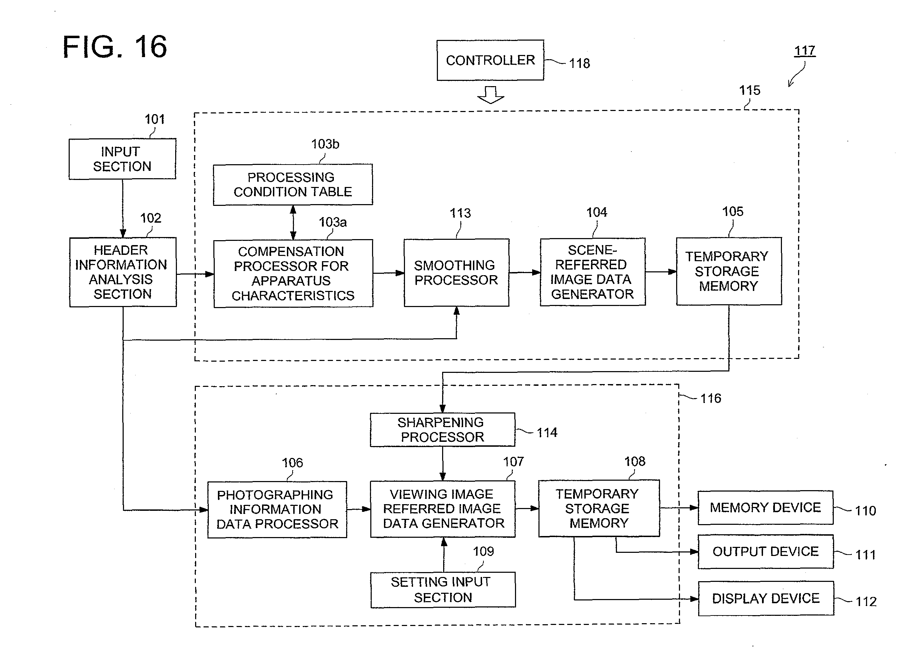

Fig. 16 is a block diagram showing the functional structure of an image processing apparatus 117 of this invention. As shown in Fig. 16, the image processing apparatus 117 consists of an input section 101, a header information analysis section 102, a correction processor for image-capturing device characteristics 115 for applying a correction processing for image-capturing device characteristics to scene-referred raw data d2 on the basis of correction data for image-capturing device characteristics d1 to generate scene-referred image data d4, and an optimization processor 116 for applying an optimization processing to the scene-referred image data d4 generated by the correction processor for image-capturing device characteristics 115 to generate viewing image referred image data d5. The header information analysis section 102 is connected to each of the correction processor for image-capturing device characteristics 115 and the optimization processor 116, and further, the optimization processor 116 is in a state of being capable of connection to each of a storage device 110, an output device 111, and a display device 112. The above-mentioned structural components operate under the presiding control of a controller 118 made up of a CPU, etc.

The input section 101 is equipped with a recording medium loading section (not shown in the drawing). when a recording medium having a file (refer to Fig. 9) of digital image data (captured-image data) obtained through photographing by the above-mentioned image-capturing device 21 recorded on it is loaded in this loading section, the input section 101 reads out the data file having image data recorded to output it to the header information analysis section 102. Besides, in this embodiment of the invention, the input section 101 is explained as reads out data from a recording medium loaded; however, it is also appropriate that a data communication cable or a wireless or wired communication means is provided, and data are inputted through any one of these communication means.

The header information analysis section 102 analyzes data inputted from the input section 101, divides the data into scene-referred raw data d2, correction data for image-capturing device characteristics d1, and photographing information data d3, and outputs the correction data for image-capturing device characteristics d1 to a correction processor for apparatus characteristics 103a, the scene-referred raw data d2 to a smoothing processor 113, and the photographing information data to a photographing data processor 106.

As shown in Fig. 16, the correction processor for pickup image apparatus characteristics 115 has a structure comprising the correction processor for apparatus characteristics 103a, a processing condition table 103b, the smoothing processor 113, a scene-referred image data generator 104, and a temporary storage 105. the correction processor for pickup image apparatus characteristics 115 has a function as a scene-referred image data generation means of an image processing apparatus as set forth in the claims of this invention.

When correction data for image-capturing device characteristics d1 are inputted from the header information analysis section 102, the correction processor for apparatus characteristics 103a determines the generation condition of scene-referred image data d4 by referring to the processing condition table 103b. The processing condition table 103b is a table storing processing conditions for generating scene-referred image data d4 in correspondence to each of the image-capturing device characteristics.

The smoothing processor 113 applies, for example, an orthogonal transformation such as a DCT (Discrete Cosine Transformation), a Fourier transformation, or a multi-resolution transformation such as a orthogonal wavelet transformation to the scene-referred raw data d2 inputted from the header information analysis section 102 to divide them into pertinent frequency ranges, applies a smoothing processing to them by the use of a frequency range reducing filter, and outputs them to the scene-referred image data generator 104. The smoothing processing is carried out by the use of a filter which changes the mask sizes, the mask shapes, and the threshold values for the comparison with the difference of pixel values between a pixel of remark and its surrounding pixels on the basis of the characteristic of noises. The smoothing processor 113 has the function as a smoothing processing means of an image processing apparatus as set forth in the claims of this invention.

The scene-referred image data generator 104 applies a correction processing for image-capturing device characteristics to the scene-referred raw data d2 inputted from the smoothing processor 113 on the basis of the generation condition determined by the correction processor for apparatus characteristics 103a, to generate standardized scene-referred image data which are independent of image-capturing device characteristics, and outputs them to the temporary storage 105. To state it concretely, in the correction processing for image-capturing device characteristics, at least a processing for mapping signal strength data of each of the color channels based on the spectral sensitivity specific to the image sensor of the image-capturing device having generated the scene-referred raw data d2 to a standard color space such as the aforesaid RIMM RGB or ERIMM RGB is included. The temporary storage 105 is made up of a buffer storage etc., and temporarily stores scene-referred image data d4 generated by the scene-referred image data generator 104.

As shown in Fig. 16, the optimization processor 116 has a structure equipped with a photographing information data processor 106, a viewing image referred image data generator 107, a temporary storage 108, a setting input section 109, and a sharpening processor 114. The optimization processor 116 has the function as a viewing image referred image data generation means of an image processing apparatus as set forth in the claims of this invention.

On the basis of the photographing information data d3 inputted from the header information processor 102, the photographing information data processor 106 determines generation conditions for generating viewing image referred image data d5 in accordance with the photographing conditions.

The setting input section 109, having operation information inputted concerning the kind and size of an output medium, to state it concretely, the kind of the storage device 110, the output device 111, and the display device 112, or the size of the output medium for the output of digital image data generated by this image processing apparatus 117, outputs this operation information to the viewing image referred image data generator 107.

When scene-referred image data d4 are read out from the temporary storage 105 and outputted to the sharpening processor 114, and a sharpening processing is applied to the scene-referred image data d4 by the sharpening processor 114, on the basis of the generation conditions of viewing image referred image data d5 determined for the image data by the photographing information data processor 106 and the operation information inputted from the setting input section 109, the viewing image referred image data generator 107 applies an optimization processing for obtaining an optimum image at the output end to the image data, to output the image data to the temporary storage 108 together with the operation information. In the optimization processing, for example, compression to the color gamut of the output medium, gradation compression from 16 bits to 8 bits, reduction of the output number of pixels, a processing to cope with the output characteristics (LUT) of the output device or the display device. Further, image processings such as a noise suppression processing, a color balance adjustment, a chroma adjustment, a dodging processing are also included.

The sharpening processor 114 applies edge enhancement processing to the inputted scene-referred image data d4 by an enhancement processing using Laplacian or a processing using an unsharp mask. As regards the amount of edge enhancement, by an adjustment in accordance with the kind and size of the output medium designated by the setting input section 109, a sharpening processing suitable to the output medium is practiced. Further, the sharpening processor 114 discriminates the size of the main photographic object in a viewing image, and adjusts the amount of edge enhancement in accordance with this size. Further, it discriminates the photographed scene in digital image data, and adjusts the amount of edge enhancement in accordance with the photographed scene. The sharpening processor 114 has the function as a sharpening processing means of an image processing apparatus as set forth in the claims of this invention.

The temporary storage 108 is a buffer storage or the like, and stores temporarily viewing image referred image data inputted from the viewing image referred image data generator 107.

(OPERATION OF IMAGE PROCESSING APPARATUS 117)

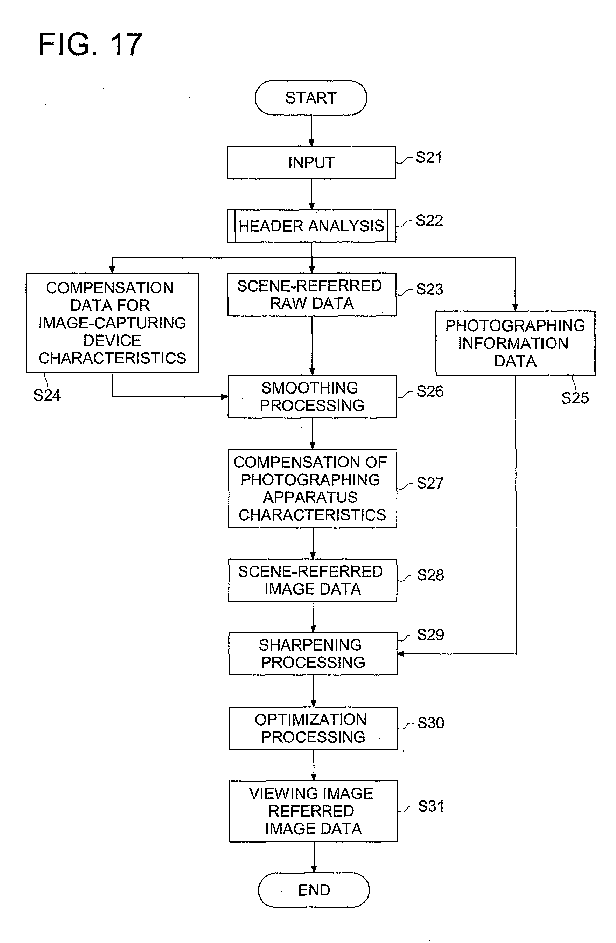

Fig. 17 is a flow chart showing an image data generation processing A to be practiced by the cooperation of the pertinent portions of the image processing apparatus 117. In the following, the operation of the image processing apparatus 117 will be explained with reference to the drawings.

When a recording medium having the data structure shown in Fig. 9 is loaded, the digital image data file recorded on the recording medium is inputted (step S21). As regards the inputted digital image data, its content is analyzed by the header information analysis section 102 (step S22), and is divided into scene-referred raw data d2 (step S23), correction data for image-capturing device characteristics d1 (step S24), and photographing information data d3 (step S25); the scene-referred raw data d2 and the correction data for image-capturing device characteristics d1 are outputted to the correction processor for image-capturing device characteristics 115, and the photographing information data are outputted to the optimization processor 116.

When the correction data for image-capturing device characteristics d1 are inputted to the correction processor for image-capturing device characteristics 115, the correction processor for apparatus characteristics 103a refers to the processing condition table 103b, and determines processing conditions for generating scene-referred image data d4. The scene-referred raw data d2 are subjected to a smoothing processing by the smoothing processor 113, on the basis of the processing conditions determined by the correction processor for apparatus characteristics 103a (step S26), are subjected to a correction processing for image-capturing device characteristics by the scene-referred image data generator 104 (step S27), and becomes scene-referred image data generated, which are stored in the temporary storage 105 (step S28).

When the photographing information data d3 are inputted to the optimization processor 116, processing conditions for generating viewing image referred image data in accordance with the photographing conditions are determined by the photographing information data processor 106 on the basis of the photographing information data d3. The scene-referred image data d4 are read out from the temporary storage 105 of the correction processor for image-capturing device characteristics 115, are subjected to a sharpening processing by the sharpening processor 114, on the basis of the processing conditions determined by the photographing information data processor 106 and the operation information inputted from the setting input section 109 (step S29), and are subjected to an optimization processing by the viewing image referred image data generator 107 (step S30), to become viewing image referred image data generated, which are outputted to the device designated by the setting input section 109 (step S31).

In addition, the block diagram shown in Fig. 16 and the flow chart shown in Fig. 17 are merely an example; as regards the processing by the smoothing processor 113, it is appropriate so long as it is practiced in the process of generating scene-referred image data d4 from scene-referred raw data d2, and as regards the processing by the sharpening processor 114, it is appropriate so long as it is practiced in the process of generating viewing image referred image data d5 from scene-referred image data d4; the process is not limited to the block diagram shown in Fig. 16 and the flow chart shown in Fig. 17. For example, it is also appropriate that scene-referred raw data d2 are outputted from the header information processor 102 to the scene-referred image data generator 104, and after being subjected to several correction processings for image-capturing device characteristics, are subjected to a smoothing processing in the smoothing processor 113. Further, it is also appropriate that scene-referred image data are read out from the temporary storage 105 by the viewing image referred image data generator 107, and after being subjected to several optimization processings, are subjected to a sharpening processing in the sharpening processor 114.

As explained in the foregoing, by the image processing apparatus 117, a smoothing processing is applied to digital image data inputted from the image-capturing device 21 in the process of generating scene-referred image data d4 from scene-referred raw data d2. The generation process of scene-referred image data d4 is a process to correct captured-image data for image-capturing device characteristics, and it is in a state such that the information volume (for example, the number of gray levels and the number of pixels) of the digital image data to become the object of processing is large, and the cause of noise generation, which is specific to each image-capturing device, is clearer; therefore, a more suitable smoothing processing can be practiced.

Further, by the image processing apparatus 117, a sharpening processing is applied to scene-referred image data d4 in the generation process of viewing image referred image data d5. The generation process of viewing image referred image data d5 is a process to practice image processings for optimizing digital image data in accordance with the output device or the output medium, and by the application of a sharpening processing in accordance with the output device or the output medium, a subjectively desirable image can be obtained on the output medium.

(STRUCTURE OF IMAGE RECORDING APPARATUS 201)

In the following, a desirable mode of practice of an image recording apparatus of this invention will be explained.

In addition, an image recording apparatus 201 in this embodiment 1 corresponds to an image recording apparatus as set forth in the structure (11) of this invention, the combination of a correction processor for image-capturing device characteristics 303a, a scene-referred image data generator 304, and a smoothing processor 313 has the function as a scene-referred image data generation means as set forth in the structure (11) of this invention, and the combination of a photographing information data processor 306, a viewing image referred image data generator 307, and a sharpening processor 314 has the function as a viewing image referred image data generation means as set forth in the structure (11) of this invention. Further, the smoothing processor 313 has the function as a smoothing processing means as set forth in the structure (11) of this invention, and the sharpening processor 314 has the function as a sharpening processing means as set forth in the structure (11) of this invention.

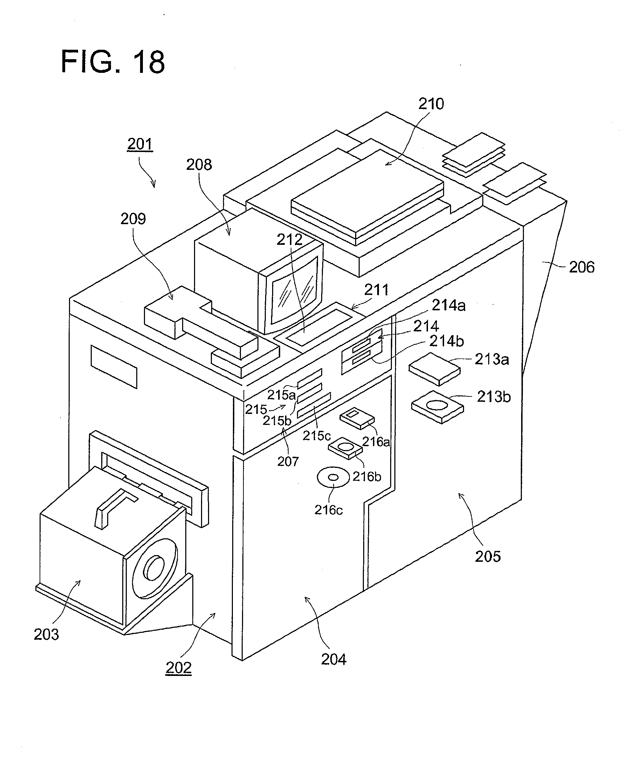

Fig. 18 is a perspective view showing the outside structure of the image recording apparatus 201 of this invention. The image recording apparatus in this mode of practice is an example of the apparatus which is equipped with a CRT display monitor as a display device, and an output device using a silver halide photographic paper as an output medium.

In the image recording apparatus 201, there are provided a magazine loading section 203 at the left side of the mainframe 202, an exposure processor 204 for exposing to light a silver halide photographic paper as an output medium inside the mainframe 202, and a print producing section 205 for producing a print through the application of a development processing to the exposed silver halide photographic paper and drying it. The produced print is ejected to a tray 206 provided at the right side of the mainframe 202. Further, inside the mainframe 202, a controller 207 is provided at a position above the exposure processor 204.

Further, on the upper surface of the mainframe 202, a CRT 208 is disposed. This CRT 208 has the function of a display means for displaying the image of the image information for which a print is to be produced. At the left side of the CRT 208, a film scanner section 209, which is a transmission original reading device, is disposed, and at the right side of the CRT 208, a reflection copy input device 210 is disposed.

For an original to be read by the film scanner section 209 or the reflection copy input device 210, a photographic photosensitive material can be cited. For this photographic photosensitive material, a color negative film, a color reversal film, a black-and-white negative film, a black-and-white reversal film, etc. can be cited, and frame image information obtained by the photographing of an object by means of an analog camera is recorded on them. A film scanner in the film scanner section 209 can convert this recorded frame image information into digital image data, to generate frame image data. Further, in the case where the photographic photosensitive material is a color paper, which is a silver halide photographic paper, the frame image information is converted into frame image data by the flat bed scanner of the reflection copy input device 210.

At the position where the controller 207 is disposed in the mainframe 202, there is provided an image data reading section 214. The image data reading section 214 is equipped with an adapter for a PC card 214a and an adapter for an FD (floppy (registered trade mark) disk) 214b, and it is possible to insert a PC card 213a and an FD 213b into them respectively. The PC card 213a has a storage having image data of a plurality of image frames obtained by the image pickup using a digital camera stored. The FD 213b has image data of a plurality of image frames obtained by the image pickup using, for example, a digital camera stored.

At this side of the CRT 208, an operation section 211 is disposed, and this operation section 211 is equipped with an information input means 212. The information input means 212 consists, for example, of a touch panel, or the like.

For a recording medium having frame image data of this invention other than the above-mentioned, a multi-media card, a memory stick, an MD data, a CD-ROM, etc. can be cited. In addition, the apparatus has a structure that the operation section 211, the CRT 208, the film scanner section 209, the reflection copy input device 210, and the image data reading section 214 are integrally built in the mainframe 202, but it is also appropriate to provide any one or more of them as a separate body.

Further, at the position where the controller 207 is disposed in the mainframe 202, an image data writing section 215 is provided. The image data writing section 215 is equipped with an adapter for an FD 215a, an adapter for an MO 215b, and an adapter for an optical disk 215c; it is possible to insert an FD 216a, an MO 216b, and an optical disk 216c into them respectively, to make it possible to write image information in an image recording medium.

Further, the controller 207 is equipped with a communication means (not shown in the drawing), which makes it possible for the controller to receive image data representing pickup image and a print instruction directly from another computer in the same facilities or a computer located at a remote site connected through a network, to make the image recording apparatus function as what is called a network image output apparatus.

(INTERNAL STRUCTURE OF IMAGE RECORDING APPARATUS 201)

Next, the internal structure of the image recording apparatus 201 will be explained.

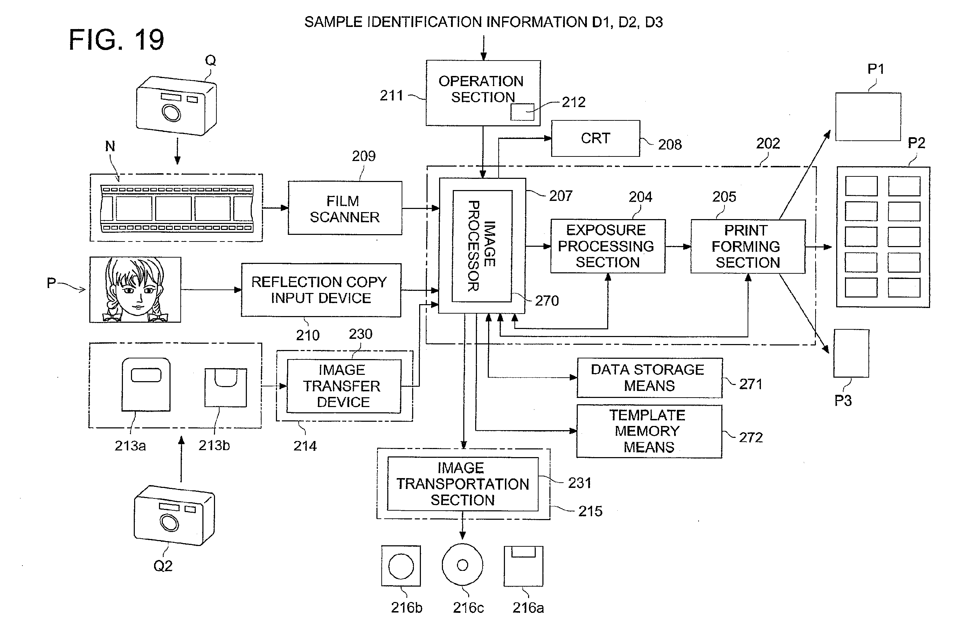

Fig. 19 is a block diagram showing the internal structure of the image recording apparatus 201.

The controller 207 of the image recording apparatus 201 is composed of a CPU (Central Processing Unit), a storage section, etc. The CPU reads out various kinds of control program stored in the storage section, and executes a concentrated control of the pertinent parts making up the image recording apparatus in accordance with said control programs read out.

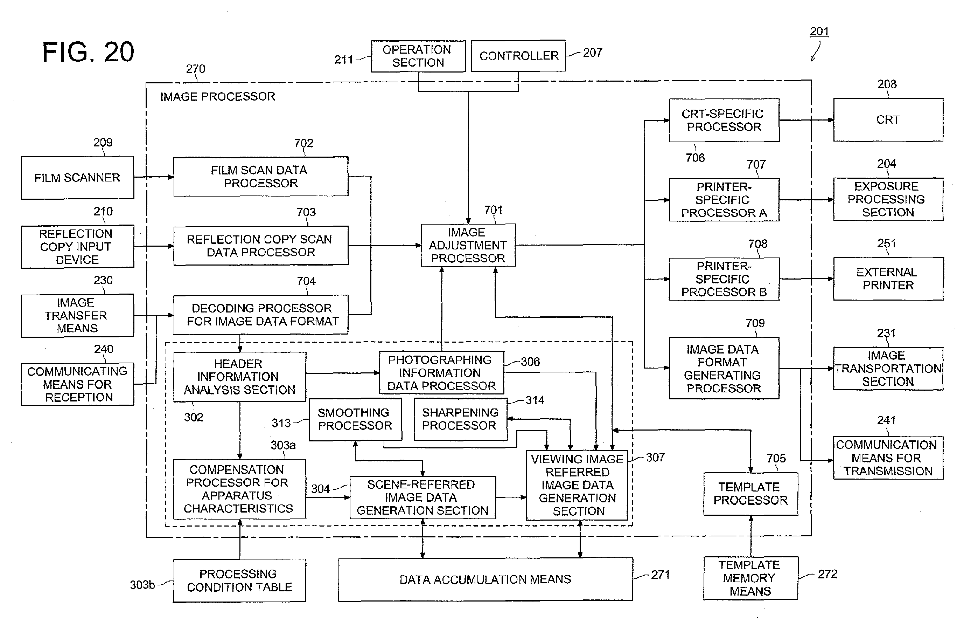

Further, the controller 207 comprises an image processor 270, and applies image processing, on the basis of an input signal from the information input means 212 of the operation section 211, to image data obtained by making the film scanner section 209 or the reflection copy input section 210 read an original image, to image data read out from the image data reading section 214, and to image data inputted from external equipment through a communication means (input) 240 (shown in Fig. 20). Further, in the image processor 270, a transformation processing in accordance with the mode of output is applied to the image data having been subjected to the image processing, and the image data are outputted as a print P1, P2, or P3, or by means of the CRT monitor 208, image data writing section 215, the communication means (output) 241, or the like.

In the operation section 211, there is provided the information input means 212. The information input means 212 is made up, for example, of a touch panes or the like, and outputs its depression signal as an input signal to the controller 207. Further, the operation section 211 may have a structure equipped with a keyboard and a mouse.

The film scanner section 209 reads a frame image of a developed negative film N obtained by the developing of a negative film subjected to photographing by an analog camera, to generate frame image data, and the reflection copy input device 210 reads a frame image of a print P obtained by the exposing of a color paper as a silver halide photographic paper to the frame image and the application of a development processing to it, to generate frame image data.

The image data reading section 214 has the function such that it reads out and transfers frame image data of the PC card 213a or the FD 213b which have been obtained through the photographing by means of an analog camera and stored. That is, the image data reading section 214 is equipped with an adapter for a PC card, an adapter for an FD, etc. as an image transfer means 230, and reads out frame image data recorded in the PC card 213a loaded in the adapter for a PC card 214a or in the FD 213b loaded in the adapter for an FD 214b, and transfers them to the controller 207. For the adapter for a PC card 214a, for example, a PC card reader, a PC card slot, or the like is used.

A data accumulation means 271 stores image information and order information (information on how many prints are to be produced from image data of which frame, information on print size, etc.) corresponding to the image information, and accumulates them successively.

A template storage means 272 stores sample image data (data indicating a background image, an illustration image, or the like) and the data of at least one template for defining a composite area with said sample image data, in correspondence to sample identification information D1, D2, and D3. Here, when a specified template is selected out of a plurality of templates stored beforehand in the template storage means 272 by the operation of an operator (this operation of an operator is based on the instruction of a client), the controller 207 combines frame image information and said selected template, subsequently, when any one of three kinds of sample identification information D1, D2, and D3 is designated by the operation of the operator (this operation of an operator is based on the instruction of a client), the controller selects sample image data on the basis of said selected any one of three kinds of sample identification information D1, D2, and D3, and combines said selected sample image data with the image data and/or character data based on the order of the client, to produce a print based on the sample image data desired by the client as the result. This composition processing using a template is carried out by a well-known chroma key method.

In addition, as regards the sample identification information, the kinds of it is not limited to the three kinds D1, D2, and D3, but they may be more than three or less than three.

Further, in the above-mentioned description, the three kinds of sample identification information D1, D2, and D3 for designating the sample of a print are to be inputted from the operation section 211, but because the three kinds of sample identification information D1, D2, and D3 are recorded in a print sample, or in an order sheet, they can be read by a reading means such as an OCR. In another way, they can be inputted from a keyboard by an operator.

In this way, sample image data are recorded beforehand in correspondence to sample identification D1 designating a sample of a print, the sample identification information D1 to designate a sample of a print is inputted, a sample image data are selected on the basis of this inputted sample identification information D1, and the selected sample image data and image data and/or character data based on the order are combined together to become composite data, from which a print based on the designated sample is produced; therefore, it is possible for a user to make an order for a print with various kinds of life-size sample taken in hands, and this method makes it possible to respond diversified demands of wide-ranging users.

Further, the first-kind sample identification information D2 for designating a first sample and image data of the first sample are stored, and the second-kind sample identification information D3 for designating a second sample and image data of the second sample are stored, sample image data selected on the basis of the first-kind and the second-kind sample identification information D2 and D3 to be designated are combined with image data and/or character data based on an order to become composite data, from which a print based on the designated sample is produced; therefore, it is possible to compose more diversified images of more kinds, and it is possible to produce a print responding to diversified demands of wider-ranging users.

The exposure processor 204 applies an exposure processing to a photosensitive material in accordance with image data for output which are generated from image data subjected to image processing in the image processor 270, and sends this photosensitive material to the print producing section 205. The print producing section 205 applies a development processing to the exposed photosensitive material and dries it, to produce a print P1, P2, or P3. The print P1 is of the service size, of the high-vision size, of the panorama size, or the like, the print P2 is of the A4 size, and the print P3 is of the calling-card size.

In addition, the print sizes are not limited to the prints P1, P2, and P3, but any other size may be possible.

The monitor 208 is made up of a CRT, an LCD, or the like, and displays image information inputted from the controller 207.

The image data writing section 215 is equipped with an adapter for an FD 215a, an adapter for an MO 215b, and an adapter for an optical disk 216c as an image transport section 231; it is possible to insert an FD 216a, an MO 216b, and an optical disk 216c respectively into them, and the image data writing section 215 makes it possible to write image data in an image recording medium.

Further, it is also possible that the image processor 270, using the communication means (input) 240 (shown in Fig. 20), receives image data representing a pickup image and an operation instruction such as printing directly from another computer in the same facilities or a computer located at a remote site connected through the Internet or the like, and practices image processing or produces a print by a remote-control operation.

Further, it is also possible that the image processor 270, using a communication means (output) 241 (shown in Fig. 20), transmits image data after being subjected to image processing of this invention and incidental order information to another computer in the same facilities or to a computer located at a remote site connected through the Internet or the like.

As explained in the above, the image recording apparatus 201 comprises an input means for taking image information of various kinds of digital medium and image information obtained by reading an original image, an image processing means for practicing processings so as to produce an image giving a good impression to a person observing the image on an output medium by obtaining or estimating the information on the "size of the viewing image" and the "size of the main photographic object in the viewing image" from the image information of an input image taken from this input means, an image output means for displaying, outputting as a print, or writing in an image recording medium the processed image data, and a communication means (transmission) for transmitting image data and incidental order information to another computer in the same facilities connected through a communication network or a computer located at a remote site connected through the Internet or the like.

(STRUCTURE OF IMAGE PROCESSOR 270)

Fig. 20 is a block diagram showing the functional structure of the image processor 270 of this invention. Image data inputted from the film scanner section 209 are subjected to a correction operation specific to the film scanner section, negative-to-positive reversing in the case of a negative original, removal of dusts and scratches, a gray balance adjustment, a contrast adjustment, removal of a granular noise, a sharpness enhancement, etc. in a film scanner data processor 702, and are sent to an image adjustment processor 701. Further, information on film size, information concerning whether a film is negative or positive, information concerning the main photographic object recorded optically or magnetically on a film, information concerning the photographing conditions (for example, the content of noted information in APS (Advanced Photo System)), etc. are outputted together to the image adjustment processor 701.

Image data inputted from the reflection copy input device 210 are subjected, in a reflection copy scan data processor 703, to a correction operation specific to the reflection copy input device 210, a negative-to-positive reversing processing in the case of a negative original, removal of dusts and scratches, a gray balance adjustment, a contrast adjustment, removal of a noise, a sharpness enhancement, etc., and are outputted to the image adjustment processor 701.

Image data inputted from the image transfer means 230 or the communication means (input) 240 are subjected, as occasion demands, to decoding of compressed codes, transformation of color data representation system, etc. in accordance with the data format of the data, being transformed into a data format suitable to the operation in the image processor 270, and are outputted to the image adjustment processor 701. Further, a decoding processor for image data format 704 judges whether or not image data of a format depending on the above-mentioned image-capturing device are inputted from the image transfer means 230 or the communication means (input) 240, and if it judges that image data are inputted from the image transfer means 230 or the communication means (input) 240, it outputs the inputted image data to a header information analysis section 302. In the header information analysis section 302, input image data are analyzed, and divided into correction data for image-capturing device characteristics d1, scene-referred raw data d2, and photographing information data d3.

The designation of the size of a viewing image is inputted from the operation section 211, and in the case where, in addition to the above-mentioned, there is a designation about the size of a viewing image transmitted to the communication means (input) 240, or a designation of the size of a viewing image which is buried in the header information/tag information of image data obtained by the image transfer means 230, the decoding processor for image data format 704 detects said information, and transfers it to the image adjustment processor 701.

Correction data for image-capturing device characteristics d1 analyzed by the header information analysis section 302 are outputted to a correction processor for apparatus characteristics 303a, and image processing conditions are determined on the basis of a processing condition table 303b.

The smoothing processor 313 applies, for example, an orthogonal transformation such as a DCT (Discrete Cosine Transformation), a Fourier transformation, or a multi-resolution transformation such as an orthogonal wavelet transformation to the scene-referred raw data d2 inputted from the header information analysis section 302 to divide them into pertinent frequency ranges, practices the smoothing of an image by the use of a low-pass filter of frequency ranges, and outputs them to a scene-referred image data generator 304. The smoothing processing is carried out by the use of a filter which changes the mask sizes, the mask shapes, and the threshold values for the comparison with the difference of pixel values between a pixel of remark and its surrounding pixels on the basis of the characteristic of noises.

The scene-referred image data generator 304 applies a correction processing for image-capturing device characteristics to the scene-referred raw data d2 inputted from the smoothing processor 313 on the basis of the generation condition determined by the correction processor for apparatus characteristics 303a, to generate standardized scene-referred image data which are independent of image-capturing device characteristics, and outputs them to a viewing image referred image data generator 307. To state it concretely, in the correction processing for image-capturing device characteristics, at least a processing for mapping signal strength data of each of the color channels based on the spectral sensitivity specific to the image sensor of the image-capturing device having generated the scene-referred raw data d2 to a standard color space such as the aforesaid RIMM RGB or ERIMM RGB is included.

The photographing image data analyzed by the header information analysis section 302 are outputted to the photographing information data processor 306, and image processing conditions concerning the generation of viewing image referred image data are determined.

On the basis of an instruction from the operation section 211 and the controller 207, the image adjustment processor 701 transfers image processing conditions for generating viewing image referred image data d5 adapted to the output medium to the viewing image referred image data generator 307.

A sharpening processor 314 practices an edge enhancement processing for inputted scene-referred image data d4 by an enhancement processing using Laplacian or a processing using an unsharp mask. As regards the amount of edge enhancement, by the adjusting of it in accordance with the kind and size of the output medium designated by the operation section 211, a sharpening processing suitable to the output medium is practiced. Further, the sharpening processor 314 discriminates the size of the main photographic object in a viewing image, and adjusts the amount of edge enhancement in accordance with this size. Further, it discriminates the photographed scene in a viewing image, and adjusts the amount of edge enhancement in accordance with the photographed scene.

On the basis of the image processing conditions produced by the photographing information data processor 306 and the image processing conditions transmitted from the image adjustment processor 701, the viewing image referred image data generator 307 applies an optimization processing to the inputted scene-referred image data d4 to generate viewing image referred image data d5, and outputs the image data to the image adjustment processor 701 together with the operation information. In the optimization processing, for example, compression to the color gamut of the output medium, gradation compression from 16 bits to 8 bits, reduction of the output number of pixels, a processing to cope with the output characteristics (LUT) of the output device or the display device. Further, image processings such as a noise suppression processing, a color balance adjustment, a chroma adjustment, a dodging processing are also included.

The image adjustment processor 701 calls out specified image data (template) from the template storage means 272 if a template processing is required. It transfers image data to a template processor 705, where the data are combined with a template, and receives the image data after the template processing again. Further, the image adjustment processor 701, on the basis of an instruction of the operation section 211 or the controller 207, applies image processing so as to produce an image giving a good impression to a person observing the image on the output medium, to image data received from the film scanner section 209, the reflection copy input device 210, the image transfer means 230, the communication means (input) 240, and the template processor 705, to generate digital image data for output, and sends out the image data to a CRT-specific processor 706, a printer-specific processor (1) 707, an image data format generating processor 709, or the data accumulating means 271.

The CRT-specific processor 706 applies processings such as changing of the number of pixels and color matching to image data received from the image adjustment processor 701, and sends out composite image data for display obtained by combining the received image data with information requiring display such as control information to the CRT 208. The printer-specific processor 707 practices a correction processing as occasion demands, color matching, changing of the number of pixels, etc., and sends out image data to the exposure processor. In the case where an external printer 251 such as an ink jet printer of a large print size is further connected to the image recording apparatus 201 of this invention, it is practiced that a printer-specific processor (2) 708 is provided for each printer connected, and a proper correction processing specific to the printer, color matching, changing of the number of pixels, etc. are carried out.

The image data format generating processor 709 applies compression of data and transformation into various kinds of versatile image format represented by JPEG, TIFF, Exif, etc. as occasion demands to image data received from the image adjustment processor 701, and transfers the image data to the image transport section 231 or the communication means (output) 241.

Besides, viewing image referred image data d5 generated in the viewing image referred image data generator 307 are such that are premised on the processing in the CRT-specific processor 706, the printer-specific processor (1) 707, the printer-specific processor (2) 708, and the image data format generation processor 709 described in the above, and it is possible that, in the image data format generation processor 709, on the basis of the format of viewing image referred image data, a status file indicating that the data are optimized image data for the CRT, the exposure output section, an external printer, a communication means (output), or the like is attached to the image data, and the image data optimized for each output end with each status file attached are transmitted to the image transport section separately and are saved.

The above-mentioned sections, the film scan data processor 702, the reflection copy scan data processor 703, decoding processor for image data format 704, the image adjustment processor 701, the CRT-specific processor 706, the printer-specific processor (1) 707, the printer-specific processor (2) 708, and the image data format generation processor 709 are the sections provided for the purpose of assisting the comprehension of the function of the image processor 270, and it is unnecessary that they are always actualized as physically independent devices; it is also appropriate to actualize them, for example, as the sections of the kinds of software processing in a single CPU.

Further, the sections, the header information analysis section 302, the correction processor for apparatus characteristics 303a, the photographing information data processor 306, the scene-referred image data generator 304, the viewing image referred image data generator 307, the smoothing processor 313, and the sharpening processor 314 are the sections provided for the purpose of assisting the comprehension of the function of the image processor 270, and it is unnecessary that they are always actualized as physically independent devices; it is also appropriate to actualize them, for example, as the sections of the kinds of soft ware processing in a single CPU.

(OPERATION OF IMAGE PROCESSOR 270)

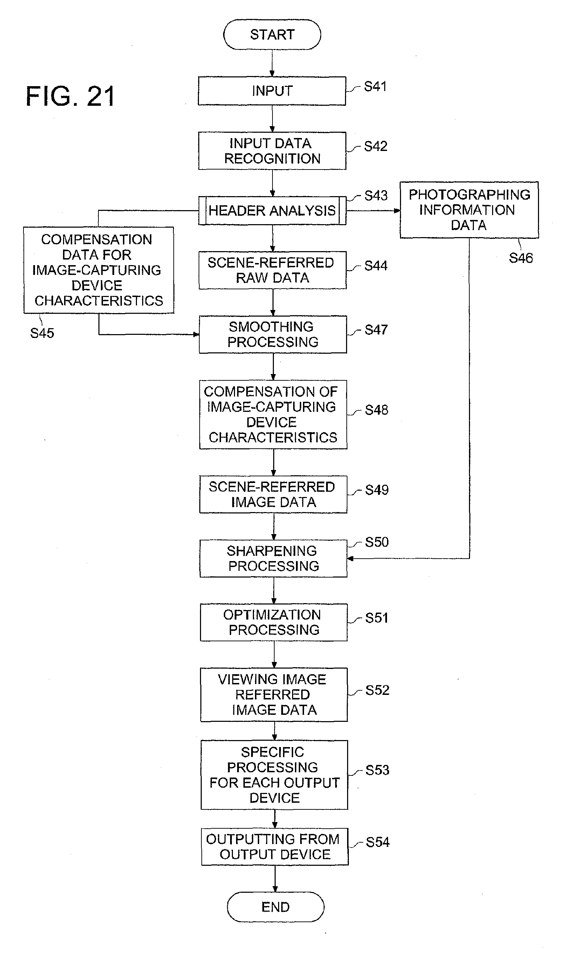

Fig. 21 is a flow chart showing an image data formation processing A to be practiced by the cooperation of the pertinent portions of the image processor 270. In the following, the operation of every part of the image processor will be explained with reference to the drawings.

When data are inputted from the image transfer means 230 or the communication means (input) 240 to the image processor 270 (step S41), and said inputted data are judged by the decoding processor for image data format 704 as a digital image data file obtained by the above-mentioned image-capturing device 21 (step S42), the content of the inputted digital image data file is analyzed by the header information analysis section 302 (step S43), and is divided into scene-referred raw data d2 (step S44), correction data for image-capturing device characteristics d1 (step S45), and photographing information data d3 (step S46).

The correction data for image-capturing device characteristics d1 are outputted to the correction processor for apparatus characteristics 303a, and by the correction processor for apparatus characteristics 303a referring to the processing condition table 303b, processing conditions for generating scene-referred image data d4 are determined. The scene-referred raw data d2 are subjected to a smoothing processing by the smoothing processor 313 on the basis of the processing conditions determined by the correction processor for apparatus characteristics 303a (step S47), and are subjected to a correction processing for image-capturing device characteristics by the scene-referred image data generator 304 (step S48), to become scene-referred image data d4 generated, which are outputted to the viewing image referred image data generator 307 (step S49).

When the photographing information data d3 are inputted to the photographing information data processor 306, processing conditions for generating viewing image referred image data d5 in accordance with the photographing conditions are determined on the basis of the photographing information data d3. Further, on the basis of an instruction from the operation section 211 and the controller 207, in the image adjustment processor 701, image processing conditions for generating viewing image referred image data d5 adapted to the kind and size of the device or the output medium of the output end are determined. The scene-referred image data d4 are subjected to a sharpening processing by the sharpening processor 314 on the basis of the processing conditions determined by the photographing information data processor 306 and the image processing conditions determined by the image adjustment processor 701 (step S50), and are subjected to an optimization processing by the viewing image referred image data generator 307 (step S51). Then, viewing image referred image data d5 are generated, and are outputted, in accordance with the output end, to any one of the processors, the CRT-specific processor 706, the printer-specific processor 707, the printer-specific processor 708, and the image data format generation processor 709 (step S52). The viewing image referred image data d5 are subjected to processings specific to the output end in accordance with it (step S53), and are outputted to the output end designated by the operation section 211 (step S54).

In addition, the flow chart shown in Fig. 21 is merely an example; as regards the processing by the smoothing processor 313, it is appropriate so long as it is practiced in the process of generating scene-referred image data d4 from scene-referred raw data d2, and as regards the processing by the sharpening processor 314, it is appropriate so long as it is practiced in the process of generating viewing image referred image data d5 from scene-referred image data d4; the process is not limited to the flow chart shown in Fig. 21. For example, it is also appropriate that scene-referred raw data d2 are outputted from the header information processor 302 to the scene-referred image data generator 304, and after being subjected to several correction processings for image-capturing device characteristics in the scene-referred image data generator 304, are subjected to a smoothing processing in the smoothing processor 313. Further, it is also appropriate that scene-referred image data, after being subjected to several optimization processings by the viewing image referred image data generator 307, are subjected to a sharpening processing in the sharpening processor 314.

As explained in the foregoing, by the image recording apparatus 201, a smoothing processing is applied to digital image data inputted from the image-capturing device 21 in the process of generating scene-referred image data d4 from scene-referred raw data d2. The generation process of scene-referred image data d4 is a process to correct captured-image data for image-capturing device characteristics, and it is in a state such that the information volume (for example, the number of gray levels and the number of pixels) of digital image data to become the object of processing is large, and the cause of noise generation, which is specific to each image-capturing device, is clearer; therefore, a more suitable smoothing processing can be practiced.

Further, by the image recording apparatus 201, a sharpening processing is applied to digital image data inputted from the image-capturing device 21 in the generation process of viewing image referred image data d5. The generation process of viewing image referred image data d5 is a process to practice image processing for optimizing digital image data in accordance with the output medium, and by the application of a sharpening processing in accordance with the output medium, a subjectively desirable image can be obtained on the output medium.

The image processing apparatus 117 and the image recording apparatus 201 of this embodiment 1 apply a smoothing processing to input data having comparatively large noises for the purpose of reducing the processing time. In this embodiment 1, a smoothing processor is provided in the image processing apparatus, but a smoothing processor can be provided in the image-capturing device. Because a sharpening processing is practiced in the process of generating viewing image referred image data in this embodiment 1, a sharpening processing is practiced before data compression is practiced. It has been found that, for this reason, a sharpening processing which is excellent in the sense of total balance with the color gamut and the gradation of the image can be practiced and a good image can be obtained on any one of output media of various kinds.

(EMBODIMENT 2)

In the following, the embodiment 2 of this invention will be explained with reference to the drawings.
In addition, in the embodiment 2, in the same manner as explained in the above-mentioned embodiment 1, it is shown an example using digital image data recorded by the image-capturing device 21.

(STRUCTURE OF IMAGE PROCESSING APPARATUS 117)

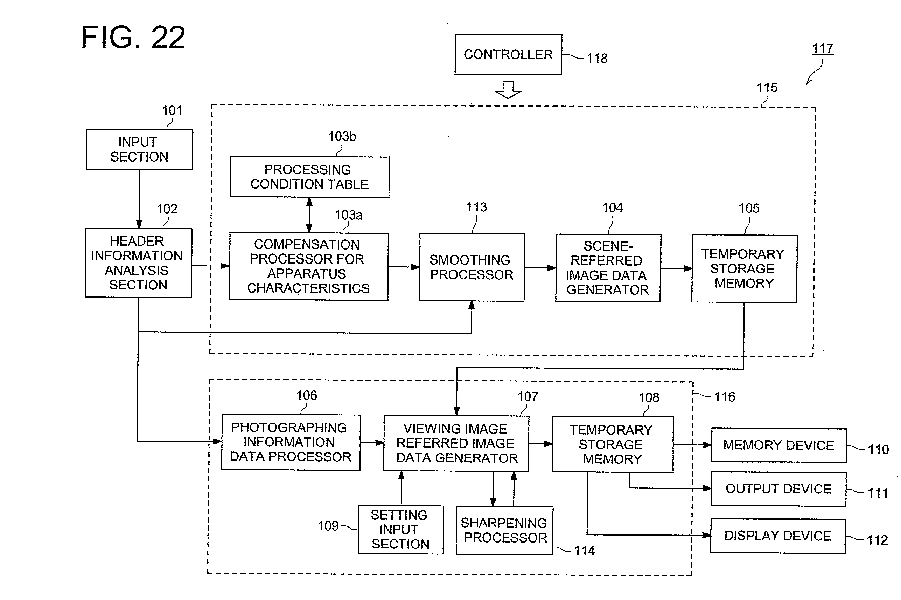

Fig. 22 is a block diagram showing the functional structure of an image processing apparatus 117 of this invention. As shown in Fig. 22, the arrangement of a sharpening processor 114 is different from that in the image processing apparatus 117 of the embodiment 1 shown in Fig. 16. That is, scene-referred image data d4 stored in a temporary storage 105 are read out by a viewing image referred image data generator 107 of an optimization processor 116, and are subjected to an optimization processing in accordance with the output end to become viewing image referred image data d5 generated. After that, the viewing image referred image data d5 are subjected to a sharpening processing by the sharpening processor 114, and sharpened viewing image referred image data d6 are generated.
The other parts of the structure of the image processing apparatus 117 of this embodiment 2 are the same as those of the above-mentioned embodiment 1; therefore, every component is given the same sign as that of the embodiment 1, and the explanation of the structure will be omitted.

(OPERATION OF IMAGE PROCESSING APPARATUS 117)

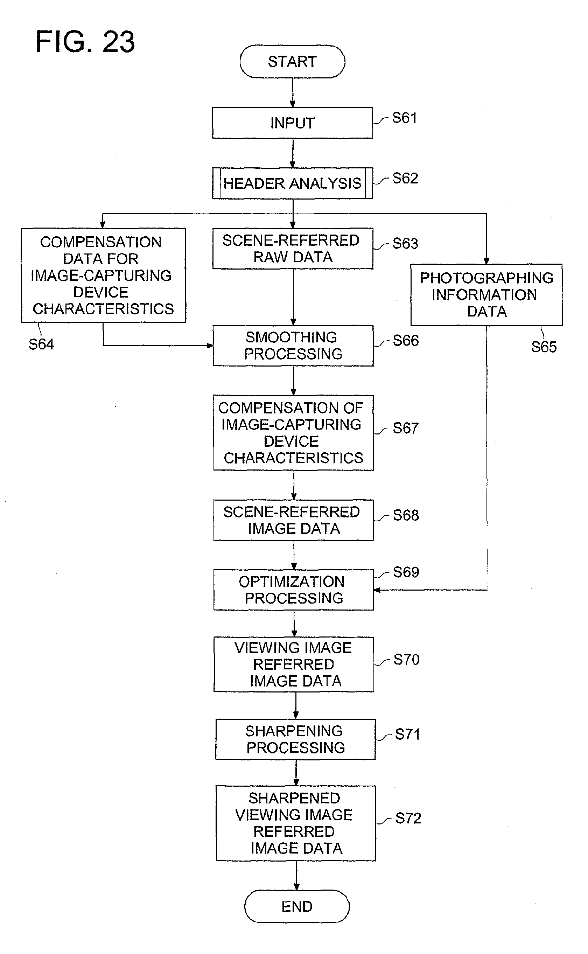

Fig. 23 is a flow chart showing an image data generation processing B to be practiced by the cooperation of the pertinent portions of the image processing apparatus 117. In the following, the operation of the image processing apparatus 117 will be explained with reference to the drawings.
When a recording medium having recorded a data file of the structure shown in Fig. 9 is loaded, the digital image data file recorded in the recording medium is inputted by the input section 101 (step S61). As regards the inputted digital image data, its content is analyzed by the header information analysis section 102 (step S62), and is divided into scene-referred raw data d2 (step S63), correction data for image-capturing device characteristics d1 (step S64), and photographing information data d3 (step S65); the scene-referred raw data d2 and the correction data for image-capturing device characteristics d1 are outputted to the correction processor for image-capturing device characteristics 115, and the photographing information data d3 are outputted to the optimization processor 116.
When the correction data for image-capturing device characteristics d1 are inputted to the correction processor for image-capturing device characteristics 115, the processing condition table 103b is referred to by the correction processor for apparatus characteristics 103a, and processing conditions for generating scene-referred image data d4 are determined. The scene-referred raw data d2 are subjected to a smoothing processing by the smoothing processor 113 on the basis of the processing conditions determined by the correction processor for apparatus characteristics 103a (step S66), are subjected to a correction processing for image-capturing device characteristics by the scene-referred image data generator 104 (step S67), to become scene-referred image data d4 generated, which are stored in the temporary storage 105 (step S68).
When the photographing information data d3 are inputted to the optimization processor 116, processing conditions for generating viewing image referred image data d5 in accordance with the photographing conditions are determined by the photographing information data processor 106 on the basis of the photographing information data d3. Scene-referred image data d4 are read out from the temporary storage 105, and on the basis of the processing conditions determined by the photographing information data processor 106 and the operation information inputted from the setting input section 109, are subjected to an optimization processing in accordance with the size of the device or the output medium of the output end (step S69), to become viewing image referred image data d5 generated (step S70). The generated viewing image referred image data d5 are subjected to a sharpening processing in the sharpening processor 114 (step S71), to become sharpened viewing image referred image data d6 generated, which are outputted to the device designated by the setting input section 109 (step S72).
In addition, the block diagram shown in Fig. 22 and the flow chart shown in Fig. 23 are merely an example; as regards the processing by the smoothing processor 113, it is appropriate so long as it is practiced in the process of generating scene-referred image data d4 from scene-referred raw data d2; the process is not limited to the block diagram shown in Fig. 22 and the flow chart shown in Fig. 23. For example, it is also appropriate that scene-referred raw data d2 are outputted from the header information processor 102 to the scene-referred image data generator 104, and after being subjected to several correction processings for image-capturing device characteristics, are subjected to a smoothing processing in the smoothing processor 113.

As explained in the foregoing, by the image processing apparatus 117, a smoothing processing is applied to digital image data inputted from the image-capturing device 21 in the process of generating scene-referred image data d4 from scene-referred raw data d2. The generation process of scene-referred image data d4 is a process to correct captured-image data for image-capturing device characteristics, and it is in a state such that the information volume (for example, the number of gray levels and the number of pixels) of digital image data to become the object of processing is large, and the cause of noise generation, which is specific to each image-capturing device, is clearer; therefore, a more suitable smoothing processing can be practiced.

Further, by the image processing apparatus 117, a sharpening processing is applied to scene-referred image data d4 after the generation process of viewing image referred image data d5. For that reason, in a case such that viewing image referred image data d5 generated through the application of an optimization processing based on the specified kind of the output device or the output medium are outputted to the output device or the output medium of the same kind with the size of the output media changed, an optimization processing becomes unnecessary; therefore, the processing load can be lightened.

(STRUCTURE OF IMAGE RECORDING APPARATUS 201)

Next, the structure and the operation of an image recording apparatus 201 of the embodiment 2 of this invention will be explained. In addition, because the outside structure and the internal structure of the image recording apparatus 201 and the structure of an image processor 270 of this embodiment 2 are the same as those of the above-mentioned embodiment 1 except that the order of data processing is different, the feature is to be explained in the explanation of the operation; further, every structural component is given the same sign as that of the embodiment 1, and it will be omitted to show the structure in the drawings and the explain it. Further, the image recording apparatus 201 of this embodiment 2 is one corresponding to an image recording apparatus as set forth in the structure (12) of this invention, the combination of the correction processor for image-capturing device characteristics 303a, the scene-referred image data generator 304, and the smoothing processor 313 together has the function of a scene-referred image data generation means as set forth in the structure (12) of this invention, and the combination of the photographing information processor 306, the viewing image referred image data processor 307, and the sharpening processor 314 together has the function of a viewing image referred image data generation means as set forth in the structure (12) of this invention. Further, the smoothing processor 313 has the function of a smoothing processor as set forth in the structure (12) of this invention, and the sharpening processor 314 has the function of a sharpening processor as set forth in the structure (12) of this invention.

(OPERATION OF IMAGE RECORDING APPARATUS 201)

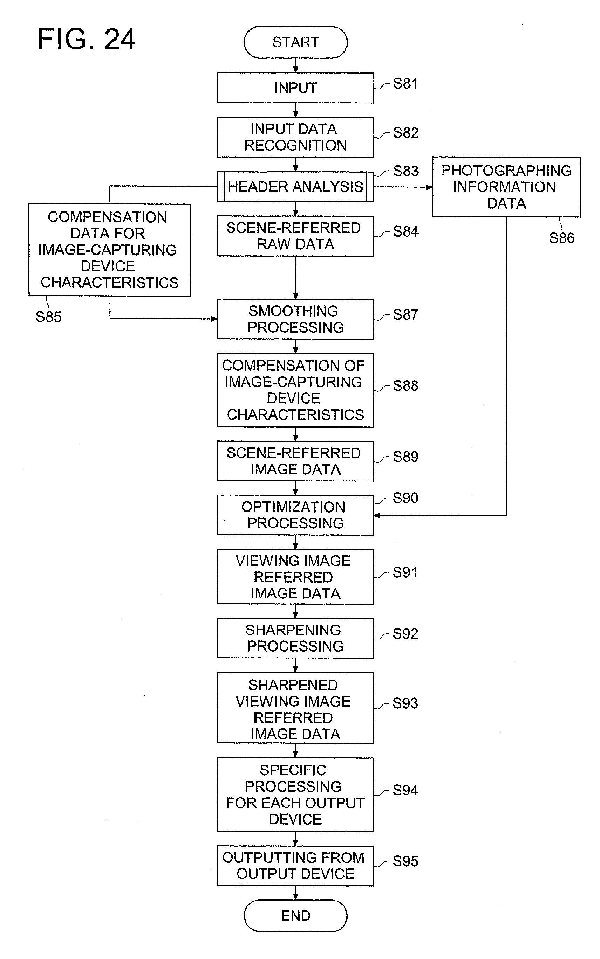

Fig. 24 is a flow chart showing an image data formation processing B to be practiced by the cooperation of the pertinent portions of the image processor 270. In the following, the operation of every part of the image processor 270 will be explained with reference to the drawings.

Data are inputted from the image transfer means 230 or the communication means (input) 240 to the image processor 270 (step S81), and when said inputted data are judged by the decoding processor for image data format 704 as a digital image data file obtained by the aforesaid image-capturing device 21 (step S82), as regards the inputted digital image data file, its content is analyzed by the header information analysis section 302 (step S83), and is divided into scene-referred raw data d2 (step S84), correction data for image-capturing device characteristics d1 (step S85), and photographing information data d3 (step S86).

The correction data for image-capturing device characteristics d1 are outputted to the correction processor for apparatus characteristics 303a, and processing conditions for generating scene-referred image data are determined by the correction processor for apparatus characteristics 303a referring to the processing condition table 303b. The scene-referred raw data d2 are subjected to a smoothing processing by the smoothing processor 313 on the basis of the processing conditions determined by the correction processor for apparatus characteristics 303a (step 87), and are subjected to a correction processing for image-capturing device characteristics by the scene-referred image data generator 304 (step S88), to become scene-referred image data d4 generated, which are outputted to the viewing image referred image data generator 307 (step S89).

When the photographing information data d3 are inputted to the photographing information data processor 306, processing conditions for generating viewing image referred image data d5 in accordance with the photographing conditions are determined on the basis of the photographing information data d3. Further, on the basis of an instruction from the operation section 211 and the controller 207, in the image adjustment processor 701, image processing conditions for generating viewing image referred image data d5 adapted to the output device and the output medium are determined. The scene-referred image data d4 are subjected to an optimization processing by the viewing image referred image data generator 307 in accordance with the size of the output device and the output medium of the output end, on the basis of the processing conditions determined by the photographing information data processor 306 and the image processing conditions determined by the image adjustment processor 701 (step S90), to become viewing image data generated (step S91) .

The generated viewing image referred image data d5 are subjected to a sharpening processing by the sharpening processor 314 (step S92), to become sharpened viewing image referred image data d6 generated, which are outputted to any one of the processors, the CRT-specific processor 706, the printer-specific processor 707, the printer-specific processor 708, and the image data format generation processor 709 in accordance with the output end based on the operation at the operation section 211 (step S93). The sharpened viewing image referred image data d6 are subjected to a processing specific to the output end in accordance with it in the processor to which the data are outputted (step S94), and are outputted to the output end designated by the operation section 211 (step S95).

In addition, the flow chart shown in Fig. 24 is merely an example; as regards the processing by the smoothing processor 313, it is appropriate so long as it is practiced in the process of generating scene-referred image data d4 from scene-referred raw data d2, the process is not limited to the flow chart shown in Fig. 24. For example, it is also appropriate that scene-referred raw data d2 are outputted to the scene-referred image data generator 304 by the header information processor 302, and after being subjected to several correction processings for image-capturing device characteristics in the scene-referred image data generator 304, are subjected to a smoothing processing in the smoothing processor 313.

As explained in the foregoing, by the image recording apparatus 201, a smoothing processing is applied to digital image data inputted from the image-capturing device 21 in the process of generating scene-referred image data d4 from scene-referred raw data d2. The generation process of scene-referred image data d4 is a process to correct captured-image data for image-capturing device characteristics, and it is in a state such that the information volume (for example, the number of gray levels and the number of pixels) of digital image data to become the object of processing is large, and the cause of noise generation, which is specific to each image-capturing device, is clearer; therefore, a more suitable smoothing processing can be practiced.

Further, by the image recording apparatus 201, a sharpening processing is applied to scene-referred image data d4 after the generation process of viewing image referred image data d5. For that reason, in a case such that viewing image referred image data d5 generated through the application of an optimization processing based on the specified kind of the output device and the output medium are outputted to the output device and the output medium of the same kind with the size of the output media changed, an optimization processing becomes unnecessary; therefore, the processing load can be lightened.

As described in the above, by the structure of this embodiment 2, scene-referred raw data, scene-referred image data having been subjected to a smoothing processing, and viewing image referred image data having been subjected to a smoothing processing and a sharpening processing can be obtained. As regards the smoothing processing of this embodiment 2, for the purpose of reducing the processing time, it is applied to input data having comparatively large noises. A smoothing processor is provided in the image processing apparatus in this embodiment 2, but a smoothing processor can be also provided in the image-capturing device. Because a sharpening processing is practiced in a process after a viewing image referred image data generation processing, a sharpening processing can be practiced on the basis of output information. It has been found out that, for this reason, an image having a very excellent sharpness can be obtained for a specified output medium. Further, it has been found that shortening of the processing time can be achieved, because a sharpening processing is applied to viewing image referred image data having a comparatively small image size.

EMBODIMENT 3

In the following, the embodiment 3 of this invention will be explained with reference to the drawings.

In addition, in this embodiment 3, it is shown an example using digital image data recorded by the image-capturing device 21 in the same way as explained in the above-mentioned embodiment 1.

(STRUCTURE OF IMAGE PROCESSING APPARATUS 117)

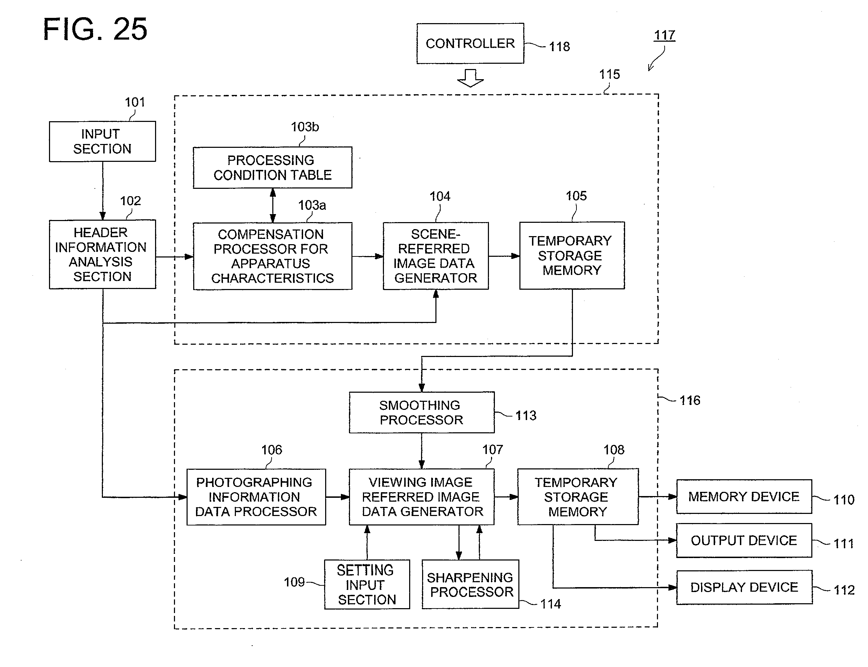

Fig. 25 is a block diagram showing the functional structure of an image processing apparatus 117 of this embodiment 3. As shown in Fig. 25, in this embodiment, the arrangement of the smoothing processor 113 and the sharpening processor 114 is different from that of the image processing apparatus 117 of the embodiment 1 shown in Fig. 16. That is, scene-referred image data d4, which have been generated by the application of a correction processing for image-capturing device characteristics to scene-referred raw data d2, are stored in the temporary storage 105, are read out by the smoothing processor 113 of the optimization processor 116, are subjected to a smoothing processing, are subjected to a sharpening processing by the sharpening processor 114, and are subjected to an optimization processing in acco rdance with the output end by the viewing image referred image data generator 107, to become viewing image referred image data d5 generated.

In addition, because the other components of the structure of the image processing apparatus 117 of this embodiment 3 are the same as those of the above-mentioned embodiment 1, the same sign is attached to every structural component as that of the embodiment 1, and the explanation of the structure will be omitted.

(OPERATION OF IMAGE PROCESSING APPARATUS 117)

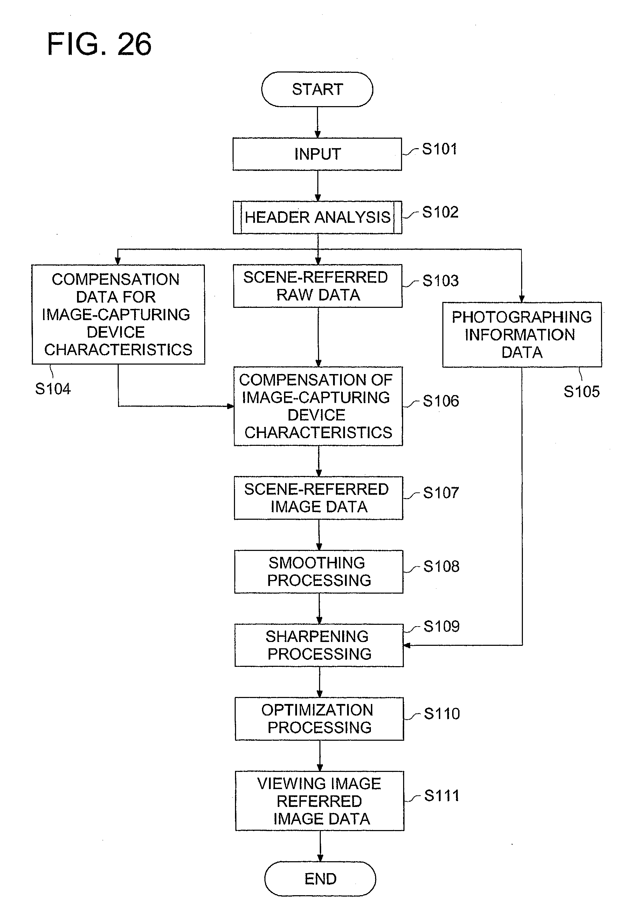

Fig. 26 is a flow chart showing an image data generation processing C to be practiced by the cooperation of the pertinent portions of the image processing apparatus 117. In the following, the operation of the image processing apparatus 117 will be explained with reference to the drawings.

When a recording medium having recorded a data file of the structure shown in Fig. 9 is loaded, the digital image data file recorded in the recording medium is inputted by the input section 101 (step S101). As regards the inputted digital image data, its content is analyzed by the header information analysis section 102 (step S102), and is divided into scene-referred raw data d2 (step S103), correction data for image-capturing device characteristics d1 (step S104), and photographing information data d3 (step S105); the scene-referred raw data d2 and the correction data for image-capturing device characteristics d1 are outputted to the correction processor for image-capturing device characteristics 115, and the photographing information data d3 are outputted to the optimization processor 116.

When the correction data for image-capturing device characteristics d1 are inputted to the correction processor for image-capturing device characteristics 115, the processing condition table 103b is referred to by the correction processor for apparatus characteristics 103a, and processing conditions for generating scene-referred image data d4 are determined. The scene-referred raw data d2 are subjected to a correction processing for image-capturing device characteristics by the scene-referred image data generator 104 on the basis of the processing conditions determined by the correction processor for apparatus characteristics 103a (step S106), to become scene-referred image data d4 generated, which are stored in the temporary storage 105 (step S107).

When the photographing information data d3 are inputted to the optimization processor 116, processing conditions for generating viewing image referred image data d5 in accordance with the photographing conditions are determined by the photographing information data processor 106 on the basis of the photographing information data d3. The scene-referred image data d4 are read out from the temporary storage 105, are subjected to a smoothing processing by the smoothing processor 113 (step S108), next are subjected to a sharpening processing by the sharpening processor 114 (step S109), and further, on the basis of the processing conditions determined by the photographing information data processor 106 and the operation information inputted from the setting input section 109, are subjected to an optimization processing by the viewing image referred image data generator 107 of the optimization processor 116 in accordance with the size of the device or the output medium of the output end (step S110), to become viewing image referred image data d5 generated, which are outputted to the device designated by the setting input section 109 (step S111).

In addition, the block diagram shown in Fig. 25 and the flow chart shown in Fig. 26 is merely an example; as regards the processing by the smoothing processor 113, it is appropriate so long as it is practiced in the process of generating viewing image referred image data d5 from scene-referred image data d4, and as regards the processing by the sharpening processor 114, it is appropriate so long as it is practiced after the processing by the smoothing processor 113; the process is not limited to the block diagram shown in Fig. 25 and the flow chart shown in Fig. 26. For example, it is also appropriate that scene-referred image data d4, after being subjected to several optimization processings in the viewing image referred image data generator 107, are subjected to a smoothing processing in the smoothing processor 113, and after that, are subjected to a sharpening processing in the sharpening processor 114.

As explained in the foregoing, by the image processing apparatus 117, a smoothing processing and a sharpening processing are applied to digital image data inputted from the image-capturing device 21 in the process of generating viewing image referred image data d5. For that reason, also in the case where scene-referred image data are inputted as input data, a suitable and rapid smoothing processing and sharpening processing can be practiced.

(STRUCTURE OF IMAGE RECORDING APPARATUS 201)

Next, the structure and the operation of an image recording apparatus 201 of this embodiment 3 will be explained. In addition, because the outside structure and the internal structure of the image recording apparatus 201 and the structure of an image processor 270 of this embodiment 3 are the same as those of the above-mentioned embodiment 1 except that the order of data processing is different, the feature is to be explained in the explanation of the operation; further, every structural component is given the same sign as that of the embodiment 1, and it will be omitted to show the structure in the drawings and explain it.

Further, the image recording apparatus 201 of this embodiment 3 is one corresponding to an image recording apparatus as set forth in the structure (13) of this invention, the combination of the correction processor for image-capturing device characteristics 303a and the scene-referred image data generator 304 together has the function of a scene-referred image data generation means as set forth in the structure (13) of this invention, and the combination of the photographing information processor 306, the viewing image referred image data processor 307, the smoothing processor 313, and the sharpening processor 314 together has the function of a viewing image referred image data generation means as set forth in the structure (13) of this invention. Further, the smoothing processor 313 has the function of a smoothing processor as set forth in the structure (13) of this invention, and the sharpening processor 314 has the function of a sharpening processor as set forth in the structure (13) of this invention.

(OPERATION OF IMAGE RECORDING APPARATUS 201)

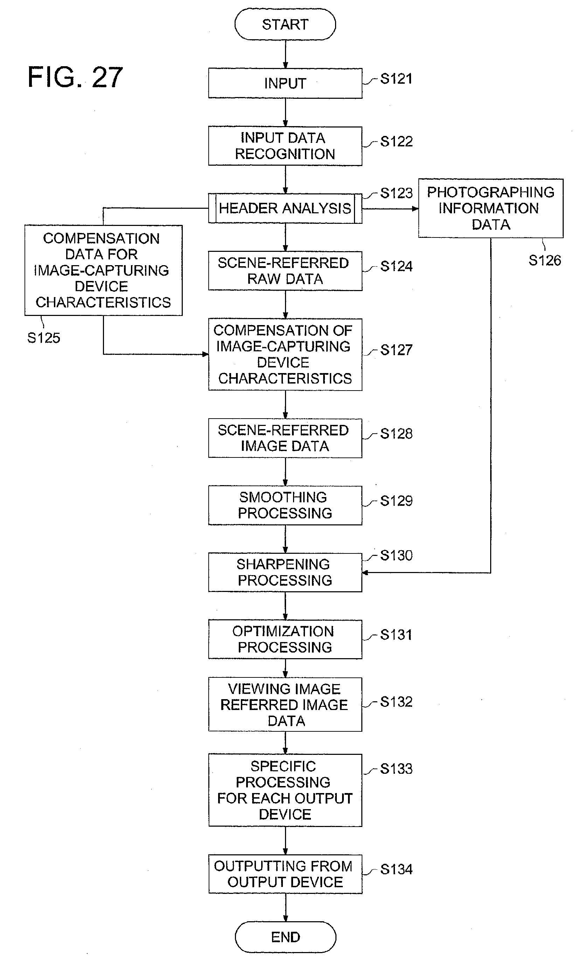

Fig. 27 is a flow chart showing an image data formation processing C to be practiced by the cooperation of the pertinent portions of the image processor 270. In the following, the operation of every part of the image processor 270 will be explained with reference to the drawings.

Data are inputted from the image transfer means 230 or the communication means (input) 240 to the image processor 270 (step S121), and when said inputted data are judged by the decoding processor for image data format 704 as a digital image data file obtained by the aforesaid image-capturing device 21 (step S122), the content of the inputted digital image data file is analyzed by the header information analysis section 302 (step S123), and is divided into scene-referred raw data d2 (step S124), correction data for image-capturing device characteristics d1 (step S125), and photographing information data d3 (step S126).

The correction data for image-capturing device characteristics d1 are outputted to the correction processor for apparatus characteristics 303a, and processing conditions for generating scene-referred image data are determined by the correction processor for apparatus characteristics 303a referring to the processing condition table 303b. The scene-referred raw data d2 are subjected to a correction processing for image-capturing device characteristics by the scene-referred image data generator 304, on the basis of the processing conditions determined by the correction processor for apparatus characteristics 303a (step S127), to become scene-referred image data d4 generated, which are outputted to the smoothing processor 313 (step S128).

When the scene-referred image data d4 are subjected to a smoothing processing in the smoothing processor 313 (step S129), the scene-referred image data are next subjected to a sharpening processing by the sharpening processor 314, and are outputted to the viewing image referred image data generator 307 (step S130).

When the photographing information data d3 are inputted to the photographing information data processor 306, processing conditions for generating viewing image referred image data d5 in accordance with the photographing conditions are determined on the basis of the photographing information data d3. Further, on the basis of an instruction from the operation section 211 and the controller 207, in the image adjustment processor 701, image processing conditions for generating viewing image referred image data d5 adapted to the output device and the output medium are determined. The scene-referred image data d4 which have already been subjected to a smoothing processing and a sharpening processing are subjected to an optimization processing by the viewing image referred image data generator 307 in accordance with the size of the output device and the output medium of the output end, on the basis of the processing conditions determined by the photographing information data processor 306 and the image processing conditions determined by the image adjustment processor 701 (step S131), to become viewing image referred image data generated, which are outputted to any one of the processors, the CRT-specific processor 706, the printer-specific processor 707, the printer-specific processor 708, and the image data format generation processor 709 in accordance with the output end based on the operation at the operation section 211 (step S132). The viewing image referred image data d5 are subjected to a processing specific to the output end in accordance with it in the processor to which the data are outputted (step S133), and are outputted to the output end designated by the operation section 211 (step S134).

In addition, the flow chart shown in Fig. 27 is merely an example; as regards the processing by the smoothing processor 313, it is appropriate so long as it is practiced in the process of generating viewing image referred image data d5 from scene-referred image data d4; further, as regards the processing by the sharpening processor 314, it is appropriate so long as it is practiced after the processing by the smoothing processor 313; the process is not limited to the flow chart shown in Fig. 27. For example, it is also appropriate that scene-referred image data d4, after being subjected to several optimization processings in the viewing image referred image data generator 307, are subjected to a smoothing processing in the smoothing processor 313, and after that, are subjected to a sharpening processing in the sharpening processor 314.

As explained in the foregoing, by the image recording apparatus 201, a smoothing processing and a sharpening processing are applied to digital image data inputted from the image-capturing device 21 in the process of generating viewing image referred image data d5. For that reason, also in the case where scene-referred image data are inputted as input data, a suitable and rapid smoothing processing and sharpening processing can be practiced.

By the structure of this embodiment 3 explained in the above description, scene-referred raw data, scene-referred image data, and viewing image referred image data which have been subjected to a smoothing processing and a sharpening processing can be obtained. As regards the smoothing processing of this embodiment 3, for the purpose of reducing the processing time, it is applied to input data having comparatively large noises. It has been found out that a noise removal processing can be practiced in a most suitable way, because a smoothing processing is practiced after a correction processing based on correction data for apparatus characteristics is carried out. Further, it has been found that shortening of the processing time can be achieved.

EMBODIMENT 4

In the following, the embodiment 4 of this invention will be explained with reference to the drawings.
In addition, in the embodiment 4, it is shown an example using digital image data recorded by the image-capturing device 21 in the same way as explained in the above-mentioned embodiment 1.

(STRUCTURE OF IMAGE PROCESSING APPARATUS)

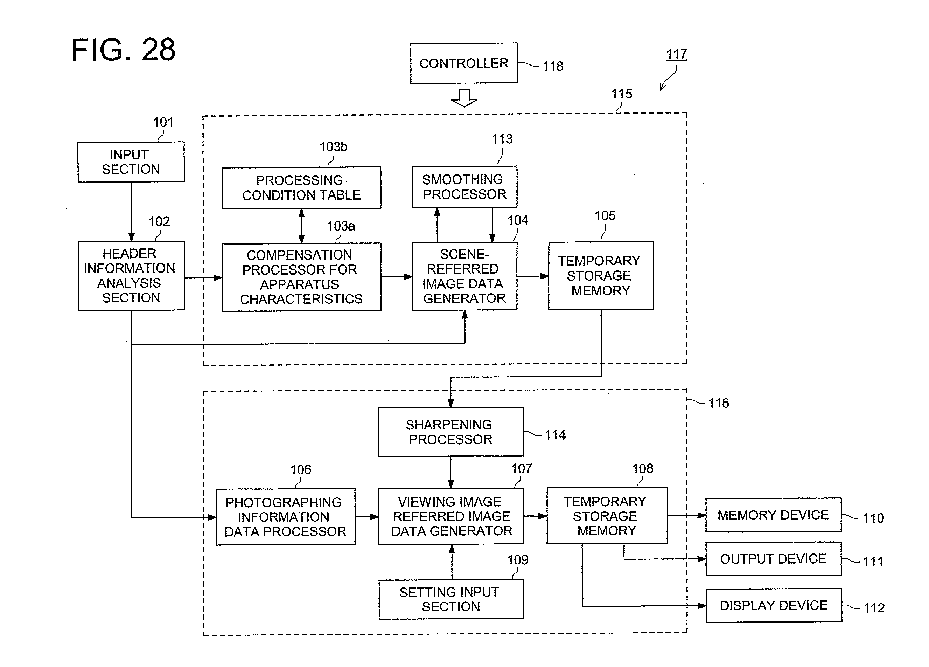

Fig. 28 is a block diagram showing the functional structure of an image processing apparatus 117 of this embodiment 4. As shown in Fig. 28, in this embodiment, the arrangement of the smoothing processor 113 is different from that of the image processing apparatus 117 of the embodiment 1 shown in Fig. 16. That is, scene-referred image data d4, which have been generated by the application of a correction processing for image-capturing device characteristics to scene-referred raw data d2, are subjected to a smoothing processing by the smoothing processor 113, to become smoothed scene-referred image data d7 generated, which are stored in the temporary memory 105.
In addition, because the other components of the structure of the image processing apparatus 117 of this embodiment 4 are the same as those of the above-mentioned embodiment 1, the same sign is attached to every structural component as that of the embodiment 1, and the explanation of the structure will be omitted.

(OPERATION OF IMAGE PROCESSING APPARATUS 117)

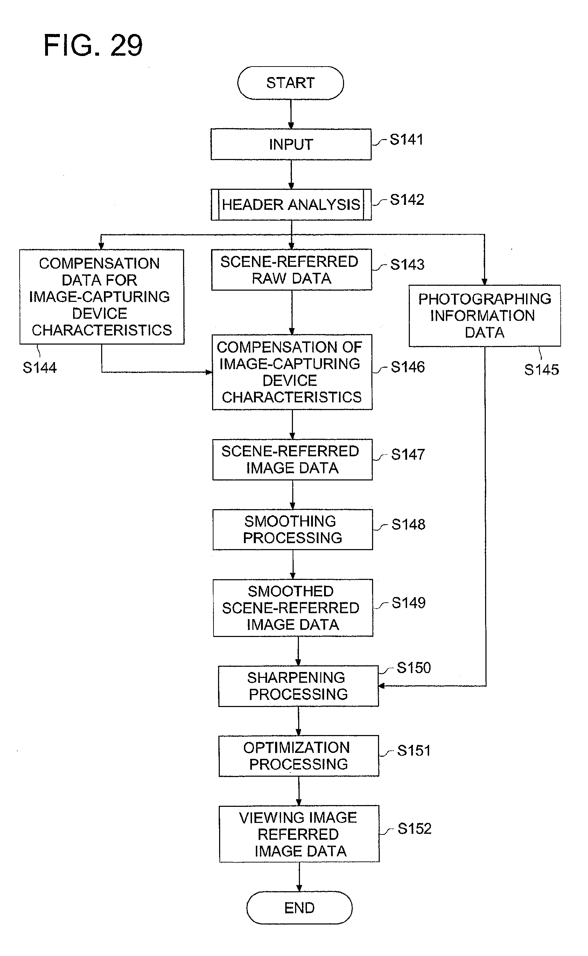

Fig. 29 is a flow chart showing an image data generation processing D to be practiced by the cooperation of the pertinent portions of the image processing apparatus 117. In the following, the operation of the image processing apparatus 117 will be explained with reference to the drawings.
When a recording medium having recorded a data file of the structure shown in Fig. 9 is loaded, the digital image data file recorded in the recording medium is inputted by the input section 101 (step S141). The content of inputted digital image data is analyzed by the header information analysis section 102 (step S142), and is divided into scene-referred raw data d2 (step S143), correction data for image-capturing device characteristics d1 (step S144), and photographing information data d3 (step S145); the scene-referred raw data d2 and the correction data for image-capturing device characteristics d1 are outputted to the correction processor for image-capturing device characteristics 115, and the photographing information data d3 are outputted to the optimization processor 116.
When the correction data for image-capturing device characteristics d1 are inputted to the correction processor for image-capturing device characteristics 115, the correction processor for apparatus characteristics 103a refers to the processing condition table 103b, and processing conditions for generating scene-referred image data d4 are determined. The scene-referred raw data d2 are subjected to a correction processing for image-capturing device characteristics by the scene-referred image data generator 104 on the basis of the processing conditions determined by the correction processor for apparatus characteristics 103a (step S146), to become scene-referred image data d4 generated (step S147). Then, scene-referred image data d4 are subjected to a smoothing processing by the smoothing processor 113 (step S148), to become smoothed scene-referred image data d7 generated, which are stored in the temporary storage 105 (step S149).
When the photographing information data d3 are inputted to the optimization processor 116, processing conditions for generating viewing image referred image data d5 in accordance with the photographing conditions are determined by the photographing information data processor 106 on the basis of the photographing information data d3. The smoothed scene-referred image data d7 are read out from the temporary storage 105; then, on the basis of the processing conditions determined by the photographing information data processor 106 and the operation information inputted from the setting input section 109, the smoothed scene-referred image data d7 are subjected to a sharpening processing in accordance with the size of the device or the output medium of the output end by the sharpening processor 114 (step S150), and are subjected to an optimization processing by the viewing image referred image data generator 107 (step S151), to become viewing image referred image data d5 generated, which are outputted to the device designated by the setting input section 109 (step S152).
In addition, the block diagram shown in Fig. 28 and the flow chart shown in Fig. 29 are merely an example; as regards the processing by the sharpening processor 114, it is appropriate so long as it is practiced in the generation process of the viewing image referred image data d5 from the smoothed scene-referred image data d7; the process is not limited to the block diagram shown in Fig. 28 and the flow chart shown in Fig. 29. For example, it is also appropriate that scene-referred image data d4, after being subjected to several optimization processings in the viewing image referred image data processor 107, are subjected to a sharpening processing in the sharpening processor 114.

As explained in the foregoing, by the image processing apparatus 117, because a smoothing processing is applied to scene-referred image data, even in the case where scene-referred image data d4 are inputted as the input data, not to mention the case where scene-referred raw data d2 are inputted, a suitable noise removal processing can be practiced.

Further, by the image processing apparatus 117, a sharpening processing is applied to scene-referred image data d4 in the generation process of viewing image referred image data d5. The generation process of viewing image referred image data d5 is a process to apply image processing for optimizing digital image data in accordance with the output device and the output medium, and by the application of a sharpening processing in accordance with the output device and the output medium, it is possible to obtain a subjectively desirable image on the output medium.

(STRUCTURE OF IMAGE RECORDING APPARATUS 201)

Next, the structure and the operation of an image recording apparatus 201 of this embodiment 4 will be explained. In addition, because the outside structure and the internal structure of the image recording apparatus 201 and the structure of an image processor 270 of this embodiment 4 are the same as those of the above-mentioned embodiment 1 except that the order of data processing is different, the feature is to be explained in the explanation of the operation; further, every structural component is given the same sign as that of the embodiment 1, and it will be omitted to show the structure in the drawings and explain it.

Further, the image recording apparatus 201 of this embodiment 4 is one corresponding to an image recording apparatus as set forth in the structure (14) of this invention, the combination of the correction processor for image-capturing device characteristics 303a, the scene-referred image data generator 304, and the smoothing processor 313 together has the function of a scene-referred image data generation means as set forth in the structure (14) of this invention, and the combination of the photographing information processor 306, the viewing image referred image data processor 307, and the sharpening processor 314 together has the function of a viewing image referred image data generation means as set forth in the structure (14) of this invention. Further, the smoothing processor 313 has the function of a smoothing processor as set forth in the structure (14) of this invention, and the sharpening processor 314 has the function of a sharpening processor as set forth in the structure (14) of this invention.

(OPERATION OF IMAGE RECORDING APPARATUS 201)

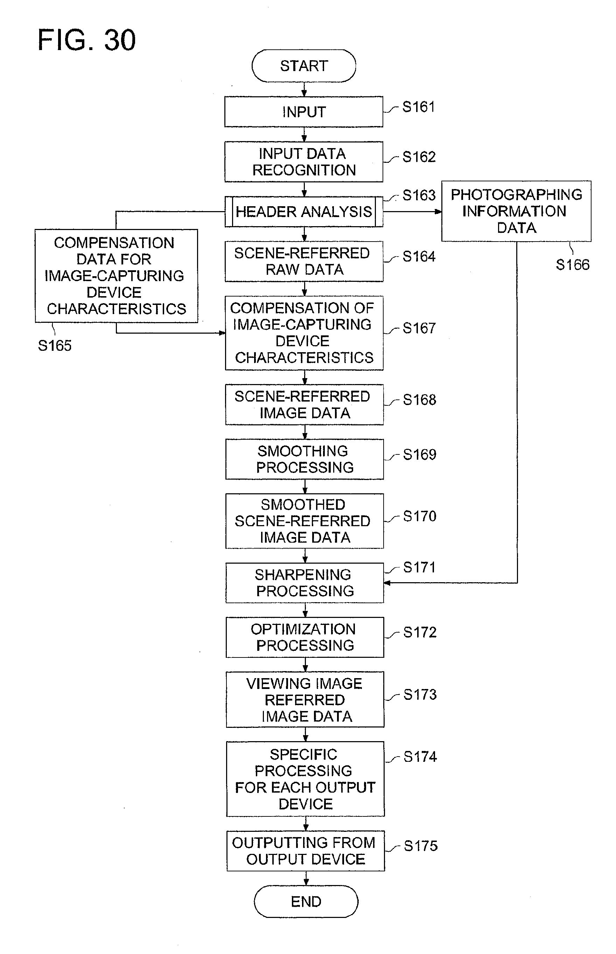

Fig. 30 is a flow chart showing an image data formation processing E to be practiced by the cooperation of the pertinent portions of the image processor 270. In the following, the operation of every part of the image processor 270 will be explained with reference to the drawings.

Data are inputted from the image transfer means 230 or the communication means (input) 240 to the image processor 270 (step S161), and when said inputted data are judged by the decoding processor for image data format 704 as a digital image data file obtained by the aforesaid image-capturing device 21 (step S162), the content of the inputted digital image data file is analyzed by the header information analysis section 302 (step S163), and is divided into scene-referred raw data d2 (step S164), correction data for image-capturing device characteristics d1 (step S165), and photographing information data d3 (step S166).

The correction data for image-capturing device characteristics d1 are outputted to the correction processor for apparatus characteristics 303a, and processing conditions for generating scene-referred image data are determined by the correction processor for apparatus characteristics 303a referring to the processing condition table 303b. The scene-referred raw data d2 are subjected to a correction processing for image-capturing device characteristics by the scene-referred image data generator 304 on the basis of the processing conditions determined by the correction processor for apparatus characteristics 303a (step S167), to become scene-referred image data d4 generated (step S168). After that, the scene-referred image data d4 are subjected to a smoothing processing in the smoothing processor 313 (step S169), to become smoothed scene-referred image data generated, which are outputted to the viewing image referred image data generator 307 (step S170).

When the photographing information data d3 are inputted to the photographing information data processor 306, processing conditions for generating viewing image referred image data d5 in accordance with the photographing conditions are determined on the basis of the photographing information data d3. Further, on the basis of an instruction from the operation section 211 and the controller 207, in the image adjustment processor 701, image processing conditions for generating viewing image referred image data d5 adapted to the output device and the output medium are determined. The smoothed scene-referred image data d7 which have already been subjected to a smoothing processing, on the basis of the processing conditions determined by the photographing information data processor 306 and the image processing conditions determined by the image adjustment processor 701, are subjected to a sharpening processing by the sharpening processor 314 in accordance with the size of the device and the output medium of the output end (step S171), and are subjected to an optimization processing by the viewing image referred image data generator 307 (step S172), to become viewing image referred image data generated (step S173).

The generated viewing image referred image data d5 are outputted to any one of the processors, the CRT-specific processor 706, the printer-specific processor 707, the printer-specific processor 708, and the image data format generation processor 709 in accordance with the output end based on the operation at the operation section 211, are subjected to a processing specific to the output end in accordance with it in the processor to which the data are outputted (step S174), and are outputted to the output end designated by the operation section 211 (step S175).

In addition, the flow chart shown in Fig. 27 is merely an example; as regards the processing by the sharpening processor 314, it is appropriate so long as it is practiced in the process of generating viewing image referred image data d5 from smoothed scene-referred image data d7; the process is not limited to the flow chart shown in Fig. 30. For example, it is also appropriate that smoothed scene-referred image data d7, after being subjected to several optimization processings in the viewing image referred image data generator 307, are subjected to a sharpening processing in the sharpening processor 314.

As explained in the foregoing, by the image recording apparatus 201, because a smoothing processing is applied to scene-referred image data d4, even in the case where scene-referred image data d4 are inputted as the input data, not to mention the case where scene-referred raw data d2 are inputted, a suitable noise removal processing can be practiced.

Further, by the image recording apparatus 201, a sharpening processing is applied to smoothed scene-referred image data d7 in the generation process of viewing image referred image data d5. The generation process of viewing image referred image data is a process to apply image processing for optimizing digital image data in accordance with the output device and the output medium, and by the application of a sharpening processing in accordance with the output device and the output medium, it is possible to obtain a subjectively desirable image on the output medium.

By the structure of this embodiment 4, it is possible to obtain scene-referred raw data, scene-referred image data which have already been subjected to a smoothing processing, and viewing image referred image data which have already been subjected to a smoothing processing and a sharpening processing. As regards a smoothing processing of this embodiment 4, for the purpose of shortening the processing time, it is applied to input data having comparatively large noises. It has been found that, in this embodiment 4, because a smoothing processing is practiced after a correction process for image-capturing device characteristics is carried out, a noise removal processing can be practiced in a most suitable way. In this embodiment 4, because a sharpening processing is practiced in the generation process of viewing image referred image data, a sharpening processing is practiced before the practice of data compression. It has been found that, for this reason, a sharpening processing which is excellent in the sense of total balance with the color gamut and gradation of an image can be practiced and a good image can be obtained on output media of various kinds.

EMBODIMENT 5

In the following, the embodiment 5 of this invention will be explained with reference to the drawings.

In addition, in this embodiment 5, it is shown an example using digital image data recorded by the image-capturing device 21 in the same way as explained in the above-mentioned embodiment 1.

(STRUCTURE OF IMAGE PROCESSING APPARATUS 117)

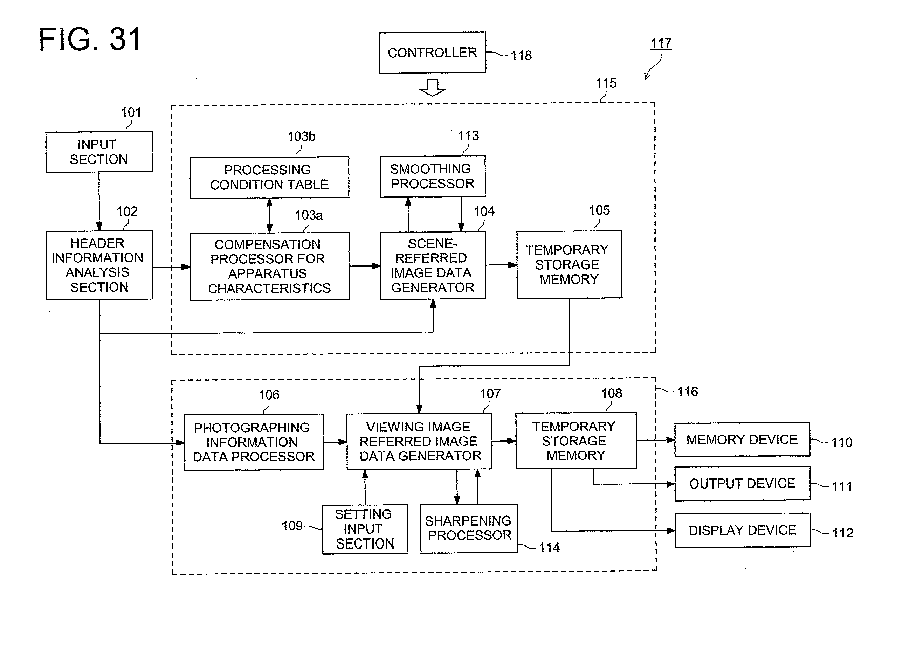

Fig. 31 is a block diagram showing the functional structure of an image processing apparatus 117 of this embodiment 5. As shown in Fig. 31, in this embodiment 5, the arrangement of the smoothing processor 113 and the sharpening processor 114 is different from that of the image processing apparatus 117 of the embodiment 1 shown in Fig. 16. That is, scene-referred image data d4, which have been generated by the application of a correction processing for image-capturing device to scene-referred raw data d2, are subjected to a smoothing processing by the smoothing processor 113, to become smoothed scene-referred image data d7 generated, which are stored in the temporary storage 105. The smoothed scene-referred image data d7 are read out by the viewing image referred image data generator 107, and are subjected to an optimization processing in accordance with the output end, to become viewing image referred image data d5 generated. After that, a sharpening processing is applied to the viewing image referred image data d5 by the sharpening processor 114, to generate sharpened viewing image referred image data d6.

In addition, because the other components of the structure of the image processing apparatus 117 of this embodiment 5 are the same as those of the above-mentioned embodiment 1, the same sign is attached to every structural component as that of the embodiment 1, and the explanation of the structure will be omitted.

(OPERATION OF IMAGE PROCESSING APPARATUS 117)

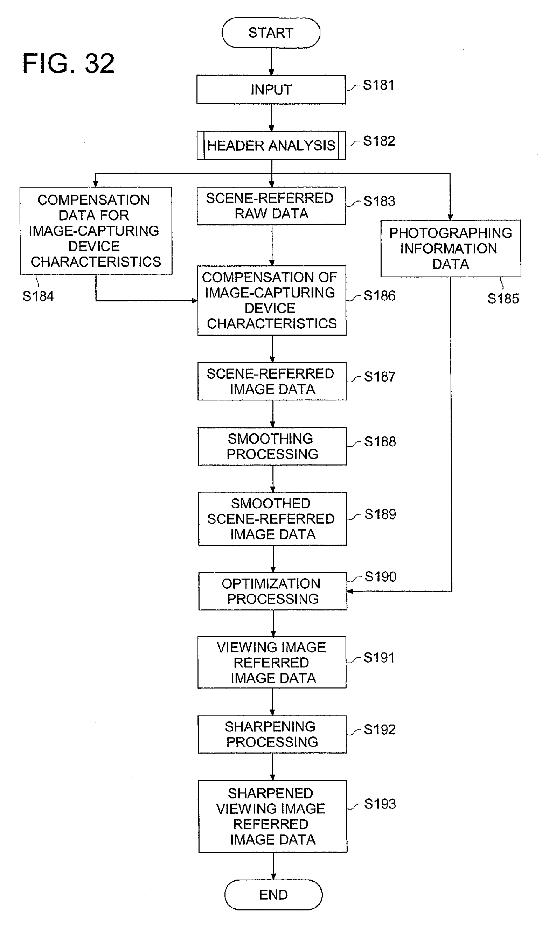

Fig. 32 is a flow chart showing an image data generation processing E to be practiced by the cooperation of the pertinent portions of the image processing apparatus 117. In the following, the operation of the image processing apparatus 117 will be explained with reference to the drawings.

When a recording medium having recorded a data file of the structure shown in Fig. 9 is loaded, the digital image data file recorded in the recording medium is inputted by the input section 101 (step S181). The content of inputted digital image data is analyzed by the header information analysis section 102 (step S182), and is divided into scene-referred raw data d2 (step S183), correction data for image-capturing device characteristics d1 (step S184), and photographing information data d3 (step S185); the scene-referred raw data d2 and the correction data for image-capturing device characteristics d1 are outputted to the correction processor for image-capturing device characteristics 115, and the photographing information data d3 are outputted to the optimization processor 116.

When the correction data for image-capturing device characteristics d1 are inputted to the correction processor for image-capturing device characteristics 115, the correction processor for apparatus characteristics 103a refers to the processing condition table 103b, and processing conditions for generating scene-referred image data d4 are determined. The scene-referred raw data d2 are subjected to a correction processing for image-capturing device characteristics by the scene-referred image data generator 104 on the basis of the processing conditions determined by the correction processor for apparatus characteristics 103a (step S186), to become scene-referred image data d4 generated (step S187). Then, the generated scene-referred image data d4 are subjected to a smoothing processing by the smoothing processor 113 (step S188), to become smoothed scene-referred image data d7 generated, which are stored in the temporary storage 105 (step S189).

When the photographing information data d3 are inputted to the optimization processor 116, processing conditions for generating viewing image referred image data d5 in accordance with the photographing conditions are determined by the photographing information data processor 106 on the basis of the photographing information data d3. The smoothed scene-referred image data d7 are read out to the viewing image referred image data generator 107 of the optimization processor 116; then, on the basis of the processing conditions determined by the photographing information data processor 106 and the operation information inputted from the setting input section 109, the smoothed scene-referred image data d7 are subjected to an optimization processing by the viewing image referred image data generator 107 in accordance with the size of the device and the output medium of the output end (step S190), to become viewing image referred image data d5 generated (step S191). The generated viewing image referred image data d5 are subjected to a sharpening processing by the sharpening processor 114 (step S192), to become sharpened viewing image referred image data d6 generated, which are outputted to the device designated by the setting input section 109 (step S193).

As explained in the foregoing, by the image processing apparatus 117, because scene-referred image data d4 are subjected to a smoothing processing, even in the case where scene-referred image data d4 are inputted as the input data, not to mention the case where scene-referred raw data d2 are inputted, a suitable noise removal processing can be carried out.

Further, by the image processing apparatus 117, a sharpening processing is practiced after the generation of viewing image referred image data d5. For that reason, in a case such that viewing image referred image data d5 which have been generated through the application of an optimization processing based on the kind of a specified output device and output medium are to be outputted to output devices and output media of the same kind with the size of the output media changed, the optimization processing becomes unnecessary and the processing load can be lightened.

(STRUCTURE OF IMAGE RECORDING APPARATUS 201)

Next, the structure and the operation of an image recording apparatus 201 of this embodiment 5 will be explained. In addition, because the outside structure and the internal structure of the image recording apparatus 201 and the structure of an image processor 270 of this embodiment 5 are the same as those of the above-mentioned embodiment 1 except that the order of data processing is different, the feature is to be explained in the explanation of the operation; further, every structural component is given the same sign as that of the embodiment 1, and it will be omitted to show the structure in the drawings and explain it.

Further, the image recording apparatus 201 of this embodiment 5 is one corresponding to an image recording apparatus as set forth in the structure (15) of this invention, the combination of the correction processor for image-capturing device characteristics 303a, the scene-referred image data generator 304, and the smoothing processor 313 together has the function of a scene-referred image data generation means as set forth in the structure (15) of this invention, and the combination of the photographing information processor 306, the viewing image referred image data processor 307, and the sharpening processor 314 together has the function of a viewing image referred image data generation means as set forth in the structure (15) of this invention. Further, the smoothing processor 313 has the function of a smoothing processor as set forth in the structure (15) of this invention, and the sharpening processor 314 has the function of a sharpening processor as set forth in the structure (15) of this invention.

(OPERATION OF IMAGE RECORDING APPARATUS 201)

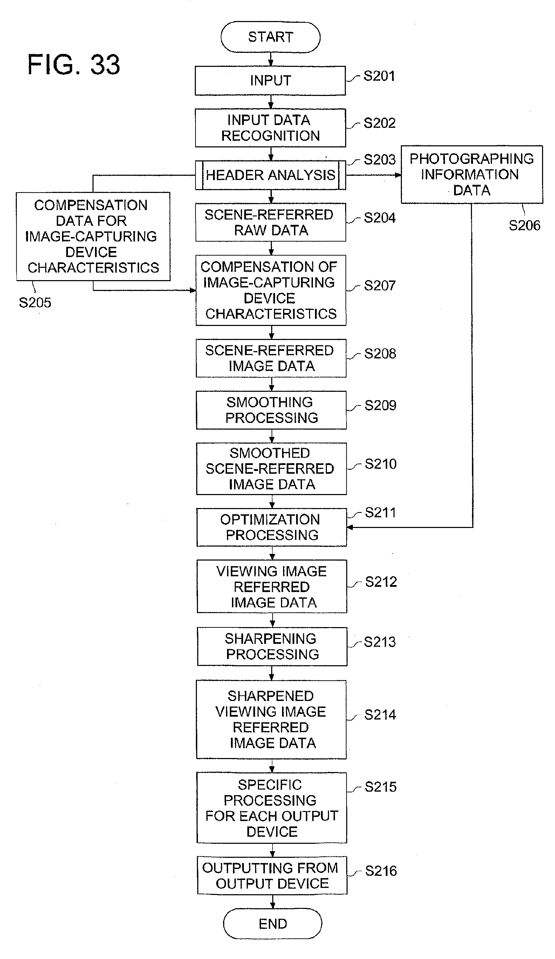

Fig. 33 is a flow chart showing an image data formation processing E to be practiced by the cooperation of the pertinent portions of the image processor 270. In the following, the operation of every part of the image processor 270 will be explained with reference to the drawings.

Data are inputted from the image transfer means 230 or the communication means (input) 240 to the image processor 270 (step S201), and when said inputted data are judged by the decoding processor for image data format 704 as a digital image data file obtained by the aforesaid image-capturing device 21 (step S202), the content of the inputted digital image data file is analyzed by the header information analysis section 302 (step S203), and is divided into scene-referred raw data d2 (step S204), correction data for image-capturing device characteristics d1 (step S205), and photographing information data d3 (step S206).

The correction data for image-capturing device characteristics d1 are outputted to the correction processor for apparatus characteristics 303a, and processing conditions for generating scene-referred image data are determined by the correction processor for apparatus characteristics 303a referring to the processing condition table 303b. The scene-referred raw data d2 are subjected to a correction processing for image-capturing device characteristics by the scene-referred image data generator 304 on the basis of the processing conditions determined by the correction processor for apparatus characteristics 303a (step S207), to become scene-referred image data d4 generated (step S208). After that, the generated scene-referred image data d4 are subjected to a smoothing processing in the smoothing processor 313 (step S209), to become smoothed scene-referred image data d7 generated, which are outputted to the viewing image referred image data generator 307 (step S210).

When the photographing information data d3 are inputted to the photographing information data processor 306, processing conditions for generating viewing image referred image data d5 in accordance with the photographing conditions are determined on the basis of the photographing information data d3. Further, on the basis of an instruction from the operation section 211 and the controller 207, in the image adjustment processor 701, image processing conditions for generating viewing image referred image data d5 adapted to the output device and the output medium are determined. On the basis of the processing conditions determined by the photographing information data processor 306 and the image processing conditions determined by the image adjustment processor 701, the smoothed scene-referred image data d7 which have already been subjected to a smoothing processing, are subjected to an optimization processing by the viewing image referred image data generator 307 in accordance with the size of the device and the output medium of the output end, (step S211), to become viewing image referred image data d5 generated (step S212).

The generated viewing image referred image data d5 are subjected to a sharpening processing by the sharpening processor 314 (step S213), to become sharpened viewing image referred image data d6, and are outputted to any one of the processors, the CRT-specific processor 706, the printer-specific processor 707, the printer-specific processor 708, and the image data format generation processor 709 in accordance with the output end based on the operation at the operation section 211 (step S214). The sharpened viewing image referred image data d6 are subjected to a processing specific to the output end in accordance with it in the processor to which the data are outputted (step S215), and are outputted to the output end designated by the operation section 211 (step S216).

As explained in the foregoing, by the image recording apparatus 201, because a smoothing processing is applied to scene-referred image data, even in the case where scene-referred image data d4 are inputted as the input data, not to mention the case where scene-referred raw data d2 are inputted, a suitable noise removal processing can be practiced.

Further, by the image recording apparatus 201, a sharpening processing is practiced after the generation of viewing image referred image data d5. For that reason, in a case such that viewing image referred image data d5 which have been generated through the application of an optimization processing based on the kind of a specified output device and output medium are to be outputted to output devices and output media of the same kind with the size of the output media changed, the optimization processing becomes unnecessary, which makes it possible to lighten the processing load.

In this way, by the structure of this embodiment 5, it is possible to obtain scene-referred raw data, scene-referred image data which have already been subjected to a smoothing processing, and viewing image referred image data which have already been subjected to a smoothing processing and a sharpening processing. As regards a smoothing processing of this embodiment 5, for the purpose of shortening the processing time, it is applied to input data having comparatively large noises. It has been found that, in this embodiment 5, because a smoothing processing is practiced after a correction processing using correction data for image-capturing device characteristics and a correction processing using photographing information data are carried out, a noise removal processing can be practiced in a most suitable way. In this embodiment 5, because a sharpening processing is practiced in a process later than the generation of viewing image referred image data, a sharpening processing is practiced on the basis of the output information. It has been found that, for this reason, an image having a very excellent sharpness can be obtained on a specified output medium. Further, it has been found that, because a sharpening processing is applied to viewing image referred image data of a comparatively small image size, shortening of the processing time can be achieved.

Further, in the embodiment 1 to embodiment 5, a smoothing processing is practiced by the use of a low-p ass filter with the mask size, mask shape, and the threshold value changed on the basis of the characteristic of the noise; therefore, it is possible to prevent the lowering of image quality, and also it is possible to make the speed of processing higher. Further, because the amount of edge enhancement in a sharpening processing is adjusted in accordance with the kind and size of the output medium, size of the main photographic object in an image, and the photographed scene, a subjectively more desirable image quality can be obtained.

In addition, in the above-mentioned embodiment 1 to embodiment 5, explanation has been given for the mode of practice where digital image data having a data structure shown in Fig. 9 recorded by the image-capturing device 21 are inputted; however, it is possible to obtain digital image data having the structure shown in Fig. 8, and Fig. 10 to Fig. 13 by it that scene-referred image data and viewing image referred image data are generated on the basis of the captured-image data in the image processor 7 of the image-capturing device 21, and to image data having been generated by the use of the difference between the viewing image referred image data and the scene-referred image data generated, correction data for image-capturing device characteristics and photographing information data are attached.

In the case where a file having a data structure as shown in Fig. 10 or Fig. 11 in the image processing apparatus 117 or in the image recording apparatus 201, the header information analysis section 102 (302) divides the inputted digital image data into correction data for image-capturing device characteristics d1, scene-referred image data d4, and photographing information data d3 (in the case of Fig. 11); generation process of scene-referred image data is omitted, and viewing image referred image data d5 are generated from scene-referred image data d4 in the viewing image referred image data generation process.

In the case where a file having a data structure as shown in Fig. 12 or Fig. 13 is inputted in the image processing apparatus 117 or in the image recording apparatus 201, the header information analysis section 102 (302) divides the inputted digital image data into correction data for image-capturing device characteristics d1, photographing information data d3 (in the case of Fig. 13), viewing image referred image data d5, and difference data d8, and in the scene-referred image data generation process, on the basis of the correction data for image-capturing device characteristics d1, the difference data d8, and the photographing information data d3 (in the case of Fig. 13), a correction processing for the transformation characteristics specific to the image-capturing device is applied to the viewing image referred image data d5, to generate scene-referred image data d4. Further, viewing image referred image data d5 are generated from the scene-referred image data d4 in the viewing image referred image data generation process. Besides, in the case where the image processing apparatus 117 or the image recording apparatus 201 is an apparatus which generates smoothed scene-referred image data d7 after generating scene-referred image data d4, it generates viewing image referred image data d5 from the smoothed scene-referred image data d7 in the viewing image referred image data generation process.

As described in the foregoing, the present invention can use data outputted from image-capturing device of three types, namely, a type outputting scene-referred raw data, a type outputting scene-referred image data, and a type outputting viewing image referred image data.

In addition to the above description, the detailed structure and the detailed operation of the apparatus making up the present invention can be altered suitably within a range not departing from the spirit of this invention.

EFFECT OF THIS INVENTION

As described in the foregoing, it has become possible to obtain an image forming method, an image processing apparatus, and an image recording apparatus to make it possible to rapidly obtain image quality having very small amount of noises and an excellent sharpness, wherein scene-referred raw data which are unprocessed direct output signals obtained by the recording of information true to the photographic object with neither image processing such as gradation transformation, sharpness enhancement, chroma enhancement to alter the data content for the purpose of improving the effect at the time of image appreciation, nor processing to map signal strength data of the color channels based on the spectral sensitivity specific to the image sensor to a standardized color space such as the above-mentioned RIMM RGB, or sRGB applied, scene-referred image data which are obtained by the application of correction processing to unprocessed output signals of all the image sensors to become the object by the use of correction parameters for each photoelectric conversion function of the image sensor set beforehand for said scene-referred raw data, and viewing image referred image data which have been subjected to processings to make it possible to obtain an image on a display device, or an output medium.

**Claims**

1. An image forming method comprising:

   applying an image processing for forming an optimum viewing image on an output medium to captured-image data outputted from an image-capturing device; wherein a process of the image processing comprises:

   a scene-referred image data generation process for generating scene-referred image data on the basis of the captured-image data; and
   a viewing image referred image data generation process for generating viewing image referred image data on the basis of the generated scene-referred image data;

   wherein, the image processing comprises:

   a smoothing processing and a sharpening processing.

2. The image forming method of claim 1, wherein the smoothing processing is practiced in the scene-referred image data generation process and the sharpening processing is practiced in the viewing image referred image data generation process.

3. The image forming method of claim 1 or 2, wherein the smoothing processing is practiced in the scene-referred image data generation process and the sharpening processing is practiced after the viewing image referred image data have been generated in the viewing image referred image data generation process.

4. An image forming method according to any one of claims 1 to 3, wherein the smoothing processing is practiced at first and a sharpening processing is practiced next, in the scene-referred image data generation process.

5. An image forming method according to any one of claims 1 to 4, wherein the smoothing processing is applied to the scene-referred image data generated in the scene-referred image data generation process, and the sharpening processing is practiced in the viewing image referred image data generation process.

6. An image forming method according to any one of claims 1 to 5, wherein the smoothing processing is applied to the scene-referred image data generated in the scene-referred image data generation process, and the sharpening processing is practiced to viewing image referred image data generated in the viewing image referred image data generation process.

7. An image processing apparatus which applies image processing for forming an optimum viewing image on an output medium to captured-image data outputted from an image-capturing device comprising:

   a scene-referred image data generation section for generating scene-referred image data on the basis of the captured-image data;
   a viewing image referred image data generation section for applying an image processing for optimizing the scene-referred image data to generate viewing image referred image data;
   a smoothing processing section for applying a smoothing processing; and
   a sharpening processing section for applying a sharpening processing.

8. The image processing apparatus of claim 7, wherein the scene-referred image data generation section includes the smoothing processing section for applying a smoothing processing to the captured-image data, and the viewing image referred image data generation section includes the sharpening processing section for applying a sharpening processing to the scene-referred image data.

9. The image processing apparatus of claim 7 or 8, wherein the scene-referred image data generation section includes the smoothing processing section for applying a smoothing processing to the captured-image data, and the viewing image referred image data generation section includes the sharpening processing section for applying a sharpening processing to the generated viewing image referred image data.

10. The image processing apparatus of claim 7, 8 or 9, wherein the viewing image referred image data generation section includes the smoothing processing section for practicing a smoothing processing and the sharpening processing section for practicing a sharpening processing in the generation process of the viewing image referred image data by the viewing image referred image data generation section.

11. An image processing apparatus according to any one of claims 7 to 10, wherein the scene-referred image data generation section includes the smoothing processing section for applying a smoothing processing to the generated scene-referred image data, and the viewing image referred image data generation section includes the sharpening processing section for applying a sharpening processing to the scene-referred image data having been subjected to the smoothing processing.

**12.** An image processing apparatus according to any one of claims 7 to 11, wherein the scene-referred image data generation section includes the smoothing processing section for applying a smoothing processing to the generated scene-referred image data, and the viewing image referred image data generation section includes the sharpening processing section for applying the sharpening processing to the generated viewing image referred image data.

**13.** An image recording apparatus which applies image processing for forming an optimum viewing image on an output medium to captured-image data outputted from an image-capturing device, and outputs the optimum viewing image on the output medium comprising:

a scene-referred image data generation section for generating scene-referred image data on the basis of the captured-image data; a viewing image referred image data generation section for applying an image processing for optimizing the scene-referred image data to generate viewing image referred image data; a smoothing processing section for applying a smoothing processing; and a sharpening processing section for applying a sharpening processing.

**14.** The image recording apparatus of claim 13, wherein the scene-referred image data generation section includes the smoothing processing section for applying a smoothing processing to the captured-image data, and the viewing image referred image data generation section includes the sharpening processing section for applying a sharpening processing to the scene-referred image data.

**15.** The image recording apparatus of claim 13 or 14, wherein the scene-referred image data generation section includes the smoothing processing section for applying a smoothing processing to the captured-image data, and the viewing image referred image data generation section includes the sharpening processing section for applying a sharpening processing to the generated viewing image referred image data.

**16.** An image recording apparatus according to any one of claims 13 to 15, wherein the viewing image referred image data generation section includes the smoothing processing section for practicing a smoothing processing and the sharpening processing section for practicing a sharpening processing in the generation process of the viewing image referred image data by the viewing image referred image data generation section.

**17.** An image recording apparatus according to any one of claims 13 to 16, wherein the scene-referred image data generation section includes the smoothing processing section for applying a smoothing processing to the generated scene-referred image data, and the viewing image referred image data generation section includes the sharpening processing section for applying a sharpening processing to the scene-referred image data having been subjected to the smoothing processing.

**18.** An image recording apparatus according to any one of claims 13 to 17, wherein the scene-referred image data generation section includes the smoothing processing section for applying a smoothing processing to the generated scene-referred image data, and the viewing image referred image data generation section includes the sharpening processing section for applying the sharpening processing to the generated viewing image referred image data.

**19.** An image forming method according to any one of claims 1 to 6, wherein the smoothing processing is carried out by means of a filter to change mask sizes, mask shapes, and threshold values, on the basis of the noise characteristic of image data.

**20.** An image processing apparatus according to any one of claims 7 to 12 wherein the smoothing processing is carried out by means of a filter to change mask sizes, mask shapes, and threshold values, on the basis of the noise characteristic of image data.

**21.** An image recording apparatus according to any one of claims 13 to 18, wherein the smoothing processing is carried out by means of a filter to change mask sizes, mask shapes, and threshold values, on the basis of the noise characteristic of image data.

**22.** An image forming method according to any one of claims 1 to 6, wherein an amount of application of the sharpening processing is adjusted in accordance with a kind of the output medium.

**23.** An image processing apparatus according to any one of claims 7 to 12, wherein an amount of application of the sharpening processing is adjusted in accordance with a kind of the output medium.

**24.** The image recording apparatus of any one of claims 13 to 18, and 21, wherein an amount of application of the sharpening processing is adjusted in accordance with a kind of the output medium.

25. The image forming method of any one of claims 1 to 6, 19, and 22, wherein an amount of application of the sharpening processing is adjusted in accordance with a size of the output medium.

26. The image processing apparatus of any one of claims 7 to 12, 20, and 23, wherein an amount of application of the sharpening processing is adjusted in accordance with a size of the output medium.

27. The image recording apparatus of any one of claims 13 to 18, 21, and 24, wherein an amount of application of the sharpening processing is adjusted in accordance with a size of the output medium.

28. The image forming method of any one of claims 1 to 6, 19, 22 and 25, wherein an amount of application of the sharpening processing is adjusted in accordance with the size of a main photographic object.

29. The image processing apparatus of any one of claims 7 to 12, 20, 23, and 26, wherein an amount of application of the sharpening processing is adjusted in accordance with the size of a main photographic object.

30. The image recording apparatus of any one of claims 13 to 18, 21, 24, and 27, wherein an amount of application of the sharpening processing is adjusted in accordance with the size of a main photographic object.

31. The image forming method of any one of claims 1 to 6, 19, 22, 25, and 28, wherein an amount of application of the sharpening processing is adjusted in accordance with a photographed scene.

32. The image processing apparatus of any one of claims 7 to 12, 20, 23, 26, and 29, wherein an amount of application of the sharpening processing is adjusted in accordance with a photographed scene.

33. The image recording apparatus of any one of claims 13 to 18, 21, 24, 27, and 30, wherein an amount of application of the sharpening processing is adjusted in accordance with a photographed scene.

34. The image forming method of any one of claims 1 to 6, 19, 22, 25, 28, and 31, wherein the captured-image data outputted from the image-capturing device are the scene-referred image data.

35. The image processing apparatus of any one of claims 7 to 12, 20, 23, 26, 29, and 32, wherein the captured-image data outputted from the image-capturing device are the scene-referred image data.

36. The image recording apparatus of any one of claims 13 to 18, 21, 24, 27, 30, and 33, wherein the captured-image data outputted from the image-capturing device are the scene-referred image data.

37. The image forming method of any one of claims 1 to 6, 19, 22, 25, 28, and 31, wherein the captured-image data outputted from the image-capturing device are scene-referred raw data.

38. The image processing apparatus of any one of claims 7 to 12, 20, 23, 26, 29, and 32, wherein the captured-image data outputted from the image-capturing device are the scene-referred raw data.

39. The image recording apparatus of any one of claims 13 to 18, 21, 24, 27, 30, and 33, wherein the captured-image data outputted from the image-capturing device are the scene-referred raw data.

40. The image forming method of any one of claims 1 to 6, 19, 22, 25, 28, and 31, wherein the captured-image data outputted from the image-capturing device are the viewing image referred image data.

41. The image processing apparatus of any one of claims 1 to 6, 19, 22, 25, 28, and 31, wherein the captured-image data outputted from the image-capturing device are the viewing image referred image data.

42. The image recording apparatus of any one of claims 13 to 18, 21, 24, 27, 30, and 33, wherein the captured-image data outputted from the image-capturing device are the viewing image referred image data.

FIG. 1

FIG. 2

FIG. 3

FIG. 4

FIG. 5

FIG. 6

## FIG. 7

(Graph: y-axis "GAIN AT HIGH FREQUENCY COMPONENT" from 0 to 7; x-axis "VIEW ANGLE OF MAIN OBJECT" from 0 to 40)

## FIG. 8

COMPENSATION DATA FOR IMAGE-CAPTURING DEVICE CHARACTERISTIC — d1

SCENE-REFERRED RAW DATA — d2

## FIG. 9

COMPENSATION DATA FOR IMAGE-CAPTURING DEVICE CHARACTERISTIC — d1

PHOTOGRAPHING INFORMATION DATA — d3

SCENE-REFERRED RAW DATA — d2

# FIG. 10

| |
|---|
| COMPENSATION DATA FOR IMAGE-CAPTURING DEVICE CHARACTERISTIC — d1 |
| SCENE-REFERRED IMAGE DATA — d4 |

# FIG. 11

| |
|---|
| COMPENSATION DATA FOR IMAGE-CAPTURING DEVICE CHARACTERISTIC — d1 |
| PHOTOGRAPHING INFORMATION DATA — d3 |
| SCENE-REFERRED IMAGE DATA — d4 |

# FIG. 12

| |
|---|
| COMPENSATION DATA FOR IMAGE-CAPTURING DEVICE CHARACTERISTIC — d1 |
| DIFFERENCE DATA — d8 |
| VIEWING IMAGE REFERRED IMAGE DATA — d5 |

# FIG. 13

| |
|---|
| COMPENSATION DATA FOR IMAGE-CAPTURING DEVICE CHARACTERISTIC — d1 |
| PHOTOGRAPHING INFORMATION DATA — d3 |
| DIFFERENCE DATA — d8 |
| VIEWING IMAGE REFERRED IMAGE DATA — d5 |

# FIG. 14

EP 1 398 950 A2

# FIG. 15

```
                        ┌──────────┐
                        │  START   │
                        └──────────┘
                             │
                             ▼
                   ┌───────────────────┐
                   │  PHOTOGRAPHING    │──── S11
                   └───────────────────┘
                             │
       ┌─────────────────────┼─────────────────────┐
       │                     ▼                      │
       │          ┌───────────────────┐             │
       │          │  SCENE-REFERRED   │──── S12     │
       │          │     RAW DATA      │             │
       │          └───────────────────┘             │
       │                     │          S15         │
       ▼                     ▼                      ▼
┌───────────────┐   ┌───────────────────┐   ┌──────────────────┐
│ COMPENSATION  │   │                   │   │  PHOTOGRAPHING   │
│   DATA FOR    │──▶│    ATTACHMENT     │◀──│   INFORMATION    │
│ IMAGE-CAPTURING│  │                   │   │      DATA        │
│    DEVICE     │   └───────────────────┘   └──────────────────┘
│CHARACTERISTICS│             │                     S14
└───────────────┘             ▼
       S13            ┌───────────────────┐
                      │     ATTACHED      │──── S16
                      │    DATA FILE      │
                      └───────────────────┘
                             │
                             ▼
                   ┌───────────────────┐
                   │     STORAGE       │──── S17
                   └───────────────────┘
                             │
                             ▼
                        ┌──────────┐
                        │   END    │
                        └──────────┘
```

# FIG. 16

CONTROLLER — 118

INPUT SECTION — 101

HEADER INFORMATION ANALYSIS SECTION — 102

PROCESSING CONDITION TABLE — 103b

COMPENSATION PROCESSOR FOR APPARATUS CHARACTERISTICS — 103a

SMOOTHING PROCESSOR — 113

SCENE-REFERRED IMAGE DATA GENERATOR — 104

TEMPORARY STORAGE MEMORY — 105

115

117

SHARPENING PROCESSOR — 114

116

PHOTOGRAPHING INFORMATION DATA PROCESSOR — 106

VIEWING IMAGE REFERRED IMAGE DATA GENERATOR — 107

TEMPORARY STORAGE MEMORY — 108

SETTING INPUT SECTION — 109

MEMORY DEVICE — 110

OUTPUT DEVICE — 111

DISPLAY DEVICE — 112

EP 1 398 950 A2

50

# FIG. 17

```
                    ┌──────────┐
                    │  START   │
                    └────┬─────┘
                         ▼
                  ┌─────────────┐
                  │    INPUT    │──── S21
                  └──────┬──────┘
                         ▼
                  ┌─────────────────┐
                  │ HEADER ANALYSIS │──── S22
                  └──────┬──────────┘
```

```
┌──────────────────┐   ┌──────────────────┐
│  COMPENSATION    │   │  SCENE-REFERRED  │──── S23
│   DATA FOR       │   │    RAW DATA      │
│ IMAGE-CAPTURING  │   └──────────────────┘       ┌──────────────────┐
│    DEVICE        │                               │  PHOTOGRAPHING   │
│ CHARACTERISTICS  │                               │   INFORMATION    │
└──────────────────┘                               │      DATA        │
      S24                                          └──────────────────┘
                                                          S25
```

```
                  ┌──────────────────┐
                  │    SMOOTHING     │──── S26
                  │   PROCESSING     │
                  └────────┬─────────┘
                           ▼
                  ┌──────────────────┐
                  │ COMPENSATION OF  │
                  │  PHOTOGRAPHING   │──── S27
                  │    APPARATUS     │
                  │ CHARACTERISTICS  │
                  └────────┬─────────┘
                           ▼
                  ┌──────────────────┐
                  │  SCENE-REFERRED  │──── S28
                  │   IMAGE DATA     │
                  └────────┬─────────┘
                           ▼
                  ┌──────────────────┐
                  │   SHARPENING     │──── S29
                  │   PROCESSING     │
                  └────────┬─────────┘
                           ▼
                  ┌──────────────────┐
                  │  OPTIMIZATION    │──── S30
                  │   PROCESSING     │
                  └────────┬─────────┘
                           ▼
                  ┌──────────────────┐
                  │  VIEWING IMAGE   │──── S31
                  │    REFERRED      │
                  │   IMAGE DATA     │
                  └────────┬─────────┘
                           ▼
                     ┌──────────┐
                     │   END    │
                     └──────────┘
```

# FIG. 18

FIG. 19

SAMPLE IDENTIFICATION INFORMATION D1, D2, D3

# FIG. 20

EP 1 398 950 A2

**FIG. 21**

```
                          START

                          INPUT                    —S41

                      INPUT DATA                   —S42
                      RECOGNITION

                      HEADER ANALYSIS    —S43        PHOTOGRAPHING
                                                     INFORMATION        —S46
   COMPENSATION                                      DATA
   DATA FOR
   IMAGE-CAPTURING        SCENE-REFERRED   —S44
   DEVICE                 RAW DATA
   CHARACTERISTICS

      S45                 SMOOTHING        —S47
                          PROCESSING

                      COMPENSATION OF
                      IMAGE-CAPTURING      —S48
                      DEVICE
                      CHARACTERISTICS

                      SCENE-REFERRED       —S49
                      IMAGE DATA

                      SHARPENING           —S50
                      PROCESSING

                      OPTIMIZATION         —S51
                      PROCESSING

                      VIEWING IMAGE
                      REFERRED             —S52
                      IMAGE DATA

                      SPECIFIC
                      PROCESSING           —S53
                      FOR EACH OUTPUT
                      DEVICE

                      OUTPUTTING FROM      —S54
                      OUTPUT DEVICE

                          END
```

# FIG. 22

CONTROLLER ~118

117

INPUT SECTION ~101

HEADER INFORMATION ANALYSIS SECTION ~102

PROCESSING CONDITION TABLE ~103b

COMPENSATION PROCESSOR FOR APPARATUS CHARACTERISTICS ~103a

SMOOTHING PROCESSOR ~113

SCENE-REFERRED IMAGE DATA GENERATOR ~104

TEMPORARY STORAGE MEMORY ~105

115

PHOTOGRAPHING INFORMATION DATA PROCESSOR ~106

VIEWING IMAGE REFERRED IMAGE DATA GENERATOR ~107

TEMPORARY STORAGE MEMORY ~108

MEMORY DEVICE ~110

OUTPUT DEVICE ~111

DISPLAY DEVICE ~112

SETTING INPUT SECTION ~109

SHARPENING PROCESSOR ~114

116

EP 1 398 950 A2

56

# FIG. 23

```
                        ( START )
                            │
                            ▼
                    ┌───────────────┐
                    │     INPUT      │──── S61
                    └───────────────┘
                            │
                            ▼
                    ┌───────────────┐
                    │ HEADER ANALYSIS │──── S62
                    └───────────────┘
                            │
        ┌───────────────────┼───────────────────────┐
        ▼                   ▼                         ▼
┌───────────────┐  ┌───────────────┐        ┌───────────────┐
│ COMPENSATION  │  │ SCENE-REFERRED │── S63  │ PHOTOGRAPHING │
│  DATA FOR     │  │   RAW DATA     │        │  INFORMATION  │
│ IMAGE-CAPTURING│ └───────────────┘        │     DATA      │
│   DEVICE      │          │                └───────────────┘
│CHARACTERISTICS│          │                        │
└───────────────┘          ▼                      S65
   S64         │   ┌───────────────┐
               └──▶│   SMOOTHING    │──── S66
                   │  PROCESSING    │
                   └───────────────┘
                            │
                            ▼
                   ┌───────────────┐
                   │ COMPENSATION OF│
                   │ IMAGE-CAPTURING│──── S67
                   │    DEVICE      │
                   │CHARACTERISTICS │
                   └───────────────┘
                            │
                            ▼
                   ┌───────────────┐
                   │ SCENE-REFERRED │──── S68
                   │   IMAGE DATA   │
                   └───────────────┘
                            │
                            ▼
                   ┌───────────────┐  S69
                   │  OPTIMIZATION  │◀────────
                   │  PROCESSING    │
                   └───────────────┘
                            │
                            ▼
                   ┌───────────────┐
                   │ VIEWING IMAGE  │
                   │   REFERRED     │──── S70
                   │   IMAGE DATA   │
                   └───────────────┘
                            │
                            ▼
                   ┌───────────────┐
                   │  SHARPENING    │──── S71
                   │  PROCESSING    │
                   └───────────────┘
                            │
                            ▼
                   ┌───────────────┐
                   │   SHARPENED    │
                   │ VIEWING IMAGE  │──── S72
                   │   REFERRED     │
                   │   IMAGE DATA   │
                   └───────────────┘
                            │
                            ▼
                        (  END  )
```

FIG. 24

START

INPUT — S81

INPUT DATA RECOGNITION — S82

HEADER ANALYSIS — S83

PHOTOGRAPHING INFORMATION DATA — S86

COMPENSATION DATA FOR IMAGE-CAPTURING DEVICE CHARACTERISTICS — S85

SCENE-REFERRED RAW DATA — S84

SMOOTHING PROCESSING — S87

COMPENSATION OF IMAGE-CAPTURING DEVICE CHARACTERISTICS — S88

SCENE-REFERRED IMAGE DATA — S89

OPTIMIZATION PROCESSING — S90

VIEWING IMAGE REFERRED IMAGE DATA — S91

SHARPENING PROCESSING — S92

SHARPENED VIEWING IMAGE REFERRED IMAGE DATA — S93

SPECIFIC PROCESSING FOR EACH OUTPUT DEVICE — S94

OUTPUTTING FROM OUTPUT DEVICE — S95

END

# FIG. 25

EP 1 398 950 A2

CONTROLLER — 118

117

115

INPUT SECTION — 101

PROCESSING CONDITION TABLE — 103b

HEADER INFORMATION ANALYSIS SECTION — 102

COMPENSATION PROCESSOR FOR APPARATUS CHARACTERISTICS — 103a

SCENE-REFERRED IMAGE DATA GENERATOR — 104

TEMPORARY STORAGE MEMORY — 105

SMOOTHING PROCESSOR — 113

116

PHOTOGRAPHING INFORMATION DATA PROCESSOR — 106

VIEWING IMAGE REFERRED IMAGE DATA GENERATOR — 107

TEMPORARY STORAGE MEMORY — 108

MEMORY DEVICE — 110

OUTPUT DEVICE — 111

SETTING INPUT SECTION — 109

SHARPENING PROCESSOR — 114

DISPLAY DEVICE — 112

# FIG. 26

```
        ┌─────────┐
        │  START  │
        └─────────┘
             │
             ▼
     ┌─────────────────┐
     │     INPUT       │──S101
     └─────────────────┘
             │
             ▼
     ┌─────────────────┐
     │ HEADER ANALYSIS │──S102
     └─────────────────┘
             │
  ┌──────────┼──────────────────────────────┐
  ▼          ▼                               ▼
┌────────────────┐  ┌──────────────┐   ┌──────────────┐
│ COMPENSATION   │  │ SCENE-       │   │ PHOTOGRAPHING│
│ DATA FOR       │  │ REFERRED     │   │ INFORMATION  │
│ IMAGE-CAPTURING│  │ RAW DATA     │   │ DATA         │
│ DEVICE         │  └──────────────┘   └──────────────┘
│ CHARACTERISTICS│──S103                     S105
└────────────────┘        │
   S104                   ▼
        └──────►┌──────────────────┐
                │ COMPENSATION OF  │
                │ IMAGE-CAPTURING  │──S106
                │ DEVICE           │
                │ CHARACTERISTICS  │
                └──────────────────┘
                        │
                        ▼
                ┌──────────────────┐
                │ SCENE-REFERRED   │──S107
                │ IMAGE DATA       │
                └──────────────────┘
                        │
                        ▼
                ┌──────────────────┐
                │ SMOOTHING        │──S108
                │ PROCESSING       │
                └──────────────────┘
                        │
                        ▼
                ┌──────────────────┐
                │ SHARPENING       │──S109
                │ PROCESSING       │◄────────
                └──────────────────┘
                        │
                        ▼
                ┌──────────────────┐
                │ OPTIMIZATION     │──S110
                │ PROCESSING       │
                └──────────────────┘
                        │
                        ▼
                ┌──────────────────┐
                │ VIEWING IMAGE    │──S111
                │ REFERRED         │
                │ IMAGE DATA       │
                └──────────────────┘
                        │
                        ▼
                  ┌─────────┐
                  │   END   │
                  └─────────┘
```

# FIG. 27

```
                    START
                      │
                      ▼
              ┌──────────────┐
              │    INPUT      │──── S121
              └──────────────┘
                      │
                      ▼
              ┌──────────────┐
              │  INPUT DATA   │──── S122
              │ RECOGNITION   │
              └──────────────┘
                      │
                      ▼                         ┌─────────────────┐
              ┌──────────────┐─── S123          │ PHOTOGRAPHING   │
         ┌────│ HEADER ANALYSIS │──────────────▶│  INFORMATION    │
         │    └──────────────┘                  │     DATA        │
         │            │                         └─────────────────┘
┌─────────────┐       ▼                                 │  S126
│ COMPENSATION │ ┌──────────────┐                        │
│  DATA FOR    │ │ SCENE-REFERRED │──── S124             │
│IMAGE-CAPTURING│ │   RAW DATA    │                      │
│   DEVICE     │ └──────────────┘                        │
│CHARACTERISTICS│       │                                │
└─────────────┘        ▼                                 │
     │  S125    ┌──────────────┐                         │
     │          │ COMPENSATION OF│                        │
     └─────────▶│IMAGE-CAPTURING │──── S127               │
                │    DEVICE     │                         │
                │CHARACTERISTICS │                         │
                └──────────────┘                          │
                      │                                   │
                      ▼                                   │
              ┌──────────────┐                            │
              │ SCENE-REFERRED │──── S128                  │
              │  IMAGE DATA   │                            │
              └──────────────┘                            │
                      │                                   │
                      ▼                                   │
              ┌──────────────┐                            │
              │  SMOOTHING    │──── S129                   │
              │ PROCESSING    │                            │
              └──────────────┘                            │
                      │                                   │
                      ▼           S130                    │
              ┌──────────────┐                            │
              │  SHARPENING   │◀──────────────────────────┘
              │ PROCESSING    │
              └──────────────┘
                      │
                      ▼
              ┌──────────────┐
              │ OPTIMIZATION  │──── S131
              │ PROCESSING    │
              └──────────────┘
                      │
                      ▼
              ┌──────────────┐
              │ VIEWING IMAGE │──── S132
              │ REFERRED IMAGE│
              │     DATA      │
              └──────────────┘
                      │
                      ▼
              ┌──────────────┐
              │   SPECIFIC    │──── S133
              │ PROCESSING    │
              │FOR EACH OUTPUT │
              │    DEVICE     │
              └──────────────┘
                      │
                      ▼
              ┌──────────────┐
              │OUTPUTTING FROM│──── S134
              │ OUTPUT DEVICE │
              └──────────────┘
                      │
                      ▼
                    END
```

# FIG. 28

EP 1 398 950 A2

# FIG. 29

```
                    ┌──────────┐
                    │  START   │
                    └────┬─────┘
                         ↓
                  ┌────────────┐
                  │   INPUT    │── S141
                  └─────┬──────┘
                        ↓
                ┌────────────────┐
                │ HEADER ANALYSIS│── S142
                └───────┬────────┘
```

COMPENSATION DATA FOR IMAGE-CAPTURING DEVICE CHARACTERISTICS — S144

SCENE-REFERRED RAW DATA — S143

PHOTOGRAPHING INFORMATION DATA — S145

COMPENSATION OF IMAGE-CAPTURING DEVICE CHARACTERISTICS — S146

SCENE-REFERRED IMAGE DATA — S147

SMOOTHING PROCESSING — S148

SMOOTHED SCENE-REFERRED IMAGE DATA — S149

SHARPENING PROCESSING — S150

OPTIMIZATION PROCESSING — S151

VIEWING IMAGE REFERRED IMAGE DATA — S152

END

# FIG. 30

```
          ( START )
              │
              ▼
  ┌─────────────────────┐
  │       INPUT         │──── S161
  └─────────────────────┘
              │
              ▼
  ┌─────────────────────┐
  │     INPUT DATA      │──── S162
  │    RECOGNITION      │
  └─────────────────────┘
              │
              ▼
  ┌─────────────────────┐                    ┌─────────────────────┐
  │   HEADER ANALYSIS   │──── S163 ─────────▶│    PHOTOGRAPHING    │
  └─────────────────────┘                    │     INFORMATION     │
              │                              │        DATA         │
              ▼                              └─────────────────────┘
  ┌─────────────────────┐                              │  S166
  │   SCENE-REFERRED    │──── S164                      │
  │      RAW DATA       │                               │
  └─────────────────────┘                               │
              │                                         │
              ▼                                         │
  ┌─────────────────────┐                               │
  │  COMPENSATION OF    │                               │
  │  IMAGE-CAPTURING    │──── S167                       │
  │      DEVICE         │                               │
  │  CHARACTERISTICS    │                               │
  └─────────────────────┘                               │
              │                                         │
              ▼                                         │
  ┌─────────────────────┐                               │
  │   SCENE-REFERRED    │──── S168                       │
  │     IMAGE DATA      │                               │
  └─────────────────────┘                               │
              │                                         │
              ▼                                         │
  ┌─────────────────────┐                               │
  │     SMOOTHING       │──── S169                       │
  │     PROCESSING      │                               │
  └─────────────────────┘                               │
              │                                         │
              ▼                                         │
  ┌─────────────────────┐                               │
  │     SMOOTHED        │                               │
  │   SCENE-REFERRED    │──── S170                       │
  │     IMAGE DATA      │                               │
  └─────────────────────┘                               │
              │                                         │
              ▼                                         │
  ┌─────────────────────┐                               │
  │     SHARPENING      │──── S171 ◀────────────────────┘
  │     PROCESSING      │
  └─────────────────────┘
              │
              ▼
  ┌─────────────────────┐
  │    OPTIMIZATION     │──── S172
  │     PROCESSING      │
  └─────────────────────┘
              │
              ▼
  ┌─────────────────────┐
  │   VIEWING IMAGE     │──── S173
  │      REFERRED       │
  │     IMAGE DATA      │
  └─────────────────────┘
              │
              ▼
  ┌─────────────────────┐
  │     SPECIFIC        │──── S174
  │    PROCESSING       │
  │  FOR EACH OUTPUT     │
  │      DEVICE         │
  └─────────────────────┘
              │
              ▼
  ┌─────────────────────┐
  │  OUTPUTTING FROM    │──── S175
  │   OUTPUT DEVICE     │
  └─────────────────────┘
              │
              ▼
          (  END  )
```

COMPENSATION DATA FOR IMAGE-CAPTURING DEVICE CHARACTERISTICS ──── S165

# FIG. 31

CONTROLLER — 118

117

115

101
INPUT SECTION

102
HEADER INFORMATION ANALYSIS SECTION

103b
PROCESSING CONDITION TABLE

103a
COMPENSATION PROCESSOR FOR APPARATUS CHARACTERISTICS

113
SMOOTHING PROCESSOR

104
SCENE-REFERRED IMAGE DATA GENERATOR

105
TEMPORARY STORAGE MEMORY

116

106
PHOTOGRAPHING INFORMATION DATA PROCESSOR

107
VIEWING IMAGE REFERRED IMAGE DATA GENERATOR

108
TEMPORARY STORAGE MEMORY

110
MEMORY DEVICE

111
OUTPUT DEVICE

112
DISPLAY DEVICE

109
SETTING INPUT SECTION

114
SHARPENING PROCESSOR

EP 1 398 950 A2

65

FIG. 32

START

INPUT — S181

HEADER ANALYSIS — S182

COMPENSATION DATA FOR IMAGE-CAPTURING DEVICE CHARACTERISTICS

S184

SCENE-REFERRED RAW DATA — S183

PHOTOGRAPHING INFORMATION DATA

S185

COMPENSATION OF IMAGE-CAPTURING DEVICE CHARACTERISTICS — S186

SCENE-REFERRED IMAGE DATA — S187

SMOOTHING PROCESSING — S188

SMOOTHED SCENE-REFERRED IMAGE DATA — S189

OPTIMIZATION PROCESSING — S190

VIEWING IMAGE REFERRED IMAGE DATA — S191

SHARPENING PROCESSING — S192

SHARPENED VIEWING IMAGE REFERRED IMAGE DATA — S193

END

# FIG. 33

START

INPUT — S201

INPUT DATA RECOGNITION — S202

HEADER ANALYSIS — S203 → PHOTOGRAPHING INFORMATION DATA — S206

COMPENSATION DATA FOR IMAGE-CAPTURING DEVICE CHARACTERISTICS — S205

SCENE-REFERRED RAW DATA — S204

COMPENSATION OF IMAGE-CAPTURING DEVICE CHARACTERISTICS — S207

SCENE-REFERRED IMAGE DATA — S208

SMOOTHING PROCESSING — S209

SMOOTHED SCENE-REFERRED IMAGE DATA — S210

OPTIMIZATION PROCESSING — S211

VIEWING IMAGE REFERRED IMAGE DATA — S212

SHARPENING PROCESSING — S213

SHARPENED VIEWING IMAGE REFERRED IMAGE DATA — S214

SPECIFIC PROCESSING FOR EACH OUTPUT DEVICE — S215

OUTPUTTING FROM OUTPUT DEVICE — S216

END